# EUROPEAN PATENT APPLICATION

(11) **EP 4 302 996 A1**
(43) Date of publication of application: **10.01.2024**
(21) Application number: 22762873.2
(22) Date of filing: 01.02.2022
(51) Int. Cl.: B32B 27/16, B32B 27/18, B32B 27/30, B32B 27/40

(54) **LAMINATE AND METHOD FOR PRODUCING SAME**

(30) Priority: 05.03.2021 JP 2021035772; 05.03.2021 JP 2021035774
(71) Applicant: Kaneka Corporation, Osaka-shi, Osaka 530-8288 (JP)
(72) Inventor: HASEBE, Hanako, Settsu-shi, Osaka 566-0072 (JP); KOYAMA, Haruki, Settsu-shi, Osaka 566-0072 (JP); SHIMAMOTO, Yukihiro, Settsu-shi, Osaka 566-0072 (JP)
(74) Representative: Vossius & Partner Patentanwälte Rechtsanwälte mbB
(86) International application number: PCT/JP2022/003844
(87) International publication number: WO 2022/185815

(57) **Abstract**

An object is to provide a laminate having excellent moldability and including an acrylic-based resin film. Provided is a method for producing a laminate having a specific crack elongation, including: a step (A) of forming, on at least one side of a specific acrylic-based resin film, a hard coat layer that contains a urethane acrylate resin; and a step (B) of forming, on the hard coat layer obtained in the step (A), a low refractive index layer that contains, in an amount of not less than 40%, hollow fine silica particles having a particle size of less than 100 nm and that contains an acrylate-based resin.

## Description

### Technical Field

The present invention relates to: a laminate that contains an acrylic-based resin film as a base material; and a method for producing the laminate.

### Background Art

Acrylic-based resin film, obtained by processing and molding an acrylic-based resin composition containing an elastic body, has been used and employed in various applications, taking advantage of its excellent characteristics such as transparency, hardness, weather resistance, and secondary moldability. Examples of the applications of an acrylic-based resin film encompass the following applications: decoration, protection, and display as an alternative to coating, printing, etc. of automotive exterior and interior parts, the decoration and protection of the exterior of a product, such as a mobile electronic device, a personal computer, or a home appliance, and a building material, for which a film is laminated and used on a stereoscopic surface of a molded product by a method such as heat lamination, adhesion, in-mold lamination molding, insert molding, and three-dimensional lamination molding. In addition, taking advantage of the transparency and low intrinsic phase difference characteristics, the use of the acrylic-based resin film as an optical film member that constitutes various display devices, such as a liquid crystal panel and an organic EL panel is growing.

In recent years, in automobile applications, there have been developments of an information display section, such as a meter panel and a navigation system, being integrated with an automotive interior part. In a case of performing surface decoration and protection of a molded product in such an application, it is preferable, for example, for the display section having a touch panel part, to have the following functionalities: the low phase difference characteristics, surface hardness, abrasion resistance, antifouling property, antireflection property, and anti-dazzling property which are considered preferable in addition to the transparency and secondary moldability required of a conventional interior decoration film. The acrylic-based resin film is considered suitable for such an application in that the acrylic-based resin film has excellent characteristics such as transparency, secondary moldability, and low phase difference. However, the acrylic-based resin film is insufficient in functions such as surface hardness, abrasion resistance, antifouling property, antireflection property, and anti-dazzling property.

A method for forming a functional layer on a film base material by a technique such as coating is used as a method for further imparting, to the decoration and protection film including such an acrylic-based resin film, functionalities such as surface hardness, abrasion resistance, antireflection property, and anti-dazzling property. For example, Patent Literature 1 discloses, for example, a hard coat film for molding, which is characterized by providing a hard coat layer by applying and curing, on a film base material, a paint composition containing an ionizing radiation-curable resin with a pencil hardness of not less than B and an elongation rate (indicative of moldability) of not less than 100%, a fluorine-based leveling agent or a fluorine siloxane-based leveling agent, and fine inorganic oxide particles.

Patent Literature 2 discloses, for example, a transparent resin substrate constituted by a light-transmitting resin base material sheet, a base layer formed on the base material sheet; a hard coat layer formed on the base layer, an intermediate refractive index layer formed on the hard coat layer, and a low refractive index layer formed on the intermediate refractive index layer.

Patent Literature 3 discloses an antireflection film for insert molding in which four layers, that is a hard coat layer, an intermediate refractive index layer, a high refractive index layer, and a low refractive index layer, are provided in this order on a thermoplastic transparent base material film.

### Citation List

### [Patent Literature]

[Patent Literature 1]
   Japanese Patent Application Publication Tokukai No. 2016-040105
[Patent Literature 2]
   International Publication No. WO 2018/117018
[Patent Literature 3]
   Japanese Patent Application Publication Tokukai No. 2016-071307
[Patent Literature 4]
   Japanese Patent Application Publication Tokukai No. 2015-152691
[Patent Literature 5]
   Japanese Patent Application Publication Tokukai No. 2012-189978

### Summary of Invention

### Technical Problem

However, the technique disclosed in Patent Literatures 1 through 3 did not have sufficient performance in terms of simultaneous achievement of the moldability of the laminate and the functionality of the laminate, such as pencil hardness and abrasion resistance of the laminate surface, and there is room for further improvement.

Thus, an object of an embodiment of the present invention is to provide: a laminate containing an acrylic-based resin film having functionalities such as surface hardness and an antireflection property, and having excellent moldability, and a method for producing the laminate.

### Solution to Problem

As a result of conducting diligent research in order to attain the above object, the inventors of the present invention for the first time found that it is possible to obtain a laminate that has excellent moldability by using a hard coat layer with specific physical properties in a laminate constituted by an acrylic-based resin film, a hard coat layer, a low refractive index layer, etc. Thus, the inventors of the present invention accomplished an embodiment of the present invention.

Therefore, an aspect of the present invention is a method for producing a laminate, including: a hard coat layer forming step (A1) of irradiating a resin layer that has been applied to at least one side of an acrylic-based resin film and that contains a urethane acrylate resin with an active energy ray to cure the resin layer that contains said urethane acrylate resin and a low refractive index layer forming step (B1) of applying an acrylate-based resin that contains hollow fine silica particles having a particle size of less than 100 nm in an amount of not less than 40% onto the hard coat layer obtained in the step (A1) and irradiating a resultant resin layer that contains the acrylate-based resin with an active energy ray to cure the resin layer that contains said acrylate-based resin, in which the acrylic-based resin film has a tensile breaking elongation of not less than 170% at 120°C, the hard coat layer contains a urethane acrylate resin, and the laminate has a crack elongation of not less than 80% at 120°C.

In addition, an aspect of the present invention is a method for producing a laminate, including: a hard coat layer forming step (A1) of irradiating a resin layer that has been applied to at least one side of an acrylic-based resin film and that contains a urethane acrylate resin with an active energy ray to cure the resin layer that contains said urethane acrylate resin in which the acrylic-based resin film has a tensile breaking elongation of not less than 170% at 120°C, and the hard coat layer contains the urethane acrylate resin, and the laminate has a crack elongation of not less than 80% at 120°C.

Furthermore, an aspect of the present invention is a laminate containing: an acrylic-based resin film; and a hard coat layer that is laminated on at least one side of the acrylic-based resin film, in which the acrylic-based resin film has a tensile breaking elongation of not less than 170% at 120°C, the hard coat layer contains a urethane acrylate resin, and the laminate has a pencil hardness of not less than H, and a crack elongation of not less than 80% at 120°C.

### Advantageous Effects of Invention

With an aspect of the present invention, it is possible to provide: a laminate containing an acrylic-based resin film having functionalities such as surface hardness and an antireflection property and excellent moldability; and a method for producing the laminate.

### Brief Description of Drawings

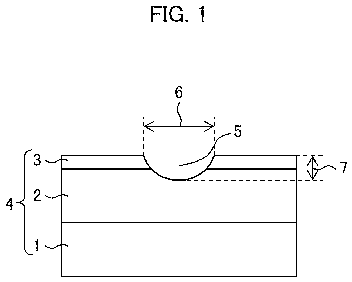

Fig. 1 is a diagram illustrating a TEM image, after a tensile test, of a laminate in accordance with an embodiment of the present invention, in which an acrylic-based resin film, a hard coat layer, and a low refractive index layer are laminated.

### Description of Embodiments

The following description will discuss an embodiment of the present invention in detail. Any numerical range expressed as "A to B" in the present specification means "not less than A and not more than B", unless otherwise stated. All the documents cited in the present specification are incorporated herein by reference. In addition, in the present specification, a structural unit derived from "X monomer" will be referred to as "X unit".

### [1. Embodiment 1]

### [1-1. Overview of Embodiment 1 of present invention]

A method for producing a laminate in accordance with Embodiment 1 of the present invention (hereinafter referred to as "first laminate production method") includes: a hard coat layer forming step (A1) of irradiating a resin layer that has been applied to at least one side of an acrylic-based resin film and that contains a urethane acrylate resin with an active energy ray to cure the resin layer that contains said urethane acrylate resin and a low refractive index layer forming step (B1) of applying an acrylate-based resin that contains hollow fine silica particles having a particle size of less than 100 nm in an amount of not less than 40% onto the hard coat layer obtained in the step (A1) and irradiating a resultant resin layer that contains the acrylate-based resin with an active energy ray to cure the resin layer that contains said acrylate-based resin, wherein the acrylic-based resin film has a tensile breaking elongation of not less than 170% at 120°C, the hard coat layer contains a urethane acrylate resin, and the laminate has a crack elongation of not less than 80% at 120°C.

The laminate obtained by the above first laminate production method has surface hardness and can be said to have excellent surface hardness. In the present specification, the surface hardness of the laminate is evaluated by "pencil hardness" of the laminate. A method for measuring the "pencil hardness" of the laminate will be described later in detail. In addition, the laminate obtained by the first laminate production method has an antireflection property and can be said to have an excellent antireflection property. In the present specification, the antireflection property of the laminate is evaluated by "luminous reflectance" of the laminate. A method for measuring the "luminous reflectance" of the laminate will be described later in detail. The laminate obtained by the first laminate production method has excellent moldability. In the present specification, the moldability of the laminate is evaluated by "crack elongation at 120°C" of the laminate. A method for measuring the "crack elongation at 120°C" of the laminate will be described later in detail.

Furthermore, the laminate obtained by the above first laminate production method has excellent abrasion resistance. In a case where the laminate obtained by the above first laminate production method contains particles in the hard coat layer as described later, the laminate has an anti-dazzling property and can be said to have an excellent anti-dazzling property.

In another aspect of Embodiment 1 of the present invention, a method for producing a laminate includes: a hard coat layer forming step (A1) of irradiating a resin layer that has been applied to at least one side of an acrylic-based resin film and that contains a urethane acrylate resin with an active energy ray to cure the resin layer that contains said urethane acrylate resin wherein the acrylic-based resin film has a tensile breaking elongation of not less than 170% at 120° C, and the hard coat layer contains the urethane acrylate resin, and the laminate has a crack elongation of not less than 80% at 120°C. This production method is also the first laminate production method.

A laminate in accordance with Embodiment 1 of the present invention (hereinafter referred to as "first laminate") includes: an acrylic-based resin film; and a hard coat layer that is laminated on at least one side of the acrylic-based resin film, in which the acrylic-based resin film has a tensile breaking elongation of not less than 170% at 120°C, the hard coat layer contains a urethane acrylate resin, and the laminate has a pencil hardness of not less than H, and a crack elongation of not less than 80% at 120°C.

In the present specification, the laminate obtained by the method for producing a laminate in accordance with Embodiment 1 and the laminate in accordance with Embodiment 1 may both be referred to as "first laminate".

In recent years, the field of on-vehicle display has undergone an increase in size and curvature. As a film for such an on-vehicle display, an antireflection film with a higher molding rate in comparison with conventional molding rates is demanded.

However, the techniques disclosed in Patent Literatures 1 and 2 have low surface hardness, and a defect such as a scratch in a display section may occur when, for example, used for surface protection of a display device with a touch panel function. In addition, it was found that, in the techniques disclosed in Patent Literatures 2 and 3, for example, during the lamination of a decoration and protection film onto a stereoscopic surface of a large molded product such as an automotive interior part in which an information display section such as that described above is integrated, a defect such as a stretching part of a film undergoing partial whitening, cracking, peeling off from the surface of the molded product, and the functional layer undergoing cracking and peeling may occur as the film is stretched and shaped along the shape of the molded product. That is, it was found that the conventional technique has been having the following problems: (1) a problem of moldability of the laminate, (2) an antireflection problem of the laminate including a low refractive index layer, and (3) a problem of whitening of the laminate. For this reason, a decoration and protection film which sufficiently satisfies the requirements when the film is used in the above applications has not been found, so that there is room for further improvement.

Therefore, while mainly conducting research on improving the moldability of the laminate, the inventors of the present invention for the first time found that, by causing the hard coat layer and the refractive index adjustment layer etc. in the laminate to have specific physical properties, it is possible to obtain a laminate, peeling off and cracking of the functional layer of which do not occur even when the laminate is laminated on a stereoscopic surface of a large molded product and which therefore has excellent moldability. In addition, the inventors of the present invention found that the laminate obtained by the above method, in addition to having moldability, can solve an antireflection problem and a problem of whitening of the stretching part.

In the course of the above study, the inventors of the present invention found the following regarding whitening of the stretching part: One of the causes of whitening is that, a fine microcrack that does not lead to a visually distinguishable size occurs on the surface of the low refractive index layer located on the outermost surface of the laminate, during stretching. In light of the fact that the cause of whitening is a microcrack in the low refractive index layer, it is surprising that, by exercising ingenuity on a hard coat layer located under the low refractive index layer, it was possible to improve not only the moldability of the laminate but also the whitening of the stretching part resulting from microcracks in the low refractive index layer. There has not been any previous report on such a laminate which is constituted by an acrylic-based resin film and a hard coat layer, or an acrylic-based resin film, a hard coat layer, and a low refractive index layer, which has both various functionalities and excellent moldability. Therefore, the first laminate production method is an extremely excellent technique.

The inventors of the present invention infer, as a mechanism of suppression of whitening, that by the adjustment of the composition of the hard coat layer and the curing condition with an active energy ray, etc., the hard coat layer before the formation of the low refractive index layer has a residual functional group that is not cured, and a crosslinking density of the hard coat layer is lower than that in a fully cured state, so that the adhesiveness between the hard coat layer and the low refractive index layer is increased, and consequently whitening that is due to the shape of a microcrack in the low refractive index layer is suppressed. However, the present invention is not limited to such an inference. The following description will discuss the first laminate production method.

In Embodiment 1, the "laminate" is intended to mean a product (laminated product) containing a hard coat layer, and a product (laminated product) containing no hard coat layer is described as "laminated film". More specifically, in Embodiment 1, for example, a "laminate" is intended to mean (1) a laminated product constituted by an acrylic-based resin film and a hard coat layer or (2) a laminated product constituted by an acrylic-based resin film, a hard coat layer, and a low refractive index layer, and a "laminated film" is intended to mean (3) a laminated product constituted by an acrylic-based resin film and a low refractive index layer.

In some cases of a curable resin composition which constitutes the hard coat layer in the first laminate, the composition may be required to have not only improved surface hardness of the hard coat layer but also high crack elongation not to cause breaking or remarkable whitening with stretching under secondary molding into the shape of the molded product. However, in general, the cured product of the curable resin composition shows surface hardness and abrasion resistance by highly being crosslinked and/or containing a filler with a high degree of hardness, so as to suppress the deformation of the surface of the cured product with respect to external stress. Conventionally, therefore, surface hardness and abrasion resistance are opposing properties against deformability and stretchability, and these are not easy to attain simultaneously.

Examples of a method for providing a curable resin for such a hard coat with high stretchability during secondary molding while maintaining hardness encompass the following methods.

(1) The glass transition temperature of a curable resin is designed between room temperature and a secondary molding temperature, that is, the curable resin is designed to be deformable at the secondary molding temperature while the curable resin is rigid at room temperature. In this way, a high degree of surface hardness is exhibited at room temperature, and a high degree of stretchability is exhibited during secondary molding.
(2) By using curable resins which have a plurality of different structures in combination, the crosslinked structure of the curable resins after the curing (i.e., cured product) is designed to be not uniform, but to be microstructurally non-uniform in such a manner as to have a part with a high crosslinking density and a part with a low crosslinking density. This makes it possible to express a high degree of surface hardness due to the part with the high crosslinking density in the cured product and, during the secondary molding, a part with the low crosslinking density is deformed to exhibit a high degree of stretchability.
(3) The curable resin is blended with a resin component that is crosslinked to a low degree or that is not crosslinked and/or a resin component having low elastic modulus. This leads to the formation of a structure in which, after the curing of the curable resin, a fine region (domain) with a low or zero degree of crosslinking and/or a low elastic modulus is dispersed in a curable resin phase with a high crosslinking density. This imparts deformability and stretchability while maintaining the surface hardness of the curable resin to some extent. Examples of such a resin component with a low or zero degree of crosslinking or a low elastic modulus encompass: (a) thermoplastic resins such as a methacrylic resin, a styrene acrylonitrile resin, an aliphatic or aromatic polycarbonate resin, a polyester resin, a phenoxy resin, and a cellulose acylate resin; (b) crosslinked or non-crosslinked soft resins such as an acrylic rubber, a silicone rubber, a hydrogenated styrene butadiene rubber, an acrylonitrile butadiene rubber, and an olefin rubber that may have a reactive functional group as necessary; and (c) core-shell type rubber particles in which a thermoplastic resin is graft polymerized on the crosslinked rubber particle surface.
These methods may be used alone or in combination as appropriate with respect to the hard coat layer in the first laminate, using, for example, techniques (1) to (3).

### [1-2. First laminate production method]

The first laminate production method includes the following steps (A1) and (B1).
- A step (A1): a hard coat layer forming step (A1) of irradiating a resin layer that has been applied to at least one side of an acrylic-based resin film and that contains a urethane acrylate resin with an active energy ray to cure the resin layer that contains said urethane acrylate resin.
- A step (B1): a low refractive index layer forming step (B1) of applying an acrylate-based resin that contains hollow fine silica particles having a particle size of less than 100 nm in an amount of not less than 40% onto the hard coat layer obtained in the step (A1) and irradiating a resultant resin layer that contains the acrylate-based resin with an active energy ray to cure the resin layer that contains said acrylate-based resin.

In the first laminate production method, the acrylic-based resin film has a tensile breaking elongation of not less than 170% at 120°C, the hard coat layer contains the urethane acrylate resin, and the laminate has a crack elongation of not less than 80% at 120°C.

In the step (A1), a resin layer containing urethane acrylate resin applied to at least one side of an acrylic-based resin film is irradiated, with an active energy ray, to cure the resin layer containing the urethane acrylate resin, so as to form a hard coat layer. In the step (B1), the resin layer containing the acrylate-based resin is, in a solution state, applied onto the hard coat layer that was formed in the step (A1) and containing the cured urethane acrylate resin, and is dried. The resin layer is then irradiated with an active energy ray so as to be cured to form a low refractive index layer.

In order to have a high degree of surface hardness, together with a high degree of crack elongation at 120°C and a low whitening characteristic of the stretching part of the laminate obtained by the first laminate production method, it is preferable that the hard coat layer and the low refractive index layer are tightly adhering to each other. In general, a low refractive index layer often contains a rigid filler such as hollow silica, and is lower in crack elongation than the hard coat layer in many cases. Therefore, there is a possibility that microcracks may occur which cause whitening at a lower stretching ratio than the crack elongation of the hard coat layer alone. At this time, if the adhesion between the hard coat layer and the low refractive index layer is tight, the opening width of the microcrack that is generated in the low refractive index layer by stretching becomes very fine, for example, such as not more than 1 µm width, and whitening is less likely to be formed by stretching.

In order to improve the adhesiveness between the hard coat layer and the low refractive index layer, for example, the following (a) and (b) are preferable: (a) When the resin layer which will become a low refractive index layer is applied in the solution state in the step (B1), let the applied resin layer (low refractive index layer) to be impregnated into the surface of the hard coat layer in the degree that the interface between the two layers in the final form does not become too unclear so as to impair the antireflection property; and (b) When the resin layer (low refractive index layer) after the coating is cured by the irradiation with an active energy ray, the acrylate group remaining after the curing of the hard coat layer reacts with the resin layer (low refractive index layer) to be cured, and a chemical bond is formed at the interface between the hard coat layer and the low refractive index layer to be ultimately obtained.

For the above mentioned, in the step (A1) for example, it is preferable that the resin layer containing the urethane acrylate resin that forms the hard coat layer is not completely cured, that the crosslinking density is slightly low and that the unreacted acrylate group is caused to partially remain. Furthermore, in the step (B1), when the resin layer containing the acrylate-based resin that forms the low refractive index layer is coated in a solution state and optionally dried in order to impregnate the surface of the hard coat layer with the resin layer containing the acrylate-based resin to a certain extent, it is preferable to, for example, (a) adjust the application condition and the solvent drying condition as appropriate and/or (b) use a certain amount of a solvent with a high boiling point which is slow to dry as the solvent used in the solution.

In the first laminate production method, the tensile breaking elongation of the acrylic-based resin film in the laminate at 120°C is not less than 170%, preferably not less than 180%, and more preferably not less than 190%. In a case where the tensile breaking elongation of the acrylic-based resin film at 120°C is not less than 170%, there is an advantage of excellent shape followability in molding. In addition, in the first laminate production method, the upper limit of the tensile breaking elongation is not particularly limited, but is, for example, not more than 350% and preferably not more than 300%, from the viewpoint of improving the tensile strength and elastic modulus. In the present specification, the "tensile breaking elongation at 120°C" is intended to mean an elongation at which a film breaks during a tensile test conducted in a thermoregulated bath at 120°C. The tensile breaking elongation of the acrylic-based resin film at 120°C is measured by the method disclosed in Examples.

In the first laminate production method, the crack elongation of the laminate at 120°C is, for example, not less than 80%, preferably not less than 100%, more preferably not less than 110%, and particularly preferably not less than 120%. In a case where the crack elongation of the laminate at 120°C is not less than 80%, there is an advantage of achieving excellent shape followability during molding and suppressed whitening of the part that is stretched with molding. In addition, in the first laminate production method, the upper limit of the crack elongation is not particularly limited, but, from the viewpoint of improving the surface hardness and wear resistance, the upper limit is, for example, not more than 200% and preferably not more than 180%. In the present specification, the term "crack elongation of a laminate at 120°C" is intended to mean an elongation at which a crack occurs in the coating layer by conducting a tensile test of the laminate in a thermoregulated bath at 120°C. In the present specification, the crack elongation of the laminate at 120°C is measured by the method described in Examples.

When the first laminate is constituted by an acrylic-based resin film and a hard coat layer and contains no low refractive index layer, the crack elongation of the laminate at 120°C is preferably not less than 80%, more preferably not less than 100%, more preferably not less than 120%, and most preferably not less than 130%. In the present specification, the term "crack elongation of a laminate at 120°C" is, unless otherwise stated, intended to mean a "crack elongation, at 120°C, of a laminate which is constituted by an acrylic-based resin film, a hard coat layer, and a low refractive index layer".

### (Acrylic-based resin film)

The acrylic-based resin film is preferably constituted by an acrylic-based resin composition that contains an acrylic resin and graft copolymer particles containing a rubber component.

The acrylic-based resin film preferably contains graft copolymer particles (A) having an average particle size of 20 nm to 200 nm as the graft copolymer particles containing a rubber component, and may contain, in addition to the graft copolymer particles (A), graft copolymer particles (B) having an average particle size larger than that of the graft copolymer particles (A). Specifically, in the acrylic-based resin film in accordance with Embodiment 1, it is preferable that the graft copolymer particles (A) are dispersed or the graft copolymer particles (A) and the graft copolymer particles (B) are dispersed in a matrix containing an acrylic resin, or an acrylic resin and other components.

### <Acrylic Resin>

Conventionally known acrylic resins can be used as an acrylic resin for use in the acrylic-based resin film. For example, when the total amount of the acrylic resin is regarded as 100% by mass, it is preferable from the viewpoint of hardness and moldability that the acrylic resin contains 20% by mass to 100% by mass of a thermoplastic acrylic polymer which is constituted by 50% by mass to 100% by mass of a methyl methacrylate unit and 0% by mass to 50% by mass of other structural unit. It should be noted that the total amount of the methyl methacrylate unit and the other structural unit in the thermoplastic acrylic polymer is 100% by mass.

Examples of the other structural unit encompass structural units derived from acrylic acid, acrylic acid derivatives, methacrylic acid, methacrylic acid derivatives, aromatic vinyl derivatives, and vinyl cyanide derivatives. The other structural unit contained in the acrylic resin may be of one type or a combination of two or more types.

Examples of the acrylic acid derivatives encompass acrylic esters such as methyl acrylate, ethyl acrylate, n-propyl acrylate, n-butyl acrylate, isobutyl acrylate, cyclohexyl acrylate, 2-hydroxyethyl acrylate, 2-phenoxyethyl acrylate, benzyl acrylate, and glycidyl acrylate.

Examples of the methacrylic acid derivatives encompass methacrylic esters such as ethyl methacrylate, n-propyl methacrylate, n-butyl methacrylate, isobutyl methacrylate, phenyl methacrylate, benzyl methacrylate, cyclohexyl methacrylate, 2-phenoxyethyl methacrylate, and isobornyl methacrylate.

Examples of the aromatic vinyl derivatives encompass styrene, vinyltoluene, and α-methylstyrene.

Examples of the vinyl cyanide derivative encompass acrylonitrile and methacrylonitrile.

To improve the heat resistance, rigidity, surface hardness, etc. of the acrylic resin, the structural unit having a specific structure may be introduced into the acrylic resin by copolymerization, functional group decoration or modification, etc. Examples of such a specific structure include: a glutarimide structure as disclosed in Japanese Patent Application Publication No. 62-89705, Japanese Patent Application Publication No. 02-178310, and WO 2005/54311; a lactone ring structure as disclosed in Japanese Patent Application Publication No. 2004-168882 and Japanese Patent Application Publication No. 2006-171464; a glutaric anhydride structure obtained by thermal cyclocondensation of a (meth)acrylic acid unit as disclosed in Japanese Patent Application Publication No. 2004-307834; a maleic anhydride structure as disclosed in Japanese Patent Application Publication No. 5-119217; and an N-substituted maleimide structure and an unsubstituted maleimide structure as disclosed in WO2009/84541. For example, the introduction of these structures into the acrylic resin makes the molecular chain rigid. As a result, the effect of improving the heat resistance, improving the surface hardness, reducing the heat shrinkage, improving the chemical resistance etc. can be expected.

The method for producing the acrylic resin is not particularly limited. Examples of the method encompass polymerization methods such as known suspension polymerization, bulk polymerization, solution polymerization, and emulsion polymerization. It is also possible to apply any of known radical polymerization, living radical polymerization, anionic polymerization, and cationic polymerization.

It is preferable that the acrylic-based resin film is obtained by molding an acrylic resin composition that contains a thermoplastic acrylic polymer and polymer particles containing a crosslinked elastomer.

The crosslinked elastomer is a rubber component. Therefore, the polymer particles can be referred to as polymer particles containing a rubber component. The polymer particles preferably have a core-shell structure (multilayer structure) including a crosslinked elastomer which is a rubber component and a graft polymer layer which is located closer to the surface layer than is the crosslinked elastomer. In some cases, polymer particles having a core-shell structure including a crosslinked elastomer and a graft polymer layer are referred to as graft copolymer particles.

It is preferable that the crosslinked elastomer contains not less than 50% by mass of an acrylic ester unit in 100% by mass of the crosslinked elastomer. The crosslinked elastomer is preferably a crosslinked elastomer (A1) and/or a crosslinked elastomer (B1) described later.

The polymer particles are preferably graft copolymer particles that contain the crosslinked elastomer and a graft polymer layer which is located closer to a surface layer than is the crosslinked elastomer. The graft copolymer particles are preferably graft copolymer particles (A) and/or graft copolymer particles (B) described later.

### <Graft copolymer containing rubber component>

As previously discussed, the acrylic-based resin film preferably contains the graft copolymer particles (A) as rubber component-containing graft copolymer particles and may also contain the graft copolymer particles (B) in addition to the graft copolymer particles (A) as needed.

The graft copolymer particles (A) preferably have a core-shell structure (multilayer structure) including a crosslinked elastomer (A1) which is a rubber component and a graft polymer layer (A2) which is located closer to a surface layer than is the crosslinked elastomer (A1).

The crosslinked elastomer (A1) may be a known crosslinked elastomer. Preferably, the crosslinked elastomer (A1) is an acrylic ester-based crosslinked elastomer (crosslinked elastomer constituted by a polymer containing an acrylic ester as a main component).

The particles of the acrylic ester-based crosslinked elastomer (A1) may have a concentric spherical, multilayer structure that includes a rigid or semi-rigid crosslinked resin layer inside the crosslinked elastomer layer. Examples of such a rigid or semi-rigid crosslinked resin layer encompass: a rigid crosslinked methacrylic resin particles as disclosed in Japanese Examined Patent Publication No. 55-27576; semi-rigid crosslinked particles constituted by methyl methacrylate-acrylic ester-styrene as disclosed in Japanese Patent Application Publication No. 4-270751; and crosslinked rubber particles with a high degree of crosslinking. Improvement in transparency, color tone, etc. may be expected by including such a rigid or semi-rigid crosslinked resin layer.

The graft copolymer particles (A) preferably have a core-shell structure that is formed by graft polymerization of a monomer mixture that forms the graft polymer layer (A2) in the presence of particles of the aforementioned acrylic ester-based crosslinked elastomer (A1).

The average particle size of the graft copolymer particles (A) is preferably 20 nm to 200 nm, more preferably 50 nm to 150 nm, and particularly preferably 50 nm to 120 nm.

In a case where the average particle size of the graft copolymer particles (A) is excessively small, there is a tendency that the impact resistance and bending crack resistance of the acrylic-based resin film decrease. In a case where the average particle size of the graft copolymer particles (A) is excessively large, there is a tendency that the transparency of the acrylic-based resin film deteriorates and a tendency that whitening due to bending processing is more likely to occur.

The acrylic ester-based crosslinked elastomer (A1) can preferably be crosslinked elastomer particles obtained by polymerizing a monomer mixture (a-1) containing: (a) acrylic ester; (b) a polyfunctional monomer which is copolymerizable with the acrylic ester and which has two or more non-conjugated double bond per molecule; and (c) another vinyl-based monomer which is optionally copolymerizable with the acrylic ester.

The acrylic ester, other vinyl-based monomer, and the polyfunctional monomer may be polymerized in a single step after mixing all of them. Alternatively, for the purpose of adjusting the toughness, whitening resistance, etc. of the acrylic-based resin film, the acrylic ester, the other vinyl-based monomer, and the polyfunctional monomer may be, as appropriate, polymerized in multiple steps of two or more, while changing the composition of the acrylic ester, the other vinyl-based monomer, and the polyfunctional monomer, or maintaining the identical composition.

The acrylic ester is preferably an aliphatic ester of acrylic acid, more preferably an alkyl acrylate, and particularly preferably an alkyl acrylate with an alkyl group having 1 to 22 carbon atoms, in terms of, for example, excellent polymerizability, low cost, and yielding of a polymer having a low Tg.

Specific examples of a preferable alkyl acrylate encompass methyl acrylate, ethyl acrylate, propyl acrylate, n-butyl acrylate, isobutyl acrylate, 2-ethylhexyl acrylate, n-octyl acrylate, isobornyl acrylate, cyclohexyl acrylate, dodecyl acrylate, stearyl acrylate, heptadecyl acrylate, and octadecyl acrylate. These may be used alone, or two or more thereof may be used in combination.

The amount of acrylic ester is preferably not less than 50% by mass, more preferably not less than 70% by mass, and most preferably not less than 80% by mass with respect to 100% by mass of the monomer mixture (a-1). When the amount of acrylic ester is not less than 50% by mass, the acrylic-based resin film has favorable impact resistance and tensile elongation at break, and cracks are less likely to occur during secondary molding.

Examples of the other vinyl-based monomer encompass: methacrylic esters such as methyl methacrylate, ethyl methacrylate, propyl methacrylate, n-butyl methacrylate, isobutyl methacrylate, t-butyl methacrylate, phenyl methacrylate, benzyl methacrylate, cyclohexyl methacrylate, phenoxyethyl methacrylate, isobornyl methacrylate, and dicyclopentenyl methacrylate; vinyl cyanide derivatives such as acrylonitrile and methacrylonitrile; aromatic vinyl derivatives such as styrene, vinyltoluene, and α-methyl styrene; acrylic acid; acrylic acid derivatives such as β-hydroxyethyl acrylate, phenoxyethyl acrylate, benzyl acrylate, and glycidyl acrylate; methacrylic acid; methacrylic acid derivatives such as β-hydroxyethyl methacrylate, dimethylaminoethyl methacrylate, and glycidyl methacrylate; maleic anhydride; and maleic acid derivatives such as N-alkylmaleimide and N-phenylmaleimide. These may be used alone, or two or more thereof may be used in combination. As the other vinyl-based monomer, among these, at least one monomer selected from the group consisting of methacrylic esters and aromatic vinyl derivatives are particularly preferable from the viewpoint of weather resistance and transparency.

The amount of the other vinyl-based monomer is preferably not less than 0% by mass and not more than 49.9% by mass, more preferably not less than 0% by mass and not more than 30% by mass, and most preferably not more than 0% by mass and not more than 20% by mass with respect to 100% by mass of the monomer mixture (a-1). When the amount of the other vinyl-based monomer is more than 49.9% by mass, the impact resistance of the acrylic-based resin film is likely to decrease, and the elongation at tensile break decreases and cracks may easily occur during secondary molding.

Examples of a suitable polyfunctional monomer encompass a monomer that is usually used as a crosslinking agent and/or a graft crosslink agent. Examples of the polyfunctional monomer encompass allyl methacrylate, allyl acrylate, triallyl cyanurate, triallyl isocyanurate, diallyl phthalate, diallyl maleate, divinyl adipate, divinylbenzene, ethylene glycol dimethacrylate, propylene glycol dimethacrylate, diethylene glycol dimethacrylate, triethylene glycol dimethacrylate, trimethylolpropane trimethacrylate, polyethylene glycol dimethacrylate, and dipropylene glycol dimethacrylate. These polyfunctional monomers may be used alone, or two or more thereof may be used in combination.

As these polyfunctional monomers, one with a function as a graft crosslink agent is more preferable. This is because such a polyfunctional monomer increases the number of the polymer grafted to the crosslinked elastomer (A1) in the graft polymer layer (A2) (which is described later), resulting in favorable dispersibility of the graft copolymer (A) into the acrylic resin, improving the crack resistance against tensile and bending deformation and reducing stress whitening. As a polyfunctional monomer with such a function of the graft crosslink agent, those having an allyl group such as allyl methacrylate, allyl acrylate, triallyl cyanurate, triallyl isocyanurate, diallyl phthalate, diallyl maleate, etc. are preferable, and allyl methacrylate, allyl acrylate, etc. are particularly preferable.

The amount of the polyfunctional monomer is preferably 0.1% by mass to 10% by mass and more preferably 1.0% by mass to 4% by mass, with respect to 100% by mass of the monomer mixture (a-1). The amount of the polyfunctional monomer to be mixed being within the above range is preferable from the viewpoint of the bending cracking resistance and bending whitening resistance of the acrylic-based resin film and the flowability of the resin during molding.

In addition, in the acrylic ester-based crosslinked elastomer (A1), the amount of the polyfunctional monomer may be changed between the inside and the vicinity of the surface of the crosslinked elastomer (A1) for the purpose of increasing the graft coverage efficiency of the graft polymer layer (A2) described later. Specifically, when the content of the polyfunctional monomer with a function as a graft crosslink agent is greater in the vicinity of the surface of the crosslinked elastomer (A1) than the content inside the crosslinked elastomer (A1), it is possible to improve the coverage of the graft copolymer particles (A) with a graft polymer layer, leading to better dispersibility to the acrylic resin or to suppress the decrease in crack resistance due to the peeling of the interface between the graft copolymer particles (A) and the acrylic resin, as disclosed in the publication of Patent No. 1460364, the publication of Patent No. 1786959, etc. Furthermore, since sufficient coverage can be obtained with a relatively small amount of the graft polymer layer (A2), it is possible to reduce the amount of the graft copolymer particles (A) to be mixed for introducing a given amount of the crosslinked elastomer (A1) into the acrylic-based resin composition, and therefore a decrease in melt viscosity of the acrylic-based resin composition, improvement in melting processability, an increase in film processing accuracy, surface hardness of the acrylic-based resin film etc. can be expected.

A chain transfer agent may be added to the monomer mixture (a-1) for the purpose of controlling the molecular weight and crosslinking density of the acrylic ester-based crosslinked elastomer (A1) and controlling thermal stability etc. by decreasing the double bond terminal of the polymer caused by a disproportionate termination reaction during polymerization. The chain transfer agent may be selected from those usually used for radical polymerization. Preferable examples of the chain transfer agent include: monofunctional or polyfunctional mercaptan compounds having 2 to 20 carbon atoms, such as n-octyl mercaptan, n-dodecylmercaptan, and t-dodecylmercaptan; mercapto acids; thiophenol; carbon tetrachloride; or a mixture thereof. The amount of the chain transfer agent to be added is preferably 0 parts by mass to 1.0 parts by mass and more preferably 0 parts by mass to 0.2 parts by mass, with respect to the total amount of 100 parts by mass of the monomer mixture (a-1).

The particles of the crosslinked elastomer (A1) may be a single layer constituted by the aforementioned acrylic ester-based crosslinked elastomer (A1). Alternatively, the particles of the crosslinked elastomer (A1) may have a multilayer structure that contains two or more layers constituted by the aforementioned acrylic ester-based crosslinked elastomer (A1). Alternatively, the particles of the crosslinked elastomer (A1) may be multilayer particles having a rigid or semi-rigid crosslinked resin layer at least one layer of which contains the acrylic ester-based crosslinked elastomer (A1).

Examples of the monomer constituting the rigid or semi-rigid crosslinked resin layer include: methacrylic esters such as methyl methacrylate, ethyl methacrylate, butyl methacrylate, benzyl methacrylate, and phenoxyethyl methacrylate; alkyl acrylates such as methyl acrylate, ethyl acrylate, propyl acrylate, n-butyl acrylate, isobutyl acrylate, t-butyl acrylate, 2-ethylhexyl acrylate, and n-octyl acrylate; aromatic vinyl derivatives such as styrene and α-methylstyrene; vinyl cyanide derivatives such as acrylonitrile; maleic acid derivatives such as maleic anhydride and maleimides; and polyfunctional monomers having two or more non-conjugated double bonds per molecule.

Among these, at least one selected from the group consisting of methyl methacrylate, butyl methacrylate, butyl acrylate, ethyl acrylate, styrene, acrylonitrile, and the like is particularly preferable. The polyfunctional monomer may be similar to one used for polymerization of the acrylic ester-based crosslinked elastomer (A1) layer. Furthermore, when the rigid or semi-rigid crosslinked resin layer is polymerized, a chain transfer agent may be added in addition to these monomers for the purpose of controlling crosslinking density and controlling thermal stability etc. by decreasing the double bond terminal of the polymer. The chain transfer agent may be similar to one used for polymerization of the acrylic ester-based crosslinked elastomer (A1) layer. The amount of the chain transfer agent to be added is preferably 0 parts by mass to 2 parts by mass and more preferably 0 parts by mass to 0.5 parts by mass, with respect to the total amount of 100 parts by mass of the rigid or semi-rigid crosslinked resin layer.

In a case where the graft copolymer particles (A) have a two-layer structure including the crosslinked elastomer particles (A1) which are core particles and the graft polymer layer (A2), the graft copolymer particles (A) can typically be obtained as follows: In the presence of the crosslinked elastomer particles (A1), a monomer mixture (a-2) containing 50% by mass to 100% by mass of methacrylic ester and 0% by mass to 50% by mass of other vinyl-based monomer copolymerizable with methacrylic ester (given that the total amount of the methacrylic ester and the other vinyl-based monomer is 100% by mass), to form the graft polymer layer (A2).

The amount of methacrylic ester in 100% by mass of the monomer mixture (a-2) is preferably not less than 50% by mass, more preferably not less than 70% by mass, and even more preferably not less than 90% by mass from the viewpoint of (a) securing the compatibility with acrylic resin which is a matrix and (b) preventing a decrease in toughness of the coating film derived from impregnation etc. of an acrylic-based resin film with the solvent during coating and preventing whitening and cracking due to stretching during molding.

The graft polymer layer (A2) is preferably obtained by graft copolymerization of 10 parts by mass to 95 parts by mass of the monomer mixture (a-2) containing 70% by mass to 99% by mass of alkyl methacrylate, 0.5% by mass to 30% by mass of alkyl acrylate having 2 or more carbon atoms in an alkyl group, and 0% by mass to 19% by mass of other vinyl-based monomer (given that the total amount of the alkyl methacrylate, the alkyl acrylate, and the other vinyl-based monomer is 100% by mass) in at least one step in the presence of the crosslinked elastomer particles (A1) of 5 parts by mass to 90 parts by mass of the crosslinked elastomer particles (A1). Note that the total amount of the crosslinked elastomer particles (A1) and the monomer mixture (a-2) shall be 100 parts by mass.

Examples of the methacrylic ester in the graft polymer layer (A2) encompass alkyl methacrylates such as methyl methacrylate, ethyl methacrylate, propyl methacrylate, n-butyl methacrylate, isobutyl methacrylate, t-butyl methacrylate, hexyl methacrylate, cyclohexyl methacrylate, 2-ethylhexyl methacrylate, octyl methacrylate, phenyl methacrylate, and benzyl methacrylate. Among these, alkyl methacrylate having 1 to 4 carbon atoms in an alkyl group is preferable.

In the graft polymer layer (A2), the other vinyl-based monomer may be an alkyl acrylate having 2 or more carbon atoms in an alkyl group. The alkyl acrylate having 2 or more carbon atoms in an alkyl group is preferably at least one selected from the group consisting of ethyl acrylate, propyl acrylate, n-butyl acrylate, isobutyl acrylate, t-butyl acrylate, hexyl acrylate, cyclohexyl acrylate, octyl acrylate, dodecyl acrylate, stearyl acrylate etc., more preferably at least one selected from the group consisting of ethyl acrylate, n-butyl acrylate, isobutyl acrylate, and t-butyl acrylate, and particularly preferably n-butyl acrylate.

Examples of the other vinyl-based monomer usable in the monomer mixture (a-2) include: aromatic vinyl derivatives such as styrene and its nuclear substituents; vinyl cyanide derivatives such as acrylonitrile; methacrylic acid and its derivatives; acrylic acid and its derivatives; N-substituted maleimides; maleic anhydride; methacrylamide, acrylamide etc.

The monomer mixture (a-2) preferably contains a reactive ultraviolet absorber as the other vinyl-based monomer. In other words, the graft polymer layer (A2) preferably contains a structural unit derived from a reactive ultraviolet absorber. When the monomer mixture (a-2) contains a reactive ultraviolet absorber, it is easy to obtain an acrylic-based resin film with favorable weather resistance and chemical resistance.

The reactive ultraviolet absorber may be a known reactive ultraviolet absorber and is not particularly limited. In view of the molding processability and weather resistance of the acrylic-based resin film, the compound represented by the following general formula (1) is preferable as the reactive ultraviolet absorber. 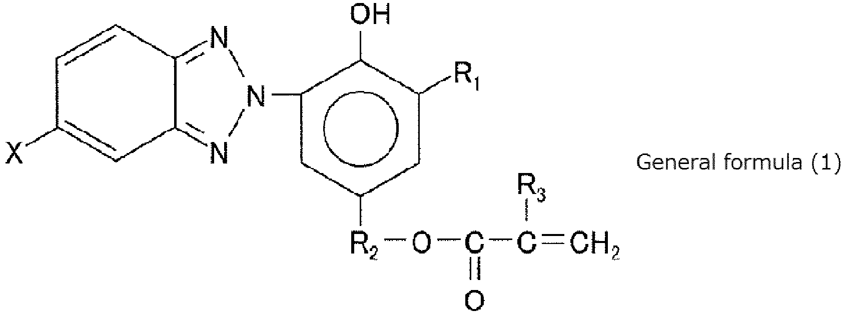 (in general formula (1), X is a hydrogen atom or halogen atom, R₁ is a hydrogen atom, a methyl group, or a t-alkyl group having not less than 4 and not more than 6 carbon atoms, R₂ is a linear or a branched-chain alkylene group having not less than 2 and not more than 10 carbon atoms, and R₃ is a hydrogen atom or methyl group.)

Specific examples of the reactive ultraviolet absorber represented by the general formula (1) encompass 2-(2'-hydroxy-5'-(meth)acryloyloxyethylphenyl)-2H-benzotriazoles. More specific examples thereof include 2-(2'-hydroxy-5'-acryloyloxyethylphenyl)-2H-benzotriazole, 2-(2'-hydroxy-5'-methacryloyloxyethylphenyl)-2H-benzotriazole, 2-(2'-hydroxy-5'-methacryloyloxyethylphenyl)-5-chloro-2H-benzotriazole, 2-(2'-hydroxy-5'-methacryloyloxyphenyl)-2H-benzotriazole, and 2-(2'-hydroxy-5'-methacryloyloxyethyl-3'-t-butylphenyl)-2H-benzotriazole. Preferably, for cost and handleability, 2-(2'-hydroxy-5'-methacryloyloxyethylphenyl)-2H-benzotriazole is used.

The content of the structural unit derived from the reactive ultraviolet absorber in 100% by mass of the graft polymer layer (A2) is preferably not less than 0.01% by mass and not more than 5% by mass, and more preferably not less than 0.1% by mass and not more than 3% by mass.

In the production of the graft copolymer particles (A), particularly in the graft copolymerization of the monomer mixture (a-2) in the presence of crosslinked elastomer particles (A1), such as acrylic ester-based crosslinked elastomer particles (A1), there is a case where a polymeric component that is not grafted to the acrylic ester-based crosslinked elastomer particles (A1) (free polymer) is produced. Such a free polymer may be used as a part of or the whole of an acrylic resin constituting the matrix phase of the acrylic-based resin composition and the acrylic-based resin film.

A chain transfer agent may be added to the monomer mixture (a-2) for the purpose of controlling the molecular weight of the polymer, controlling the rate at which the polymer is grafted to the crosslinked elastomer (A1), controlling the amount of the production of a free polymer which is not bonded to the crosslinked elastomer (A1), and controlling thermal stability, etc. by decreasing terminal double bond of the polymer caused by disproportionate termination reaction during polymerization. The chain transfer agent may be similar to one used for polymerization of the crosslinked elastomer (A1). The amount of the chain transfer agent to be used is 0 parts by mass to 2 parts by mass, and preferably 0 parts by mass to 0.5 parts by mass, with respect to the total amount of 100 parts by mass of the monomer mixture (a-2).

The graft rate of the monomer mixture (a-2) relative to the crosslinked elastomer particles (A1) is preferably 5% to 250%, more preferably 10% to 200%, and more preferably 20% to 150%. When the graft rate is less than 5%, there is a tendency that the bending whitening resistance of the acrylic-based resin film is decreased, transparency is decreased, and the elongation at tensile break is decreased so that cracks are more likely to occur during secondary molding. When the graft rate is higher than 250%, the melt viscosity of the acrylic-based resin composition tends to be higher during film molding, and the moldability of the acrylic-based resin film tends to decrease.

The average particle size d (nm) of the crosslinked elastomer particles (A1) in the acrylic-based resin film and the amount w (mass%) of the polyfunctional monomer used for the acrylic ester-based crosslinked elastomer preferably satisfy the relational formula 0.015d≤w≤0.06d and more preferably satisfy 0.02d≤w≤0.05d. In a case where the amount of the polyfunctional monomer is within the range of the above relational formula, the following advantages are brought about: the elongation of the acrylic-based resin film is not likely to decrease during secondary molding; cracks are less likely to occur during molding processing and cutting; the acrylic-based resin film has excellent transparency; and stress whitening is difficult to occur during bending and tensile deformation at a normal temperature, at a high temperature above the softening temperature of the acrylic-based resin film, or at a low temperature between the normal temperature and Tg of the crosslinked elastomer particles (A1).

As previously discussed, the graft copolymer particles (B) used as needed also include a crosslinked elastomer (B1) that is a rubber component similarly to the graft copolymer particles (A). The graft copolymer particles (B) typically include a graft polymer layer (B2) which is located closer to a surface layer than is the crosslinked elastomer (B1), similarly to the graft copolymer particles (A). That is, the graft copolymer particles (B) preferably include the crosslinked elastomer (B1) and the graft polymer layer (B2).

The graft copolymer particles (B) may be substantially similar to the graft copolymer particles (A) in terms of raw material, production method, etc., except that the graft copolymer particles (B) have an average particle size larger than that of the graft copolymer particles (A). Preferably, particles of the acrylic ester-based crosslinked elastomer (B1) have a concentric spherical multilayer structure that contains a rigid or semi-rigid crosslinked resin layer inside the crosslinked elastomer layer. Examples of such a rigid or semi-rigid crosslinked resin layer include: a rigid crosslinked methacrylic resin particles as disclosed in Japanese Examined Patent Application No. 55-27576; and crosslinked particles having a semi-rigid layer and constituted by methyl methacrylate-acrylic acid ester-styrene copolymers as disclosed in Japanese Patent Application Publication No. 4-270751, WO2014/41803 etc. By introducing such a rigid or semi-rigid crosslinked resin layer, it is possible to improve the transparency, bending whitening resistance, bending cracking resistance, etc. of the graft copolymer particles (B) with a larger particle size than that of the graft copolymer particles (A).

The average particle size of the graft copolymer particles (B) is preferably 150 nm to 400 nm and more preferably 200 nm to 350 nm.

The average particle size of the graft copolymer particles (B) is larger than the average particle size of the graft copolymer particles (A). The graft copolymer particles (B) with a large average particle size more effectively induce plastic deformation (crazing) in the acrylic resin phase around the graft copolymer particles against the action of external force on the acrylic-based resin material. For this reason, the graft copolymer particles (B) have a very excellent effect in providing the acrylic resin material with impact resistance and crack resistance. On the other hand, the graft copolymer particles (B) are inferior to the graft copolymer particles (A) in terms of bending whitening resistance and/or solvent whitening resistance, etc. In view of the above, for example, by adding a little amount of the graft copolymer particles (B) to an acrylic-based resin composition containing the acrylic resin and the graft copolymer particles (A), the following effects can be expected: (a) the total content of soft components with respect to the acrylic-based resin film is lowered so that the surface hardness of the acrylic-based resin film is not lowered; (b) whitening resistance properties are not likely to deteriorate during the application of external stress on the acrylic-based resin film or during the application of a coating solution containing an organic solvent, and/or during molding; and (c) cracking resistance and secondary moldability of a functional film are efficiently improved.

In one or more embodiments of the present invention, the average particle size of the graft copolymer particles (A) and the graft copolymer particles (B) can be measured using a laser diffraction particle size distribution analyzer, such as the Microtrac (TM) particle size distribution measuring device MT3000, manufactured by Nikkiso Co., Ltd., and using a light scattering method in a latex state.

The method for producing the graft copolymer particles (A) and the graft copolymer particles (B) is not particularly limited, and known emulsion polymerization, miniemulsion polymerization, suspension polymerization, and solution polymerization are applicable. The emulsion polymerization is particularly preferable in view of the large adjustable width of the resin structure.

As an initiator used in the emulsion polymerization of the graft copolymer particles (A) and/or the graft copolymer particles (B), known initiators such as an organic peroxide, an inorganic peroxide, and an azo compound may be used. Specifically, organic peroxides such as t-butylhydroperoxide, 1,1,3,3-tetramethylbutylhydroperoxide, cumene hydroperoxide, benzoyl peroxide, and lauroyl peroxide, alkyl peroxycarbonates, and alkyl peroxyesters; inorganic peroxides such as potassium persulfate, sodium persulfate, and ammonium persulfate; and azo compounds such as azobisisobutyronitrile etc. can be used. These may be used alone, or two or more thereof may be used in combination.

These initiators may be (a) used as a radical polymerization initiator as a thermal dissociation type or (b) used as a redox type initiator system, by combining these initiators with reducing agents such as sodium sulfite, sodium thiosulfate, sodium formaldehyde sulfoxylate, ascorbic acid, hydroxyacetone acid, ferrous sulfate, and the like. Ferrous sulfate may be used as a complex with ethylenediaminetetraacetic acid-2-disodium salt etc.

Among these, it is more preferable to use inorganic peroxides, such as potassium persulfate, sodium persulfate, and ammonium persulfate, or to use a redox initiator system obtained by combining organic peroxides, such as t-butyl hydroperoxide and cumene hydroperoxide, with an inorganic-based reducing agent, such as a divalent iron salt, and/or an organic-based reducing agent, such as sodium formaldehyde sulfoxylate, reducing sugar, and ascorbic acid, in terms of polymerization stability and control of particle size.

The aforementioned inorganic or organic peroxides may be added by a known method, such as by adding them intact in a polymerization system, by mixing them in a monomer, or by adding them while they are dispersed in an aqueous emulsifier solution. From the viewpoint of the transparency of the acrylic-based resin film, addition of the inorganic or organic peroxides by mixing them with a monomer and addition of the inorganic or organic peroxides by dispersing them in an aqueous emulsifier solution are preferable.

Surfactants (also referred to as emulsifiers) used for emulsion polymerization of the graft copolymer particles (A) and/or the graft copolymer particles (B) are not particularly limited. For emulsion polymerization, known surfactants can be widely used. Preferable examples of the surfactants encompass (a) anionic surfactants such as alkyl sulfonic acid, alkylbenzene sulfonic acid, dioctyl sulfosuccinic acid, alkyl sulfate, sodium fatty acid, polyoxyethylene alkyl ether acetic acid, alkyl phosphate, alkyl ether phosphate, alkyl phenyl ether phosphate, sodium salt such as surfactin, potassium salt, and ammonium salt and (b) nonionic surfactants such as reaction products of alkylphenols and aliphatic alcohols and propylene oxide and/or ethylene oxide. These surfactants may be used alone, or two or more thereof may be used in combination.

The graft copolymer particles (A) or graft copolymer particles (B) can be separated and collected by known methods from the latex of the graft copolymer particles (A) or the latex of the graft copolymer particles (B) that are obtained by emulsion polymerization. For example, the graft copolymer particles (A) or the graft copolymer particles (B) can be separated and collected by coagulation of the graft copolymer particles by adding a watersoluble electrolyte such as calcium chloride, magnesium sulfate, magnesium chloride, calcium acetate, sodium chloride, hydrochloric acid, acetic acid, and sulfuric acid to the latex, or coagulation of the graft copolymer particles by freezing the latex, and then filtering, rinsing, and drying a solid content. The graft copolymer particles (A) or the graft copolymer particles (B) can be separated and collected also by treatments such as spray drying, freeze drying, etc. for the latex.

For the purpose of reducing the appearance defects of the acrylic-based resin film and/or internal foreign bodies, preferably, before the separation and collection of the graft copolymer particles (A) or graft copolymer particles (B), the latex of the graft copolymer particles (A) or the latex of the graft copolymer particles (B) is filtered with a filter and/or mesh in advance, so that substances that cause foreign body defects, such as environmental foreign bodies and polymerization scales, are removed.

As the filter and the mesh, known filters and meshes used for filtration of liquid media can be used. The forms of the filter and the mesh, the mesh sizes of the filter and the mesh, filtration accuracy, filtration capacity, etc., may be selected as appropriate according to the application being targeted, the type, size, and the amount of a foreign body to be removed. Preferably, the mesh size and filtration accuracy of the filter and the mesh are, for example, not less than twice the average particle size of the graft copolymer particles (A) or graft copolymer particles (B).

In 100% by mass of the acrylic-based resin film, although not particularly limited, the graft copolymer particles (A) content is preferably 1% by mass to 70% by mass, more preferably 5% by mass to 65% by mass, and more preferably 10% by mass to 60% by mass.

In 100% by mass of the acrylic-based resin film, although not particularly limited, the graft copolymer particles (B) content is preferably not more than 20% by mass, more preferably not more than 10% by mass, and most preferably not more than 5% by mass.

### <Other Components>

The acrylic-based resin film (acrylic-based resin composition constituting the acrylic-based resin film) may contain a thermoplastic resin that is at least partially compatible with an acrylic resin, if necessary, provided that the purpose of the present invention is not compromised. Examples of such a thermoplastic resin encompass styrene-based resin, polycarbonate resin, amorphous saturated polyester resin, polyamide resin, phenoxy resin, polyarylate resin, olefin-methacrylic acid derivative resin, olefin-acrylic acid derivative resin, cellulose derivatives (cellulose acylate, etc.), vinyl acetate resin, polyvinyl alcohol resin, polyvinyl acetal resin, polylactic acid resin, and PHBH (poly(3-hydroxybutyrate-co-3-hydroxyhexanoate)) resin. Examples of the styrene-based resin encompass styrene-acrylonitrile resin, styrene-(meth)acrylic acid resin, styrene-maleic anhydride resin, styrene-N-substituted or unsubstituted maleimide resin, styrene-acrylonitrile-butadiene resin, and styrene-acrylonitrile-acrylic ester resin. Among these, at least one thermoplastic resin selected from the group consisting of the styrene-based resin, the polycarbonate resin, and the cellulose acylate resin are preferable because such a thermoplastic resin has excellent compatibility with acrylic resin and may improve the bending crack resistance, solvent resistance, and low hygroscopicity of the acrylic-based resin film, and the ability of the laminate to prevent glass scattering.

The acrylic-based resin film (acrylic-based resin composition constituting the acrylic-based resin film) may also include, if necessary, conventional and known additives that are used in an acrylic-based resin film, provided that the purpose of an embodiment of the present invention is not compromised. Examples of such additives encompass antioxidants, ultraviolet ray absorbing agents, photo stabilizers, light diffusing agents, matting agents, lubricants, colorants such as pigments and dyes, fibrous fillers, antiblocking agents constituted by organic particles and/or inorganic particles, infrared ray reflecting agents constituted by metals and/or metal oxides, plasticizing agents, and antistatic agents. The additives are not limited to these. These additives may be used in any amount according to the type of the additives, provided that the purpose of an embodiment of the present invention is not interfered with, or in order to enhance the effect of an embodiment of the present invention.

### <Physical properties of acrylic-based resin film>

The glass transition temperature (Tg) of the acrylic-based resin film is preferably not more than 140°C, more preferably not more than 135°C, and more preferably not more than 130°C. In a case where the glass transition temperature of the acrylic-based resin film is not higher than 140°C, molding is possible without increasing the molding temperature, yielding an advantage that the generation of cracks can be suppressed during molding. Although the lower limit of the glass transition temperature of the acrylic-based resin film is not particularly limited, the glass transition temperature is preferably, for example, not less than 100°C from the viewpoint of preventing print misalignment and improving reliability during drying of printing. The glass transition temperature of the acrylic-based resin film is measured by the method disclosed in Examples.

Although the thickness of the acrylic-based resin film is not particularly limited, the thickness is, for example, 75 µm to 500 µm, more preferably 75 µm to 300 µm, and more preferably 100 µm to 250 µm. In a case where the thickness of the acrylic-based resin film is 75 µm to 500 µm, there is an advantage of excellent handleability due to the elasticity appearing in the film. The thickness of the acrylic-based resin film is measured by the method disclosed in Examples.

The pencil hardness of the acrylic-based resin film, measured in accordance with JIS K 5600-5-4, is preferably not less than 2B, more preferably not less than B, and particularly preferably not less than HB.

### <Method for producing acrylic-based resin film>

The acrylic-based resin film can be produced by known processing methods. Specific examples of the known processing methods encompass melt processing method, calendar molding, press molding, and solvent casting. Examples of the melt processing methods encompass an inflation method and a T-die extrusion method. In the solvent casting, after dissolving and dispersing the acrylic resin composition in a solvent, the resultant dispersion slurry (dope) is flowed on a belt-shaped substrate in a film-like manner. Then the solvent is volatilized from the flowed film-like dope to obtain an acrylic-based resin film.

Among these methods, the melt processing method which does not use a solvent is preferable, and T-die extrusion is particularly preferable. By applying the melt processing method, it is possible to produce a film with little limitation on thickness and excellent surface property with high productivity, and to reduce the impact of the solvent on the natural environment and working environment and to reduce the production cost.

In a case of molding the acrylic resin composition into a film by the melt processing method or the solvent casting, it is preferable to remove environmental foreign bodies, polymerization scales, deteriorated resin, etc. in the acrylic-based resin composition by filtration using a filter or meshes, in terms of improving the appearance quality of the acrylic-based resin film, because such environmental foreign bodies, polymerization scales, deteriorated resin, etc. cause appearance defects of the acrylic-based resin film and foreign bodies inside the acrylic-based resin film.

During film production by melt processing, it is possible to filter the acrylic resin composition at any one or more of the following timings: during the preparation step of an acrylic resin composition by melting mixture; during the pelletization step of a molten acrylic resin composition; and during the film production step with a T-die. In the solvent casting, it is necessary to mix the acrylic resin, the graft copolymer particles (A) and (B), and other components with the solvent, and then filter the acrylic resin composition before casting a film.

As such filters and meshes, known filters and meshes can be used without any particular limitation, provided that the filters and the meshes have enough heat resistance and durability according to melt processing conditions or have enough resistance to solvents, and dopes for casting.

In a case of producing an acrylic-based resin film by melt processing, particularly for obtaining a high-quality acrylic-based resin film, it is preferable to use a filter that has a large filtration capacity and a small amount of internal unflowable molten resin which causes the generation of thermally deteriorated and/or crosslinked resin that impairs the quality of the film. For example, a leaf disc type filter or a pleats type filter is preferable from the viewpoint of filtration efficiency and productivity.

In a case of producing an acrylic-based resin film by the T-die extrusion, for example, the following automated die machine can be used to improve film thickness accuracy: an automated die machine that measures the film thickness distribution in the transverse direction (TD; in the direction perpendicular to the extrusion direction) of the extruded and molded film online and, based on this, automatically adjusts the lip clearance of the T die during extrusion of the film. Applying such automated die using an appropriate control method may improve the thickness accuracy of an acrylic-based resin film.

In production of the acrylic-based resin film, when molding the film, if necessary, both sides of the film in the molten state may be caused to simultaneously contact (may be sandwiched by) cooling rollers or cooling belts to obtain a film having a more excellent surface property. In this case, it is preferable to cause both sides of the film in the molten state to simultaneously contact rollers or cooling belts maintained at the glass transition temperature of the acrylic resin composition of not less than - 80°C, preferably not less than -70°C.

More preferably, a roller with a metal sleeve having elasticity, as disclosed, for example, in Japanese Patent Application Publication No. 2000-153547, Japanese Patent Application Publication No. 11-235747 etc. is used as at least one of the rollers for carrying out such sandwiching, and a roller mirror surface or specific surface shape is transferred using a low sandwich pressure. This makes it possible to obtain (a) a film that has little residual strain and has excellent smoothness and/or (b) a film that has moderate surface roughness, favorable slipping property of the film surface, suppressed blocking with another film, and less internal strain.

It is also possible to perform, according to the purpose, molding of the film followed by uniaxial or biaxial stretching. Uniaxial or biaxial stretching can be carried out using a known stretching device. It is possible to carry out biaxial stretching in a known manner, such as a method for carrying out sequential biaxial stretching, simultaneous biaxial stretching, longitudinal stretching, and then carrying out lateral stretching while relaxing the longitudinal direction, so as to reduce the bowing of the film.

Furthermore, depending on the necessity of the application, one or both sides of the acrylic-based resin film may be provided with any surface shape, such as a hairline, prism, uneven shape, stereo ornament, matted surface, a rough surface with a certain surface roughness, and knurling on the film end. The provision of such a surface shape can be carried out by a known method. Examples of the known method encompass a method in which the surface shape of a roller is transferred by sandwiching both sides of a film in a molten state immediately after extrusion or both sides of a molded film that has been fed from a feeding device with two rollers or belts having a surface shape on at least one surface.

### (Hard coat layer)

The hard coat layer in the first laminate production method is a functional layer that is laminated on at least one side of the acrylic-based resin film and that contains a urethane acrylate resin. The hard coat layer may be laminated on one side of the acrylic-based resin film or may be laminated on both sides thereof.

Examples of the hard coat layer encompass, without any particular limitations, various hard coat layers that have conventionally been provided in, for example, various functional films and resin molded products and that contain a urethane acrylate resin.

### <Urethane acrylate resin>

The urethane acrylate resin can be obtained, for example, by mixing a polyhydric alcohol, a polyvalent isocyanate and a hydroxyl-containing (meth)acrylate to produce a urethane bond by the reaction of an isocyanate group with a hydroxyl group.

Various characteristics of the urethane acrylate resin can be adjusted as appropriate depending on the structure of the polyhydric alcohol, the type of polyvalent isocyanate, and the number of acryloyl group or methacryloyl groups (CH₂ = CH-CO-, or CH₂ = C(CHs)-CO-) derived from the hydroxyl-containing (meth)acrylate, and are not particularly limited. Example of the urethane acrylate resin further encompass urethane acrylate resins commercially available as ultraviolet-curable hard coating agents.

### <Others>

In a first laminate production method, the hard coat layer of the laminate can include another component in addition to the urethane acrylate resin. Examples of the component other than the urethane acrylate resin encompass: monomers, oligomers, and resins which have monofunctional or polyfunctional radical reactive functional groups (such as (meth)acrylate, epoxy acrylate-based monomer, polyester acrylate, silicone acrylate, polycarbonate acrylate, and polyacrylic acrylate); and a mixture of these, and these other components can be used in combination. The urethane acrylate resin can be used in combination with, for example, a composition containing (a) a hydrolyzed condensate of two- to four-functional silane compounds and/or (b) monomers, oligomers, and resins which have a cationic curing and/or anionic curing functional group such as an epoxy group and an oxetane group or a mixture of these. The urethane acrylate resin can be used alone as a component used to form the hard coat layer. Alternatively, in addition to the urethane acrylate resin, two or more of the above other components can be added by mixing.

The (meth)acrylate is not particularly limited as long as it has at least two (meth)acryloyl groups. Specific examples of the (meth)acrylate encompass (a) alicyclic (meth)acrylates such as alkyl(meth)acrylate, aryl(meth)acrylate, phenoxyethyl(meth)acrylate, and isobornyl(meth)acrylate and (b) polyfunctional (meth)acrylates such as polyalkylene glycol di(meth)acrylate, dipentaerythritol hexa(meth)acrylate, dipentaerythritol penta(meth)acrylate, dipentaerythritol tetra(meth)acrylate, dipentaerythritol tri(meth)acrylate, pentaerythritol tetra(meth)acrylate, pentaerythritol tri(meth)acrylate, trimethylol propane tri(meth)acrylate, trimethylol ethane tri(meth)acrylate, hexanediol di(meth)acrylate, and diethylene glycol di(meth)acrylate. These may be used alone, or two or more thereof may be used in mixture. Examples of the (meth)acrylate further encompass those commercially available as ultraviolet-curable hard coating agents. In the present specification, (meth)acrylate is meant to encompass methacrylate and acrylate. In the present specification, a (meth)acryloyl group is meant to encompass a methacryloyl group and an acryloyl group.

The epoxy acrylate-based monomers are not particularly limited. Specific examples of the epoxy acrylate-based monomers encompass glycidyl (meth)acrylate, β-methylglycidyl (meth)acrylate, 3,4-epoxycyclohexylmethyl (meth)acrylate, and vinylcyclohexene monooxide (i.e., 1,2-epoxy-4-vinylcyclohexane).

Examples of the hydroxyl group-containing (meth)acrylate encompass, but are not particularly limited to, a hydroxyl group-containing (meth)acrylate such as 2-hydroxyethyl acrylate and 2-hydroxyethyl methacrylate. Besides, as necessary, the following can be added: (a) compounds with an ethylenically unsaturated bond having at least one hydroxyl group, such as 2-hydroxypropyl (meth)acrylate, 4-hydroxybutyl acrylate, polyethylene glycol mono(meth)acrylate, polypropylene glycol mono(meth)acrylate, trimethylpropane mono (meth)acrylate, trimethylol propane di(meth)acrylate, allyl alcohol, ethylene glycol allyl ether, glycerine (mono-, di-)allyl ether, N-methylol (meth)acrylamide or (b) a mixture thereof.

The polyvalent isocyanates are not particularly limited. Examples of the polyvalent isocyanate compound which is a compound with two or more isocyanate groups encompass, e.g., 2,4-trilenediisocyanate, 2,6-trilenediisocyanate, 1,3-xylylenediisocyanate, 1,4-xylylenediisocyanate, 1,5-naphthalenediisocyanate, m-phenylenediisocyanate, p-phenylenediisocyanate, 3,3'-dimethyl-4,4'-diphenylmethane diisocyanate, 4,4'-diphenylmethandiisocyanate, 4,4'-diphenylmethantriisocyanate, 3,3'-dimethylphenylenediisocyanate, 4,4'-biphenylene diisocyanate, 1,6-hexanediisocyanate, isophorone diisocyanate, methylene bis(4-cyclohexyl isocyanate), 2,2,4-trimethylhexamethylene diisocyanate, bis(2-isocyanate ethyl)fumarate, 6-isopropyl-1,3-phenyl diisocyanate, 4-diphenyl propane diisocyanate, tolidine diisocyanate, hydrogenated diphenyl methane diisocyanate, hydrogenated xylylene diisocyanate, tetramethyl xylylene diisocyanate, 2,5-bis(isocyanate methyl)-bicyclo[2.2.1]heptane, 2,6-bis(isocyanate methyl)-bicyclo[2.2.1]heptane, trimethylol propane adduct of triethylene diisocyanate, isocyanurate of triethylene diisocyanate, an oligomer of diphenylmethane-4,4'-diisocyanate, biuret of hexamethylene diisocyanate, isocyanurate of hexamethylene diisocyanate, uretdione of hexamethylene diisocyanate, and isocyanurate of isophorone diisocyanate. These polyisocyanates may be used alone or two or more thereof may be used in combination.

Specific examples of the polyhydric alcohols encompass ethylene glycol, 1,3-propanediol, 1,4-butanediol, 1,5-pentanediol, 1,6-hexanediol, 1,7-heptanediol, 1,8-octanediol, 1,9-nonandiol, 1,10-decanediol, 3-methyl-1,5-pentanediol, neopentylglycol, 2-methyl-1,8-octanediol, 1,4-cyclohexanedimethanol, and polytetramethylene glycol. These polyhydric alcohols may be used alone or two or more thereof may be used in combination.

An organotin-based urethanization catalyst is used to promote the reaction between the isocyanate component and the isocyanate group. The organotin-based urethanization catalyst may be a commonly used one for urethanization reaction, and examples thereof encompass dibutyltin dilaurate, dibutyltin diacetate, dibutyltin dialkyl malate, tin stearate, and tin octylate.

A composition constituted by the hydrolyzed condensate of the silane compound is preferably a curable composition containing (i) a condensate (A) obtained by hydrolyzing and condensing a silane compound (Z) which is represented by the following general formula (2) and has a hydrolyzable silyl group, and (ii) a catalyst or curing agent (B) that reacts a reactive substituent as necessary:

R⁴-(SiR⁵ₐ(OR⁶)₃₋ₐ) ... (2)

(In the general formula (2), R⁴ is a monovalent hydrocarbon group selected from the group consisting of: an alkyl group having 1 to 10 carbon atoms; an aryl group having 6 to 25 carbon atoms; and an aralkyl group having 7 to 12 carbon atoms, in which at least a part of terminals thereof can be substituted with a reactive substituent selected from the group consisting of an epoxy group, an oxetane group, a (meth)acryloyl group, a vinyl group, a hydroxyl group, a carboxyl group, an amino group, and a functionally protected amino group, R⁵ are each independently a monovalent hydrocarbon group selected from the group consisting of: a hydrogen group; an alkyl group having 1 to 10 carbon atoms; an aryl group having 6 to 25 carbon atoms; and an aralkyl group having 7 to 12 carbon atoms, and R⁶ are each independently a hydrogen atom or an alkyl group having 1 to 10 carbon atoms. "a" is an integer of 0 to 2.

Preferably, the weight average molecular weight of the condensate (A) is not more than 30,000. In addition, it is preferable that the usage ratio of the silane compound having a reactive substituent is not less than 10% by mass with respect to the whole amount of the silane compound (Z) used. In a case where a composition constituted by the hydrolyzed condensate of such a silane compound (Z) in combination with a urethane acrylate resin for the hard coat layer, a cured product as a hard coat layer may have excellent hardness, chemical resistance, durability, and the like.

The reactive substituent in the general formula (2) is preferably an epoxy group or an oxetane group because, with these group, cure shrinkage is less during the formation of the hard coat layer and it is easy to obtain a functional film with excellent durability and suppressed curling.

It is more preferable to use a neutral salt catalyst as a catalyst in carrying out the hydrolytic condensation reaction of the silane compound (Z). This is because when the reactive substituent is an epoxy group and/or an oxetane group, it is easy to suppress the degradation of the reactive substituent during hydrolytic condensation.

The method for curing the resin layer (resin composition) in forming the hard coat layer may be known one. The curing method is preferably a method for irradiation with an active energy ray, such as ultraviolet light. In a case where curing is carried out by irradiation with an active energy ray, a photopolymerization initiator is used. Furthermore, in accordance with a composition containing the following (a) and/or (b) is used in combination with the urethane acrylate resin, for example, a photo anion generator or a photo cation generator is also used as appropriate: (a) a hydrolyzed condensate of the above silane compound; (b) monomers, oligomers, and resins which have cationic curing and/or anionic curing functional groups such as an epoxy group and an oxetane group, or mixtures of these.

Specific examples of the photopolymerization initiator encompass: acetophenone, benzophenone, benzoylmethyl ether, benzoylethyl ether, benzoin isopropyl ether, benzoin isobutyl ether, dibenzyl, 1-hydroxy-cyclohexyl-phenyl-ketone, 2,2-dimethoxy-2-phenylacetophenone, tetramethylthiuram monosulfide, tetramethylthiuram disulfide, thioxanthone, 2-chlorothioxanthone, 2-methylthioxanethone, and 2-methyl-1-[4-(methylthio)phenyl]-2-morpholinopropan-1-one compound etc. Among these, 1-hydroxy-cyclohexyl-phenyl-ketone which has excellent compatibility with resin is preferable.

Specific examples of the photo cation generator encompass: CPI-100P, CPI-101A, CPI-200K, and CPI-200S, each manufactured by San Apro; WPI-124, WPI-113, WPI-116, WPI-169, WPI-170, and WPI-124, each manufactured by Wako Pure Chemical Industries, Ltd.; and Rhodorsil 2074 manufactured by Rhodia, S.A.

Specific examples of the photo anion generate encompass: acetophenone o-benzoyloxime, nifedipine, 2-(9-oxoxanthen2-yl)propionic acid 1,5,7-triazabicyclo[4.4.0]deca-5-en, 2-nitrophenylmethyl 4-methacryloyl oxypiperidine-1-carboxylate, 1,2-diisopropyl-3-[bis(dimethylamino)methylene]guanidium 2-(3-benzoylphenyl)propionate, 1,2-dicyclohexyl-4,4,5,5-tetramethylpiguanidium, and n-butyltriphenylborate.

In a case where the hard coat layer is formed by curing a resin layer (coating film) constituted by a curable composition, various known leveling agents can be blended in the curable composition for the purpose of improving, for example, applicability, abrasion resistance and an antifouling property after curing. As the leveling agent, a fluorine-based leveling agent, an acrylic-based leveling agent, a silicone-based leveling agent, and adducts or mixtures thereof may be used. The amount of the leveling agent is not particularly limited, and may be, for example, 0.03 parts by mass to 3.0 parts by mass with respect to 100 parts by mass of the curable composition.

In a case of forming the hard coat layer by applying a curable composition, various types of additives, such as ultraviolet ray absorbing agents, light stabilizers, defoaming agents, antioxidants, light diffusing agents, matting agents, antifouling agents, lubricants, colorants (e.g. pigments and dyes), organic particles, inorganic fine particles, and antistatic agents, may be added to the curable composition as necessary. The additives are not limited to these.

In order to impart suitable applicability to the curable composition, an organic solvent is usually blended. The organic solvent is not particularly limited as long as it can give desired applicability to the curable composition and a hard coat layer with a desired film thickness and performances can be formed. The boiling point of the organic solvent is preferably 50°C to 150°C from the viewpoint of applicability and drying property of the resin layer (coating film) to be formed.

Specific examples of the organic solvent include: saturated hydrocarbons such as hexane; aromatic hydrocarbons such as toluene and xylene; halogenated hydrocarbons such as chloroform and methylene chloride; alcohols such as methanol, ethanol, isopropyl alcohol, and butanol; esters such as methyl acetate, ethyl acetate, and butyl acetate; ketones such as acetone, methyl ethyl ketone, methyl isobutyl ketone, and cyclohexanone; ethers such as tetrahydrofuran, dioxane, propylene glycol monoethyl ether, methyl cellosolve, and ethyl cellosolve; and amides such as N methylpyrrolidone and dimethylformamide. The organic solvent may be used alone, or two or more thereof may be used in combination.

In a case of applying a curable composition onto the main surface of the aforementioned acrylic-based resin film which is a base film, any method for application may be employed without particular limitation. Examples of the application method encompass a reverse coating method, a gravure coating method, a bar coating method, a die coating method, a spray coating method, a kiss coating method, a wire bar coating method, and a curtain coating method. These application methods may be carried out solely or a plurality of these methods may be carried out in combination.

The above-described curable composition for the formation of the hard coat layer is applied to the surface of the aforementioned acrylic-based resin film which is a base material film to form a resin layer, and then the organic solvent is removed from the coating film by drying and the resultant resin layer is cured by light irradiation such as ultraviolet light irradiation. This forms a hard coat layer.

A drying temperature when the organic solvent is removed from the resin layer after the coating is preferably 60°C to 120°C and more preferably 70°C to 100°C. If the drying temperature is excessively low, the organic solvent may remain in the resin layer (coating film). If the drying temperature is excessively high, the flatness of the functional film (hard coat layer) may be impaired due to thermal deformation of the base material film.

The wavelength of the ultraviolet light with which the resin layer (coating film) is to be irradiated when the coating film is cured is preferably in the range of 200 nm to 400 nm. For the cumulative amount of ultraviolet light (UV), the condition described in the section [4. Laminate production method] described later is preferably used. Examples of the irradiation device for radiating ultraviolet exposure light encompass an irradiation device including: (a) a lamp light source such as a highpressure mercury lamp, a low-pressure mercury lamp, a metal halide lamp, an electrode-free lamp and an excimer lamp and/or (b) a pulse or continuous laser light source such as an argon ion laser and a helium neon laser etc. may be used.

Examples of the hard coat layer-forming composition (curable composition) encompass commercially available products such as: product name "Z-607-27L" manufactured by Aica Kogyo Co. Ltd.; product name "ENS102" manufactured by DIC Corporation; product name "Beamset 1200W" manufactured by Arakawa Chemical Industries, Ltd.; product name "Acrylate 8UX-116A" manufactured by Taisei Fine Chemical Co., Ltd.; product name "NXD-004AP" manufactured by Nippon Kako Toryo Co., Ltd.; product name "P-5820TAH-1" manufactured by Daido Chemical Industry Co., Ltd.; and product name "Rioduras MOL7200" manufactured by Toyochem Co., Ltd. These commercially available products have elongation even after curing. Therefore, using these commercially available products make it possible to further increase the crack elongation of the laminate at 120°C.

The thickness of the hard coat layer is not particularly limited and is, for example, 0.6 µm to 10.0 µm, preferably 0.7 µm to 7.0 µm, and more preferably 0.8 µm to 5.0 µm. The hard coat layer having a thickness of 0.6 µm to 10.0 µm has an advantage that it can attain both of wear resistance and moldability. The thickness of the hard coat layer is measured by the method disclosed in Examples.

In Embodiment 1 of the present invention, inorganic particles and/or metal particles may be added in order to improve the hardness, the wear resistance, an antistatic property, and the like of the hard coat layer. Examples of the inorganic particles and metal particles encompass, but are not particularly limited to, silica, alumina, titanium oxide, zinc oxide, zirconia, graphene, nanocarbon, carbon black, nanodiamond, mica, barium titanate, boron nitride, metal silver, and metal copper. These particles may be used without a surface treatment. Alternatively, these particles may be subjected to a surface treatment by a known method in advance for the purpose of controlling a dispersion state such that the affinity with the hard coat layer is controlled as appropriate.

### <Particles>

The hard coat layer in the first laminate production method can further contain particles in addition to the urethane acrylate resin. In a case where the hard coat layer contains the particles in the first laminate production method, it is possible to obtain a laminate that contains an acrylic-based resin film having an excellent anti-dazzling property.

For particles blended in the hard coat layer for the purpose of providing an anti-dazzling property, etc., in order to obtain a balance between various characteristics such as desired anti-dazzling property, sharpness of transmission image, glaring, jet-black feeling on the surface, surface hardness, surface friction property, and an antistatic property, the following properties such as the material of the particles, the number of parts blended, the type of solvent in which the particles are to be dispersed, the particle size, the dispersed particle size, the thickness of the hard coat layer, the relative refractive index difference from the hard coat base material, and the affinity and reactivity between the particle surface and the hard coat base material or the solvent can be adjusted as appropriate range of known techniques provided the effects of the present invention are not compromised..

The material of the particles blended in the hard coat layer is not particularly limited, provided that the effects of the present invention are brought about. Examples of the material of the particles to be blended in the hard coat layer encompass (a) inorganic particles such as silica, alumina, glass beads or flakes, mica, clay, titanium oxide, zinc oxide, zirconia, and metal particles and/or (b) crosslinked organic resin particles containing an alkyl (meth)acrylate unit, an aromatic vinyl unit, a siloxane unit, and the like as main components, and (c) core-shell type multilayer structural resin particles. From the viewpoint of the ease of obtainment and the easy design of an anti-dazzling property according to the use, the particles are preferably inorganic oxidized particles (such as silica, alumina, titanium oxide, zinc oxide, and zirconia) and/or crosslinked organic resin particles, and more preferably at least one selected from the group consisting of silica, alumina, zirconia, a crosslinked silicone resin, a crosslinked acrylic resin, and a crosslinked aromatic vinyl resin. In addition, silica particles, alumina particles, and crosslinked organic resin particles are particularly preferable from the viewpoint of a balance of physical properties such as an anti-dazzling property, dispersibility, and surface hardness. From the viewpoint of controlling dispersibility, these particles can be subjected to, for example, a surface treatment and/or a graft polymerization treatment by a known method such as the use of a reactive monomer or a silane coupling agent which may have a reactive substituent, a plasma treatment, and a corona treatment. At least part of the particles preferably contain, on the surface thereof, a reactive functional group which has reactivity with a urethane acrylate resin. This is because the interfacial adhesiveness between the particles and the hard coat layer is improved, and the dispersibility of the particles, cracks and/or whitening during stretching may be improved. Examples of the reactive functional group having reactivity with a urethane acrylate resin encompass: (a) radical-reactive functional groups such as a vinyl group, a (meth)acryloyl group; (b) ionic functional groups such as an epoxy group, an oxetane group, a hydroxy group, a carboxyl group, a mercapto group, an isocyanate group, a hydroxy group, and an amino group; and (c) wet-curable functional groups such as a silyl group and an alkoxysilyl group.

In the present specification, "particles", depending on the size of the primary particles, may be dispersed in the form of primary particles or may be dispersed in the form of a plurality of particles agglutinated. The size of a region (dispersion domain) in which these particles or the agglutinate thereof is distributed is defined as "average dispersed particle size". Those with a large primary particle size may have an average dispersed particle size and a primary (basic) particle size which are identical.

The average dispersed particle size of the particles (such as silica particles) is not particularly limited, provided that the effects of the present invention are brought about, and is, for example, 0.1 µm to 50.0 µm, and may be 0.2 µm to 25.0 µm, 0.5 µm to 10 µm, and the like. The average dispersed particle size of the particles (such as silica particles) is measured by the method disclosed in Examples.

In a first laminate production method, the amount of the particles contained in the hard coat layer is not particularly limited, provided the effects of an embodiment of the present invention are brought about. For example, the amount is 0.1% by weight to 30.0% by weight, and may be 0.5% by weight to 20.0% by weight, 1.0% by weight to 15.0% by weight, and the like.

### (Low refractive index layer)

In the first laminate production method, it is preferable to further include a low refractive index layer that contains, on the hard coat layer, an acrylate-based resin containing, in an amount of not less than 40%, hollow fine silica particles having a particle size of less than 100 nm. The low refractive index layer constitutes an antireflection layer.

The low refractive index layer is typically formed by curing a low refractive index layer-forming composition (curable composition). The low refractive index layer is a layer for bringing about an antireflection effect due to a significant refractive index difference from the aforementioned hard coat layer and/or a significant refractive index difference from the high refractive index layer described later. The low refractive index layer can be comprising, for example, an acrylate-based resin containing not less than 40% of hollow fine silica particles having a particle size of not less than 100 nm, and can be, as appropriate, a known layer conventionally used for an antireflection film or the like. Examples of the low refractive index layer-forming composition encompass a composition obtained by adding, as a material for refractive index adjustment, hollow fine silica particles to an acrylate-based resin as a base organic material.

The acrylate-based resin contained in the low refractive index layer contains hollow fine silica particles. The particle size of the hollow fine silica particles is less than 100 nm, preferably not more than 80 nm, and more preferably not more than 60 nm. In a case where the particle size of the hollow fine silica particles is less than 100 nm, there is an advantage of excellent transparency. Although the lower limit of the particle size of the hollow fine silica particles is not particularly limited, the lower limit is, for example, not less than 10 nm and preferably not less than 20 nm, from the viewpoint of improving the antireflection performance. The particle size of the hollow fine silica particles is measured by the method disclosed in Examples.

In the low refractive index layer, the hollow fine silica particle content of the acrylate-based resin is not less than 40%, preferably not less than 45%, and more preferably not less than 50%. In a case where the hollow fine silica particle content of the acrylate-based resin is not less than 50%, there is an advantage of having an excellent antireflection property. The upper limit of the hollow fine silica particle content of the acrylate-based resin is not particularly limited, and is, for example, not more than 80% and preferably not more than 70% from the viewpoint of improving the surface hardness and wear resistance.

In Embodiment 1 of the present invention, the low refractive index layer-forming composition can contain, as an organic material other than the acrylate-based resin, a resin similar to the resin contained in the hard coat layer. In Embodiment 1 of the present invention, the low refractive index layer-forming composition contain, for example, fine silica particles or fine fluoride particles, as a material for refractive index adjustment other than fine hollow silica particles. Examples of the fluoride that constitute the fine fluoride particles encompass magnesium fluoride, lithium fluoride, aluminum fluoride, and calcium fluoride.

For providing an antifouling property to the low refractive index layer, part of the organic material can be substituted with a water-repellent material or an oil-repellent material. Examples of the water-repellent material and/or the oil-repellent material encompass (a) compounds containing a long-chain hydrocarbon skeleton, a fluorinated hydrocarbon skeleton, a fluoropolyether skeleton, a polysiloxane-based skeleton, and the like and (b) resins having each of the foregoing skeletons. These may have a functional group reactive with, for example, a urethane acrylate resin. These may contain two or more types of these skeletons in a molecule. A plurality of these may be used in combination.

Various types of additives can be added to the low refractive index layer as other components, provided that the effects of an embodiment of the present invention are not compromised. Examples of such an additive encompass a photopolymerization initiator, a dispersion agent, a surfactant, an ultraviolet ray absorbing agent, an antioxidant, a photo stabilizer, an antistatic agent, a leveling agent, an antifouling agent, anti-fingerprint agents, and a lubricant.

Examples of the low refractive index layer-forming composition encompass a commercially available product such as product name "Z-824" manufactured by Aica Kogyo Co., Ltd., product name "TU-2359" manufactured by Arakawa Chemical Industries, Ltd., and product name "ELCOM P-5062" manufactured by JGC Catalysts and Chemicals Ltd. These commercially available products have elongation even after curing. Therefore, using these commercially available products make it possible to further increase the crack elongation of the first laminate at 120°C.

### <Other functional layers>

The first laminate can have functional layer other than the ones described above. Examples of such other functional layer are not particularly limited, and can be any one of a variety of conventionally known functional layers. Specific examples of the other functional layer encompass an anti-dazzling layer, an antifouling layer, an anti-fingerprint layer, a scratch resistant layer, an antistatic layer, an ultraviolet light shielding layer, an infrared shielding layer, an uneven surface layer, a light diffusion layer, a matting layer, a light-polarizing layer, a coloring layer, a design layer, an emboss layer, a conductive layer, a gas barrier layer, a gas absorbing layer, and a high refractive index layer. Two or more types of such functional layers may be included in combination. Alternatively, one of such functional layers may have two or more functions.

### (Others)

In the step (A1), examples of the active energy ray encompass ultraviolet light (UV). In the step (A1), the cumulative light amount in the active energy ray irradiation (cumulative light amount in the ultraviolet light (UV) irradiation) is, for example, 150 mJ/cm² to 500 mJ/cm², preferably 180 mJ/cm² to 450 mJ/cm², and more preferably 200 mJ/cm² to 400 mJ/cm². In a case where the cumulative light amount in the UV irradiation is 150 mJ/cm² to 500 mJ/cm², it is possible to obtain a hard coat layer having suitable hardness while securing moldability. In a case where the cumulative light amount in the UV irradiation is not less than 150 mJ/cm², the degree of crosslinking of the hard coat layer improves, so that surface hardness and abrasion resistance can be favorable. In a case where the cumulative light amount in the UV irradiation is not more than 500 mJ/m², the impregnation of the hard coat layer with the low refractive index layer-forming composition becomes moderate during the application of the low refractive index layer-forming composition, and the appropriate amount of residual acrylate group remains in the hard coat layer. As a result, after the curing of the low refractive index layer-forming composition (resin layer), the adhesion between the hard coat layer and the low refractive index layer is maintained so that whitening during 80% stretching at 120°C can be suppressed in the resulting laminate.

In the step (A1), the cooling roller temperature is, for example, 20°C to 70°C, preferably 25°C to 60°C, and more preferably 30°C to 55°C. In a case where the cooling roller temperature in the step (A1) is 20°C to 70°C, it is possible to cure the resin layer (hard coat layer) while suppressing a temperature increase in the resin layer of the hard coat layer-forming composition during ultraviolet irradiation . This makes it possible to produce a laminate having desired physical properties.

For conditions and the like in the above step (A1) other than those described above, the descriptions in the above (hard coat layer) are applied.

In the low refractive index layer forming step (B1), an acrylate-based resin (the low refractive index layer-forming composition) that contains hollow fine silica particles having a particle size of less than 100 nm in an amount of not less than 40% is applied onto the hard coat layer obtained in the step (A1) and a resultant resin layer (low refractive index layer-forming composition) that contains the acrylate-based resin is irradiated with an active energy ray to cure the resin layer that contains said acrylate-based resin.

In the step (B1), examples of the active energy ray encompass ultraviolet light (UV). In step (B1), the same conditions as in the step (A1) can be applied to the cumulative light amount in active energy ray irradiation (for example, the cumulative light amount in the ultraviolet (UV) irradiation).

In the step (B1), the cooling roller temperature is, for example, 20°C to 70°C, preferably 25°C to 60°C, and more preferably 30°C to 55°C. In a case where the cooling roller temperature in the step (B1) is 20°C to 70°C, it is possible that, while a temperature increase in the resin layer of the low refractive index layer-forming composition during ultraviolet irradiation is suppressed, the resin layer (low refractive index layer) is cured. This makes it possible to produce a laminate having desired physical properties.

For conditions and the like in the above step (B1) other than those described above, the descriptions in the above (hard coat layer) and (low refractive index layer) are applied.

Embodiment 1 of the present invention provides a laminate production method including: an additional step (B1') to prepare the acrylate-based resin that contains the hollow fine silica particles having a particle size of less than 100 nm in an amount of not less than 40% by adding solvent to the aforementioned acrylate-based resin which is a material for the low refractive index layer before the step (B1), in which the solvent contains one or more types of solvents, and a solvent having a highest boiling point among said one or more types of solvents has a boiling point of 115°C to 180°C.. It can also be said that in the steps (B1) and (B1'), the "acrylate-based resin containing hollow fine silica particles having a particle size of less than 100 nm in an amount of not less than 40%" is the "low refractive index layer-forming composition".

In the step (B1'), the boiling point of the solvent having the highest boiling point is, for example, 115°C to 180°C, preferably 120°C to 170°C, and more preferably 125°C to 160°C. In a case where the boiling point of the solvent having the highest boiling point is 115°C to 180°C, the adhesiveness between the hard coat layer and the low refractive index layer becomes favorable, so that it is possible to obtain a laminate in which the whitening caused by the stretching is low (the degree of whitening is small).

The solvent used in the step (B1') is not limited to any particular one, provided that a solvent having the above boiling point is included. Examples of the solvent having a boiling point of 115°C to 180°C encompass, but are not particularly limited to, propylene glycol monomethyl ether (PGM), cyclohexanone, butyl acetate, and propylene glycol monomethyl ether acetate (PGMA). Among these, PGM is preferable from the viewpoint of compatibility with the resin and drying efficiency. These may be used alone or in combination of two or more.

In the step (B1'), there is no particular limitation on the method for adding a solvent to an acrylate-based resin, so as to prepare the acrylate-based resin that contains hollow fine silica particles having a particle size of less than 100 nm in an amount of not less than 40%, and known methods can be used. For example, the acrylate-based resin containing the hollow fine silica particles is prepared by the method disclosed in Examples.

### [1-3. Laminate]

The first laminate contains an acrylic-based resin film and a hard coat layer that is laminated on at least one side of the acrylic-based resin film. More specifically, the first laminate contains: an acrylic-based resin film; and a hard coat layer that is laminated on at least one side of the acrylic-based resin film, in which the acrylic-based resin film has a tensile breaking elongation of not less than 170% at 120°C, the hard coat layer contains a urethane acrylate resin, and the laminate has a pencil hardness of not less than H, and a crack elongation of not less than 80% at 120°C. In a preferable aspect of Embodiment 1 of the present invention, the first laminate further contains a low refractive index layer on the hard coat layer.

### (Laminate)

As described above, the first laminate is constituted by at least a specific acrylic-based resin film and a specific hard coat layer. In a preferable aspect of Embodiment 1 of the present invention, the first laminate is constituted by a specific acrylic-based resin film, a specific hard coat layer, and a specific low refractive index layer.

In Embodiment 1 of the present invention, the first laminate is constituted by the acrylic-based resin film disclosed in the above section (acrylic-based resin film) and the hard coat layer disclosed in the above section (hard coat layer). In addition, in a preferable aspect of Embodiment 1 of the present invention, the first laminate is constituted by the acrylic-based resin film disclosed in the above section (acrylic-based resin film), the hard coat layer disclosed in the above section (hard coat layer), and the low refractive index layer disclosed in the above section (low refractive index layer. The first laminate is preferably obtained by the production method disclosed in the above section [1-2. First laminate production method].

The pencil hardness of the first laminate is not less than H, preferably not less than 2H, and more preferably not less than 3H. In a case where the pencil hardness of the first laminate is not less than H, there is an advantage that a scratch is less likely to be made. In the present specification, the "pencil hardness" is an index of wear resistance, and the wear resistance is evaluated by the degree of damage which is caused by scratching. In the present specification, the pencil hardness of the laminate is measured by the method disclosed in Examples.

For the "tensile breaking elongation at 120°C" and the "crack elongation at 120°C" of the first laminate, the description in the above section [1-2. Laminate production method] is applied.

The haze of the first laminate is, for example, not more than 1.0%, preferably not more than 0.8%, and more preferably not more than 0.5%. The first laminate having a haze of not more than 1.0% brings about an advantage of having excellent transparency. In the present specification, the haze of the laminate is measured by the method disclosed in Examples.

The Δhaze of the first laminate after 80% stretching at 120°C is, for example, not more than 3.0%, preferably not more than 2.5%, and more preferably not more than 2.0%. In a case where the Δhaze of the first laminate after 80% stretching at 120°C is not more than 3.0%, there is an advantage that it is possible to suppress whitening during molding. The Δhaze of the first laminate after 80% stretching at 120°C is measured by the method disclosed in Examples.

In the first laminate, the Δhaze after 20% stretching at 120°C in the laminated film in which the low refractive index layer is laminated on the acrylic-based resin film (hereinafter also referred to simply as "Δhaze after 20% stretching at 120°C") is preferably not more than 30% and more preferably not more than 20%. The low refractive index layer of the first laminate preferably undergoes little whitening during stretching for improving the crack elongation of the first laminate at 120°C and/or suppressing whitening during stretching at 120°C. In a case where the Δhaze after 20% stretching at 120°C in the laminated film in which the low refractive index layer is laminated on the acrylic-based resin film is not more than 30%, the whitening of the first laminate after 80% stretching at 120°C becomes small so that it is possible to obtain a laminate having superior moldability. In the present specification, the Δhaze after 20% stretching at 120°C is measured by the method disclosed in Examples, with the measurement object being a laminated film obtained by laminating the low refractive index layer on the acrylic-based resin film.

The luminous reflectance of the first laminate is, for example, not more than 2.0%, preferably not more than 1.8%, and more preferably not more than 1.6%. In a case where the luminous reflectance of the first laminate is not more than 2.0%, there is an advantage of excellent antireflection performance and excellent visibility at the time of lamination on a display surface. A lower luminous reflectance of the first laminate is preferable, and the luminous reflectance may be 0.0%. The luminous reflectance of the first laminate is measured by the method disclosed in Examples.

The in-plane phase difference (Re) of the first laminate is, for example, not more than 10 nm, preferably not more than 9 nm, more preferably not more than 8 nm, more preferably not more than 7 nm, and particularly preferably not more than 6 nm. In a case where the in-plane phase difference (Re) is not more than 10 nm, the decrease in the contrast of a liquid crystal display device can be suppressed. In the present specification, the in-plane phase difference (Re) is measured by the method disclosed in Examples.

The absolute value of the thickness-direction phase difference (Rth) of the first laminate is, for example, not more than 30 nm, preferably not more than 25 nm, and more preferably not more than 20 nm. In a case where the absolute value of the thickness-direction phase difference (Rth) is not more than 30 nm, the decrease in the contrast of a liquid crystal display device can be suppressed. In the present specification, the thickness-direction phase difference (Rth) is measured by the method disclosed in Examples.

The microcrack width in the direction parallel to the tensile stress during 80% stretching of the first laminate at 120°C (which may hereinafter be referred to simply as "microcrack width of the first laminate") is, for example, not more than 2.0 µm, preferably not more than 1.5 µm, and more preferably not more than 1.0 µm. In a case where the microcrack width of the first laminate is not more than 2.0 µm, there is an advantage of being able to suppress the changes in appearance during molding. The microcrack width of the first laminate is measured by the method disclosed in Examples. In the present specification, "80% stretching at 120°C" can be expressed as a "stretching ratio at 120°C is 80%". In this case, the "stretching ratio" simply indicates an elongation ratio.

At a microcrack part in a direction parallel to the tensile stress during 80% stretching of the first laminate at 120°C, the depth of the groove of the microcrack from the surface of the low refractive index layer side of the laminate (which may be hereinafter referred to simply as "microcrack groove depth of the first laminate") is, for example, not more than 1.0 µm, preferably not more than 0.8 µm, and more preferably not more than 0.5 µm. In a case where the microcrack groove depth of the first laminate is not more than 1.0 µm, there is an advantage of being able to suppress the changes in appearance during molding. The microcrack groove depth of the first laminate is measured by the method disclosed in Examples.

The microcrack width of the first laminate and the microcrack groove depth the microcrack will be described with reference to Fig. 1. Fig. 1 is a view illustrating a TEM image of a laminate in accordance with Embodiment 1 of the present invention after a tensile test. The laminate 4 illustrated in Fig. 1 is constituted by an acrylic-based resin film 1, a hard coat layer 2, and a low refractive index layer 3. The laminate 4 is arranged so that, when a tensile test is conducted by applying a force at 120°C in a direction perpendicular to the lamination direction, a microcrack 5 is generated on the surface of the laminate 4, due to the tensile stress. The width of the tear in the direction parallel to the tensile stress of the generated microcrack 5 is referred to as a microcrack width 6, and the width of the tear in the lamination direction is referred to as a depth 7 of the groove of the microcrack.

The first laminate may have a primer layer on the side, from among the (two) surfaces) of the acrylic-based resin film, opposite from the side on which the hard coat layer is provided. Examples of the composition of the primer layer encompass (a) an ink for use in printing carried out in a post-processing step, (b) an injection resins for use in injection molding, and (c) a resin having favorable adhesiveness to a metal for use in metal deposition. Examples of the resin component encompass a urethane-based resin, an acrylic-based resin, a polyester-based resin, polycarbonate, an epoxy-based resin, a melamine-based resin, and a copolymer of vinyl acetate and vinyl chloride, and a vinyl acetate resin. These resin components may contain, as appropriate, functional groups such as an acid group, an amino group, an epoxy group, an oxetane group, a vinyl group, a hydroxy group, a mercapto group, an isocyanuric group, a silyl group, and salts. Alternatively, the resin component may be used in combination with compounds having these functional groups. By providing such a primer layer, it is possible to strengthen the adhesiveness between the injection resin, ink, and the like and the acrylic resin of the first laminate.

The thickness of the primer layer is preferably 0.5 µm to 10 µm, more preferably 0.5 µm to 5 µm, and most preferably 0.5 µm to 3 µm. In a case where the thickness of the primer layer is not less than 0.5 µm, it is possible to secure the adhesiveness between the injection resin, ink, and the like and the acrylic resin of the first laminate. In a case where the thickness of the primer layer is not more than 10 µm, the productivity is better.

### [1-4. Molded product]

Embodiment 1 of the present invention provides a molded product including the first laminate (hereinafter referred to as "first molded product"). In Embodiment 1 of the present invention, the first molded product is obtained by laminating the first laminate on at least part of the surface of a molded product which at least partially has a non-planar shape.

Specific examples of applications of the first molded product encompass: applications for automobile interiors, such as an instrument panel, an on-vehicle display front panel, a console box, a meter cover, a door lock bezel, a steering wheel, a power window switch base, a center cluster, and a dashboard; applications for automobile exteriors, such as (a) a weather strip, a bumper, a bumper guard, a side mud guard, a body panel, a spoiler, a front grill, a strut mount, a wheel cap, a center pillar, a door mirror, a center ornament, a side mall, a door mall, and a window mall and (b) a window, a head lamp cover, a tail lamp cover, and a windproof component; housings, display windows, buttons etc. of mobile electronic devices such as smartphones, mobile phones, and tablets; televisions, DVD players, stereo units, rice cookers, washing machines, refrigerators, air conditioners, humidifiers, dehumidifiers, electric fans, and other home electronic and electric devices; (a) applications for housings, front panels, buttons, emblems, surface decorative members etc., of furniture products etc. and (b) applications for exterior materials of furniture; applications for building interior materials such as wall surfaces, ceilings, floors, bathtubs, and toilet seats; applications for building exterior materials such as exterior walls such as siding, fences, roofs, gates, and gable boards; applications for surface decorative materials of furniture such as windowpanes, doors, handrails, thresholds, and lintels; applications for optical components such as various displays, lenses, mirrors, goggles, and window glass; and applications for interiors and exteriors of vehicles other than automobiles, such as trains, aircrafts, and ships.

Using the first laminate makes it possible to easily produce a molded product which (a) has a complex stereoscopic shape and (b) excellent appearance with controlled surface hardness, abrasion resistance, chemical resistance, an antifouling property, a reflection characteristic, and anti-dazzling property. For this reason, the first molded product is preferably used for, among the above applications, for example, an on-vehicle display front panel having a planar shape, a curved shape and/or a stereoscopic shape. Therefore, Embodiment 1 of the present invention provides an on-vehicle display front panel including the first molded product.

### [2. Embodiment 2]

Embodiment 2 of the present invention relates to: a laminate that contains an acrylic-based resin film as a base material; and a method for producing the laminate.

As described above, a method for forming a functional layer on a film base material by a technique such as coating is used as a method for further imparting, to the decoration and protection film including an acrylic-based resin film, functionalities.

For example, Patent Literature 4 discloses, for example, an anti-dazzling and antireflection film for insert molding, having an anti-dazzling hard coat layer on a thermoplastic transparent base material film and including, as the outermost surface layer on the anti-dazzling hard coat layer side on the thermoplastic transparent base material film, a low refractive index layer that contains a specific component at a specific concentration.

Patent Literature 5 discloses an optical laminated film including a support, an easily-adhesive layer that is provided on one surface of the support, and a transparent layer that is provided on the other surface of the support and that is constituted by a light-transmissive resin, in which the transparent layer contains light-transmissive particles, the volume-average particle size r of the light-transmissive particles satisfies 0.4 µm ≤ r ≤ 3.0 µm, the sum S of the light-transmissive particles satisfies 30 mg/m² ≤ S ≤ 500 mg/m², and the average thickness t of the transparent layer satisfies r/4 ≤ t < r.

However, the technique disclosed in Patent Literatures 4 and 5 did not have sufficient performance in terms of simultaneous achievement the moldability of the laminate and the functionality of the laminate, such as surface hardness and an anti-dazzling property of the laminate surface, and there is room for further improvement.

In view of the above, it is an object of an embodiment (Embodiment 2) of the present invention to provide: a laminate that has excellent moldability, excellent surface hardness, and an excellent anti-dazzling property and that contains an acrylic-based resin film; and a method for producing the laminate.

As a result of conducting diligent research in order to attain the above object, the inventors of the present invention for the first time found that it is possible to obtain a laminate that has excellent moldability, excellent surface hardness, and an excellent anti-dazzling property by using a hard coat layer containing specific particles and having specific physical properties in a laminate constituted by an acrylic-based resin film and a hard coat layer, etc. Thus, the inventors of the present invention accomplished an embodiment (Embodiment 2) of the present invention.

Therefore, an aspect of Embodiment 2 of the present invention is a method for producing a laminate, including: a hard coat layer forming step (A2) of irradiating a resin layer that has been applied to at least one side of an acrylic-based resin film and that contains a urethane acrylate resin and particles with an active energy ray to cure the resin layer that contains said urethane acrylate resin and the particles in which the acrylic-based resin film has a tensile breaking elongation of not less than 170% at 120°C, the particles are contained in an amount of 2.0% by weight to 5.0% by weight with respect to the hard coat layer that has been cured, d ≤ r is satisfied, where r (µm) is an average dispersed particle size of the particles, and d (µm) is a thickness of the hard coat layer, the laminate has a pencil hardness of not less than H, a haze of not less than 3%, and a crack elongation of not less than 170% at 120°C, and a laminated film obtained by laminating, on the acrylic-based resin film, a resin layer not containing the particles has a crack elongation of not less than 80% at 120°C.a step (A2) of irradiating, with an active energy ray, a resin layer that has been applied to at least one side of an acrylic-based resin film and that contains a urethane acrylate resin and particles to cure the resin layer that contains the urethane acrylate resin and the particles, so as to form a hard coat layer, in which the acrylic-based resin film has a tensile breaking elongation of not less than 170% at 120°C, the particles are contained in an amount of 2.0% by weight to 5.0% by weight with respect to the hard coat layer that has been cured, d ≤ r is satisfied, where r (µm) is an average dispersed particle size of the particles, and d (µm) is a thickness of the hard coat layer, the laminate has a pencil hardness of not less than H, a haze of not less than 3%, and a crack elongation of not less than 170% at 120°C, and a laminated film obtained by laminating, on the acrylic-based resin film, a resin layer not containing the particles has a crack elongation of not less than 80% at 120°C.

In addition, an aspect of Embodiment 2 of the present invention is a laminate including: an acrylic-based resin film; and a hard coat layer that is laminated on at least one side of the acrylic-based resin film, in which the acrylic-based resin film has a tensile breaking elongation of not less than 170% at 120°C, the hard coat layer contains a urethane acrylate resin and particles, d ≤ r is satisfied, where r (µm) is an average dispersed particle size of the particles, and d (µm) is a thickness of the hard coat layer, the laminate has a pencil hardness of not less than H and a haze of not less than 3%, and a laminated film obtained by laminating, on the acrylic-based resin film, the resin layer not containing the particles has a crack elongation of not less than 80% at 120°C.

With an aspect of Embodiment 2 of the present invention, it is possible to provide: a laminate that has excellent moldability, excellent surface hardness, and an excellent anti-dazzling property and that contains an acrylic-based resin film; and a method for producing the laminate.

The following description will discuss Embodiment 2. For matters other than those detailed below, the description of Embodiment 1 will apply as appropriate.

### [2-1. Overview of Embodiment 2 of present invention]

A method for producing a laminate in accordance with Embodiment 2 of the present invention (hereinafter referred to as "second laminate production method") includes: a hard coat layer forming step (A2) of irradiating a resin layer that has been applied to at least one side of an acrylic-based resin film and that contains a urethane acrylate resin and particles with an active energy ray to cure the resin layer that contains said urethane acrylate resin and the particles wherein the acrylic-based resin film has a tensile breaking elongation of not less than 170% at 120°C, the particles are contained in an amount of 2.0% by weight to 5.0% by weight with respect to the hard coat layer that has been cured, d ≤ r is satisfied, where r (µm) is an average dispersed particle size of the particles, and d (µm) is a thickness of the hard coat layer, the laminate has a pencil hardness of not less than H, a haze of not less than 3%, and a crack elongation of not less than 170% at 120°C, and a laminated film obtained by laminating, on the acrylic-based resin film, a resin layer not containing the particles has a crack elongation of not less than 80% at 120°C. A laminate in accordance with Embodiment 2 of the present invention (hereinafter referred to as "second laminate") includes: an acrylic-based resin film; and a hard coat layer that is laminated on at least one side of the acrylic-based resin film, in which the acrylic-based resin film has a tensile breaking elongation of not less than 170% at 120°C, the hard coat layer contains a urethane acrylate resin and particles, d ≤ r is satisfied, where r (µm) is an average dispersed particle size of the particles, and d (µm) is a thickness of the hard coat layer, the laminate has a pencil hardness of not less than H and a haze of not less than 3%, and a laminated film obtained by laminating, on the acrylic-based resin film, the resin layer not containing the particles has a crack elongation of not less than 80% at 120°C.

In the present specification, the laminate obtained by the laminate production method in accordance with Embodiment 2 and the laminate in accordance with Embodiment 2 may both be referred to as "second laminate".

The laminate obtained by the above second laminate production method has surface hardness and can be said to have excellent surface hardness. In addition, the laminate obtained by the second laminate production method has an anti-dazzling property and can be said to have an excellent anti-dazzling property. A method for evaluating the anti-dazzling property of the laminate in the present specification will be described later in detail in Examples. The laminate obtained by the second laminate production method has excellent moldability.

As described above, an anti-dazzling film and an antireflection film are required to have greater moldability than before, as films for an on-vehicle display whose size and curvature are increasing in recent years.

However, Patent Literature 4 discloses only a film of a large and planar shape, and does not disclose a technique for attaining "moldability" which is one of the objects of Embodiment 2. Patent Literature 5 discloses a constituent element in which the dispersed particle size of the anti-dazzling particles is larger than the thickness of the anti-dazzling particle-containing layer. However, Patent Literature 5 does not disclose a technical requirement that a resin layer has a large crack elongation. Patent Literature 5 also does not disclose a feature such as "moldability" or "little stretch-induced whitening". That is, with the conventional techniques, no laminates that satisfy the requirements such as moldability, surface hardness, and an anti-dazzling property have been found, and there is room for further improvement.

Therefore, while mainly conducting research on improving the moldability, surface hardness, and an anti-dazzling property of the laminate, the inventors of the present invention for the first time found that, by (i) causing the hard coat layer and the refractive index adjustment layer (such as low refractive index layer) etc. in the laminate to have specific physical properties and states and (ii) controlling the dispersion state of the particles in the hard coat layer, it is possible to obtain a laminate, peeling off and cracking etc. of the functional layer of which do not occur even when the laminate is laminated on a stereoscopic surface of a large molded product and which therefore has excellent moldability, excellent surface hardness, and an excellent anti-dazzling property. In addition, the inventors of the present invention found that the laminate obtained by the above method can solve a problem of whitening of the stretching part in addition to the problem of moldability.

Conventionally, in a laminate for molding that has a functional layer having surface hardness, an anti-dazzling property, and an antireflection property, there are issues such as peeling off and cracking of the coating layer and breaking of the film at a part that is stretched with molding, and add to these, there are further issues regarding whitening of the stretching part as follows: (1) In a hard coat layer containing anti-dazzling particles in the laminate, the hard coat layer sometimes undergoes remarkable whitening when the laminate is stretched with molding. (2) The low refractive index layer located on the outermost surface of the laminate sometimes undergoes whitening when the laminate is stretched.

In the process of conducting diligent research on these issues, the inventors of the present invention successfully obtained the knowledge below.

(1) The resin for use in the hard coat layer in the laminate is designed (or selected) to have a high crack elongation during stretching, and the thickness of the hard coat layer, the amount of particles and the dispersion state of the particles are controlled. It was found that during the process of stretching the laminate, the fine cleavages of the surface of the hard coat layer around the particles dispersed in the hard coat layer can be suppressed by the above operation, and a remarkable whitening of the hard coat layer during stretching could be prevented. More specifically, (a) a resin for use in the hard coat layer in the laminate is designed (or selected) to have a high degree of crack elongation during stretching and (b) (b-1) the size of the region (dispersion domain) in which particles (anti-dazzling particles) contained in the hard coat layer are distributed in the form of single particle or a plurality of agglutinated particles is designed to be approximately the same as or larger than the thickness of the hard coat layer and (b-2) a dispersion form in which the dispersion domain of at least part of the particles (anti-dazzling particles) is partially exposed on the surface of the hard coat layer. It was found that, by the above operation, during the process of stretching the laminate the generation of the cleavages and the generation of cracks on the surface of the hard coat layer at the periphery of the dispersion domain of the particles (anti-dazzling particles) can be suppressed, and remarkable whitening during stretching can be prevented.
(2) It was found that one of the causes of whitening of the low refractive index layer is that, on the surface of the low refractive index layer located on the outermost surface of the laminate, a fine microcrack that does not lead to a crack of a visually distinguishable size occurs during stretching. It was found that the whitening of the low refractive index layer can be improved by designing (or selecting) the resin for use in the hard coat layer in the laminate to have a high degree of crack elongation during stretching and by adjusting the conditions during the production of the hard coat layer as appropriate. In light of the fact that the cause of whitening is a microcrack in the low refractive index layer, it is surprising that, by exercising ingenuity on a hard coat layer located under the low refractive index layer, it was possible to improve not only the moldability of the laminate but also the whitening of the stretched part resulting from microcracks in the low refractive index layer.

Thus, there has not been any previous report on a laminate which has excellent moldability, excellent surface hardness, and an excellent anti-dazzling property constituted by an acrylic-based resin film and a hard coat layer, or an acrylic-based resin film, a hard coat layer, and a low refractive index layer. Therefore the second laminate production method is an extremely excellent technique. The following description will discuss the present laminate production method.

In Embodiment 2, the "laminate" is intended to mean a product (laminated product) which includes a hard coat layer containing particles. A product (laminated product) which includes no hard coat layer or a product (laminated product) in which the hard coat layer contains no particles will be referred to as "laminated film". More specifically, in Embodiment 2, for example, a "laminate" is intended to mean (1) a laminated product constituted by an acrylic-based resin film and a hard coat layer containing particles or (2) a laminated product constituted by an acrylic-based resin film, a hard coat layer containing particles, and a low refractive index layer, and a "laminated film" is intended to mean (3) a laminated product constituted by an acrylic-based resin film and a hard coat layer containing no particles or (4) a laminated product constituted by an acrylic-based resin film and a low refractive index layer.

In some cases of a curable resin composition which constitutes the hard coat layer in the second laminate, the composition may be required to have not only improved surface hardness of the hard coat layer but also high crack elongation not to cause breaking or remarkable whitening with stretching under secondary molding into the shape of the molded product. However, as described above, conventionally, surface hardness and abrasion resistance are opposing properties against deformability and stretchability, and these are not easy to attain simultaneously.

Examples of a method for providing a curable resin for such a hard coat with high stretchability during secondary molding while maintaining hardness encompass the above-described methods (1) to (3). The methods (1) to (3) may be used alone or in combination as appropriate with respect to the hard coat layer in the second laminate, using, for example, techniques (1) to (3).

### [2-2. Second laminate production method]

The second laminate production method includes the following step (A2). · Step (A2): A hard coat layer forming step (A2) of irradiating a resin layer that has been applied to at least one side of an acrylic-based resin film and that contains a urethane acrylate resin and particles with an active energy ray to cure the resin layer that contains said urethane acrylate resin and the particles.

In Embodiment 2 of the present invention, the second laminate production method preferably further includes the following step (B2).
· Step (B2): A step of applying a coating solution containing an acrylate-based resin that contains hollow fine silica particles having a particle size of less than 100 nm in an amount of not less than 40% onto the hard coat layer obtained in the step (A2), drying the coating solution, and irradiating a resultant resin layer that contains the acrylate-based resin with an active energy ray to cure the resin layer that contains the acrylate-based resin, so as to form a low refractive index layer.

In the step (A2), a resin layer that has been applied to at least one side of an acrylic-based resin film and that contains a urethane acrylate resin and particles is irradiated with an active energy ray to cure the resin layer that contains the urethane acrylate resin and the particles, so as to form a hard coat layer. In the step (B2), the resin layer containing the acrylate-based resin is, in a solution state, applied onto the hard coat layer that was formed in the step (A2) and that contains the cured urethane acrylate resin. The resin layer is then irradiated with an active energy ray so as to be cured. This forms a low refractive index layer.

The second laminate production method further includes the following features in addition to the step (A2) and the optional step (B2).
· The acrylic-based resin film has a tensile breaking elongation of not less than 170% at 120°C.
· The particles are contained in an amount of 2.0% by weight to 5.0% by weight with respect to the hard coat layer that has been cured, and d ≤ r is satisfied, where r (µm) is an average dispersed particle size of the particles, and d (µm) is a thickness of the hard coat layer.
· The laminate has a pencil hardness of not less than H, a haze of not less than 3%, and a crack elongation of not less than 170% at 120°C.
· A laminated film obtained by laminating, on the acrylic-based resin film, the resin layer not containing the particles has a crack elongation of not less than 80% at 120°C.

In order for the laminate obtained by the second laminate production method to have, together with a high degree of surface hardness, a high degree of crack elongation at 120°C and a low whitening characteristic of the stretching part, it is preferable that the hard coat layer and the low refractive index layer are favorably adhering to each other. In general, a low refractive index layer often contains a rigid filler such as hollow silica, and is lower in crack elongation than the hard coat layer in many cases. Therefore, there is a possibility that cracks and microcracks may occur at a stretching ratio lower than the crack elongation of the hard coat layer alone. At this time, if the adhesion between the hard coat layer and the low refractive index layer is favorable, the opening width of the microcrack that is generated in the low refractive index layer becomes, for example, such a fine width as not more than 1 µm, and whitening is less likely to be produced by stretching.

In order to improve the adhesion between the hard coat layer and the low refractive index layer, for example, the following (a) and/or (b) are preferable : (a) When the resin layer which will become a low refractive index layer is applied in the solution state in the step (B2), a certain degree of the applied resin layer (low refractive index layer) impregnates in the hard coat layer, provided that the interface between the two layers in the final form does not become unclear so as to impair the antireflection property; and (b) When the resin layer (low refractive index layer) after the coating is cured by the irradiation with an active energy ray, the acrylate functional group remaining after the curing of the hard coat layer reacts with the resin layer (low refractive index layer) to be cured, and a chemical bond is formed at the interface between the hard coat layer and the low refractive index layer to be finally obtained.

For this reason, in the step (A2) for example, it is preferable that the resin layer containing the urethane acrylate resin that forms the hard coat layer is not completely cured, that the crosslinking density is slightly low and that the unreacted acrylate group is caused to partially remain. Furthermore, in the step (B2), the resin layer containing the acrylate-based resin that forms the low refractive index layer is applied in a solution state and optionally dried, in order to impregnate the hard coat layer with the resin layer containing the acrylate-based resin to a certain extent, it is preferable to, for example, (a) adjust the application condition and the drying condition as appropriate and/or (b) use a certain amount of a solvent with a high boiling point which is slow to dry as the solvent used in the solution.

In the second laminate production method, the tensile breaking elongation of the acrylic-based resin film in the laminate at 120°C is not less than 170%, preferably not less than 180%, and more preferably not less than 190%. In a case where the tensile breaking elongation of the acrylic-based resin film at 120°C is not less than 170%, there is an advantage of excellent shape followability in molding. In addition, in the second laminate production method, the upper limit of the tensile breaking elongation is not particularly limited, but is, for example, not more than 350% and preferably not more than 300%, from the viewpoint of improving the tensile strength.

In the second laminate production method, the pencil hardness of the laminate is not less than H, preferably not less than 2H, and more preferably not less than 3H. In a case where the pencil hardness of the laminate is not less than H, there is an advantage that a scratch is less likely to be made.

In the second laminate production method, the haze of the laminate is not less than 3.0%, preferably not less than 3.5%, more preferably not less than 4.0%, and more preferably not less than 4.5%. The second laminate having a haze of not less than 3.0% brings about an advantage of having an excellent anti-dazzling property. It should be noted that the haze of the laminate is measured by the method disclosed in Examples.

In the second laminate production method, the crack elongation of the laminate at 120°C is not less than 80%, preferably not less than 90%, and more preferably not less than 100%. In a case where the crack elongation of the laminate at 120°C is not less than 80%, there is an advantage of achieving excellent shape followability during molding. In addition, in the second laminate production method, the upper limit of the crack elongation is not particularly limited, but, from the viewpoint of improving the surface hardness and wear resistance, the upper limit is, for example, not more than 350% and preferably not more than 300%. In the present specification, the term "crack elongation of a laminate at 120°C" is intended to mean an elongation at which a crack occurs in the coating layer by conducting a tensile test of the laminate in a thermoregulated bath at 120°C. In the present specification, the crack elongation of the laminate at 120°C is measured by the method described in Examples.

In the second laminate production method, the crack elongation, at 120°C, of the laminated film obtained by laminating a resin layer not containing the particles on the acrylic-based resin film (hereinafter also referred to as "particle-free laminated film") is not less than 80%, preferably not less than 90%, and more preferably not less than 100%. In a case where the crack elongation of the particle-free laminated film at 120°C is not less than 80%, there is an advantage of achieving excellent shape followability during molding of the laminate and suppressed whitening of the part that is stretched with molding. In addition, the upper limit of crack elongation of the particle-free laminated film at 120°C is not particularly limited, but is, for example, not more than 200% and preferably not more than 180% from the viewpoint of improving the surface hardness and/or the wear resistance. The crack elongation of the particle-free laminated film at 120°C is measured by the method disclosed in Examples.

### (Acrylic-based resin film)

Each aspect of the acrylic-based resin film in Embodiment 2 is identical to that described in the section (Acrylic-based resin film) in Embodiment 1. Therefore, such descriptions apply and are not repeated here.

### (Hard coat layer)

In the second laminate production method, the hard coat layer is a functional layer that is laminated on at least one side of the acrylic-based resin film and that contains a urethane acrylate resin and particles . The hard coat layer may be laminated on one side of the acrylic-based resin film or may be laminated on both sides thereof.

In the second laminate production method, the particles are contained in the hard coat layer in an amount of 2.0% by weight to 5.0% by weight with respect to the hard coat layer that has been cured, and d ≤ r is satisfied, where r (µm) is an average dispersed particle size of the particles, and d (µm) is a thickness of the hard coat layer.

Examples of the hard coat layer encompass, without any particular limitations, various hard coat layers that have conventionally been provided in, for example, various functional films and resin molded products and that contain a urethane acrylate resin.

### <Urethane acrylate resin>

Each aspect of the urethane acrylate resin is identical to that described in the section <Urethane acrylate resin> in Embodiment 1. Therefore, such descriptions apply and are not repeated here.

### <Particles>

In the second laminate production method, the particles are contained in the hard coat layer, thereby, it is possible to obtain a laminate that has an excellent anti-dazzling property and contains an acrylic-based resin film.

For particles blended in the hard coat layer for the purpose of providing an anti-dazzling property, etc., the following properties can be adjusted as appropriate in order to, for example, to obtain a balance between various characteristics such as desired anti-dazzling property, sharpness of transmission image, glaring, jet-black feeling on the surface, surface hardness, slipping property, and an antistatic property, within the range of known techniques in which the effects of the present invention are not compromised by adjusting properties such as the type of the material of the particles, the dosage of the particles, the type of solvent in which the particles are to be dispersed, the particle size, the dispersed particle size, the thickness of the hard coat layer, the relative refractive index difference from the hard coat base material, and the affinity and reactivity between the particle surface and the hard coat base material or the solvent.

The type of material of the particles blended in the hard coat layer is not particularly limited, provided that the effects of the present invention are brought about. Examples of the material of the particles to be blended in the hard coat layer encompass (a) inorganic particles such as silica, alumina, glass beads or flakes, mica, clay, titanium oxide, zinc oxide, zirconia, and metal particles and/or (b) crosslinked organic resin particles containing an alkyl (meth)acrylate unit, an aromatic vinyl unit, a siloxane unit, and the like as main components, and (c) core-shell type multilayer structural resin particles. From the viewpoint of the ease of obtainment and the easy design of an anti-dazzling property according to the use, the particles are preferably inorganic oxidized particles (such as silica, alumina, titanium oxide, zinc oxide, and zirconia) and/or crosslinked organic resin particles, and more preferably at least one selected from the group consisting of silica, alumina, zirconia, a crosslinked silicone resin, a crosslinked acrylic resin, and a crosslinked aromatic vinyl resin. In addition, silica particles, alumina particles, and crosslinked organic resin particles are particularly preferable from the viewpoint of a balance of physical properties such as an anti-dazzling property, dispersibility, and surface hardness. From the viewpoint of controlling dispersibility, these particles can be subjected to, for example, a surface treatment and/or a graft polymerization treatment by a known method such as the use of a reactive monomer or a silane coupling agent which may have a reactive substituent, a plasma treatment, and a corona treatment. At least part of the particles preferably contain, on the surface thereof, a reactive functional group which has reactivity with a urethane acrylate resin. This is because the interfacial adhesiveness between the particles and the hard coat layer is improved, and the dispersibility of the particles, cracks and/or whitening during stretching may be improved. Examples of the reactive functional group having reactivity with a urethane acrylate resin encompass: (a) radical-reactive functional groups such as a vinyl group, a (meth)acryloyl group; (b) ionic functional groups such as an epoxy group, an oxetane group, a hydroxy group, a carboxyl group, a mercapto group, an isocyanate group, a hydroxy group, and an amino group; and (c) moisture-curable functional groups such as a silyl group and an alkoxysilyl group.

The particles contained in the hard coat layer satisfy d ≤ r, where r (µm) is an average dispersed particle size of the particles, and d (µm) is a thickness of the hard coat layer. That is, the particles contained in the hard coat layer have an average dispersed particle size that is identical to or large than the thickness of the hard coat layer. In a case where the average dispersed particle size of the particles contained in the hard coat layer is less than the thickness of the hard coat layer, the dispersed particles may be exposed on the surface of the hard coat layer result from a local cleavage and/or crack of the hard coat layer may occur by stretching at a part around the dispersed particles where the thickness of the hard coat is thin. This presumably causes a large change in the state of the hard coat surface before and after the stretching (such as color difference, haze, and smoothness), and this is presumably observed as whitening at the stretched part. Meanwhile, it is presumed that in a case where, as described above, the average dispersed particle size of the particles contained in the hard coat layer is approximately identical to or larger than the thickness of the hard coat layer, at least part of the particles is exposed on the surface of the hard coat layer even before the stretching so that a change in the state of the hard coat surface before and after the stretching (such as color difference, haze, glossiness, and smoothness) tends to be small and advantageously causes whitening after stretching to be little.

In the present specification, "particles", depending on the size of the primary particles, may be dispersed in the form of primary particles or may be dispersed in the form of a plurality of particles agglutinated. The size of a region (dispersion domain) in which these particles or the agglutinate thereof is distributed is defined as "average dispersed particle size". Those with a large primary particle size may have an average dispersed particle size and a primary (basic) particle size which are identical.

The average dispersed particle size of the particles (such as silica particles) is not particularly limited, provided that the effects of the present invention are brought about, and is, for example, 0.1 µm to 50.0 µm, and may be 0.2 µm to 25.0 µm, 0.5 µm to 10 µm, 1.0 µm to 4.0 µm, 1.2 µm to 3.8 µm, 1.4 µm to 3.6 µm, and the like. The average dispersed particle size of the particles (such as silica particles) is measured by the method disclosed in Examples.

In the present laminate production method, the amount of the particles contained in the hard coat layer is not particularly limited, provided the effects of an embodiment of the present invention are brought about. For example, the amount is 0.1% by weight to 30.0% by weight, and may be 0.5% by weight to 20.0% by weight, 1.0% by weight to 15.0% by weight, 2.0% by weight to 5.0% by weight, 2.2% by weight to 4.8% by weight, 2.4% by weight to 4.6% by weight, and the like.

In the second laminate production method, the thickness of the hard coat layer is not particularly limited, provided that the effects of the present invention are brought about. For example, the thickness is 0.2 µm to 3.0 µm, and may be 0.3 µm to 2.9 µm, 0.4 µm to 2.8 µm, and the like. The thickness of the hard coat layer is measured by the method disclosed in Examples.

### <Others>

In a second laminate production method, the hard coat layer of the laminate can be used in combination with another component in addition to the urethane acrylate resin. Examples of the component other than the urethane acrylate resin encompass: monomers, oligomers, and resins which have monofunctional or polyfunctional radical reactive functional groups (such as (meth)acrylate, epoxy acrylate-based monomer, polyester acrylate, silicone acrylate, polycarbonate acrylate, and polyacrylic acrylate); and a mixture of these, and these other components can be used in combination. The urethane acrylate resin can be used in combination with, for example, a composition containing (a) a hydrolyzed condensate of two- to four-functional silane compounds and/or (b) monomers, oligomers, and resins which have a cationic curing and/or anionic curing functional group such as an epoxy group and an oxetane group or a mixture of these. The urethane acrylate resin can be used alone as a component used to form the hard coat layer. Alternatively, in addition to the urethane acrylate resin, two or more of the above other components can be added by mixing.

Each aspect of the (meth)acrylate, the epoxy acrylate-based monomer, the hydroxyl group-containing (meth)acrylate, the polyvalent isocyanate, the polyhydric alcohol, the organotinbased urethanization catalyst, and the composition constituted by the hydrolyzed condensate of the silane compound is identical to that described in the section <Others> in Embodiment 1. Therefore, such descriptions apply and are not repeated here.

Each aspect pertaining to the method for curing the resin composition during the formation of the hard coat layer (such as a photopolymerization initiator, a photo cation generator, and a photo anion generator) is identical to that described in the section <Others> in Embodiment 1. Therefore, such descriptions apply and are not repeated here.

In a case where the hard coat layer is formed by curing a resin layer (coating film) constituted by a curable composition, various known leveling agents can be blended in the curable composition for the purpose of improving, for example, applicability, abrasion resistance and an antifouling property after curing. The leveling agent is identical to that described in the section <Others> in Embodiment 1. Therefore, such descriptions apply and are not repeated here.

In a case of forming the hard coat layer by applying a curable composition, various types of additives, such as ultraviolet ray absorbing agents, light stabilizers, defoaming agents, antioxidants, light diffusing agents, matting agents, antifouling agents, lubricants, colorants (e.g. pigments and dyes), organic particles, inorganic fine particles, and antistatic agents, may be added to the curable composition as necessary. The additives are not limited to these.

In order to impart suitable applicability to the curable composition, an organic solvent is usually blended. The organic solvent is identical to that described in the section <Others> in Embodiment 1. Therefore, such descriptions apply and are not repeated here.

The method for applying the curable composition onto the main surface of the acrylic-based resin film which is a base material film is identical to that described in the section <Others> in Embodiment 1. Therefore, such descriptions apply and are not repeated here.

After the curable composition, described above, for the formation of the hard coat layer is applied to the surface of the acrylic-based resin film which is a base material film, the resultant resin layer is cured using light such as ultraviolet irradiation. This forms a hard coat layer. After the curable composition for the formation of the hard coat layer is applied to the surface of the acrylic-based resin film, the organic solvent may be optionally removed from the resin layer (coating film) by drying.

The drying temperature of the resin layer (coating film) when the organic solvent is removed by drying is identical to that described in the section <Others> in Embodiment 1. Therefore, such descriptions apply and are not repeated here.

Each aspect of the wavelength of ultraviolet light for irradiation, the cumulative amount of ultraviolet light (UV), and the irradiation device for ultraviolet exposure light during the curing of the resin layer (coating film) is identical to that described in the section <Others> in Embodiment 1. Therefore, such descriptions apply and are not repeated here.

A commercially available product may be used for the hard coat layer-forming composition. The commercially available product is identical to that described in the section <Others> in Embodiment 1. Therefore, such descriptions apply and are not repeated here.

In Embodiment 2 of the present invention, it is possible to further add inorganic particles and/or metal particles. Examples of such inorganic particles and metal particles encompass, but are not particularly limited to, silica, alumina, titanium oxide, zinc oxide, zirconia, graphene, nanocarbon, carbon black, nanodiamond, mica, barium titanate, boron nitride, metal silver, and metal copper. These particles may be added for the purpose of improving the wear resistance and the like of the hard coat layer, or may be added for further providing an anti-dazzling property. In addition, it is possible to use the following in combination: inorganic particles and/or metal particles which have the function of improving wear resistance; and inorganic particles and/or metal particles which have the function of providing an anti-dazzling property. These particles may be used without a surface treatment. Alternatively, these particles may be subjected to a surface treatment by a known method in advance for the purpose of controlling a dispersion state such that the affinity with the hard coat layer is controlled as appropriate.

### (Low refractive index layer)

In the second laminate production method, it is preferable to further include a low refractive index layer on the hard coat layer which contains an acrylate-based resin containing not less than 40% of hollow fine silica particles having a particle size of less than 100 nm. The low refractive index layer constitutes an antireflection layer. Each aspect of the low refractive index layer is identical to that described in the section (low refractive index layer) in Embodiment 1. Therefore, such descriptions apply and are not repeated here.

### <Other functional layers>

The second laminate can have a functional layer other than the ones described above. The other functional layers are identical to those described in the section <Others> in Embodiment 1. Therefore, such descriptions apply and are not repeated here.

### (Others)

In Embodiment 2, (a) the cumulative amount of ultraviolet light (UV) in the step (A2) and (b) the cooling roller temperature in the step (A2) are respectively identical to (a) the cumulative amount of ultraviolet light (UV) in the step (A1) and (b) the cooling roller temperature in the step (A1) which were described in the section (Others) in Embodiment 1. Therefore, such descriptions apply and are not repeated here. In Embodiment 2, for the conditions and the like in the step (A2) other than those described above, the descriptions in the section (Hard coat layer) in Embodiment 2 are applied.

In the step (B2) of Embodiment 2, an acrylate-based resin that contains hollow fine silica particles having a particle size of less than 100 nm in an amount of not less than 40% is applied onto the hard coat layer obtained in the step (A2), and a resultant resin layer that contains the acrylate-based resin is irradiated with an active energy ray to cure the resin layer that contains the acrylate-based resin, so as to form a low refractive index layer.

In Embodiment 2, (a) the cumulative amount of ultraviolet light (UV) in the step (B2) and (b) the cooling roller temperature in the step (B2) are respectively identical to (a) the cumulative amount of ultraviolet light (UV) in the step (B1) and (b) the cooling roller temperature in the step (B1) which were described in the section (Others) in Embodiment 1. Therefore, such descriptions apply and are not repeated here. In Embodiment 2, for the conditions and the like in the step (B2) other than those described above, the descriptions in the section (Hard coat layer) in Embodiment 2 are applied.

Embodiment 2 of the present invention also provides a laminate production method including: a step (B2') of adding, before the step (B2), a solvent to an acrylate-based resin which is a material for the low refractive index layer, so as to prepare the acrylate-based resin that contains hollow fine silica particles having a particle size of less than 100 nm in an amount of not less than 40%, in which the solvent contains one or more types of solvents, and a solvent having a highest boiling point has a boiling point of 115°C to 180°C. It can also be said that in the steps (B2) and (B2'), the "acrylate-based resin containing hollow fine silica particles having a particle size of less than 100 nm in an amount of not less than 40%" is the "low refractive index layer-forming composition".

In Embodiment 2, (a) the boiling point of the solvent having the highest boiling point in the step (B2'), (b) the solvent used in the step (B2'), and (c) the method for adding a solvent to an acrylate-based resin, so as to prepare the acrylate-based resin that contains hollow fine silica particles having a particle size of less than 100 nm in an amount of not less than 40% in the step (B2') are respectively identical to (a) the boiling point of the solvent having the highest boiling point in the step (B1'), the solvent used in the step (B1'), and (c) the method for adding a solvent to an acrylate-based resin, so as to prepare the acrylate-based resin that contains hollow fine silica particles having a particle size of less than 100 nm in an amount of not less than 40% in the step (12'), which were described in the section (Others) in Embodiment 1. Therefore, such descriptions apply and are not repeated here.

### [3. Laminate]

The second laminate contains an acrylic-based resin film and a hard coat layer that is laminated on at least one side of the acrylic-based resin film. More specifically, the second laminate contains: an acrylic-based resin film; and a hard coat layer that is laminated on at least one side of the acrylic-based resin film, in which the acrylic-based resin film has a tensile breaking elongation of not less than 170% at 120°C, the hard coat layer contains a urethane acrylate resin and particles, d ≤ r is satisfied, where r (µm) is an average dispersed particle size of the particles, and d (µm) is a thickness of the hard coat layer, the laminate has a pencil hardness of not less than H and a haze of not less than 3%, and a laminated film obtained by laminating, on the acrylic-based resin film, the resin layer not containing the particles has a crack elongation of not less than 80% at 120°C. In a preferable aspect of Embodiment 2 of the present invention, the second laminate further contains a low refractive index layer on the hard coat layer.

### (Laminate)

As described above, the second laminate is constituted by at least a specific acrylic-based resin film and a specific hard coat layer. In a preferable aspect of Embodiment 2 of the present invention, the second laminate is constituted by a specific acrylic-based resin film, a specific hard coat layer, and a specific low refractive index layer.

In Embodiment 2 of the present invention, the second laminate is constituted by the acrylic-based resin film disclosed in the above section (acrylic-based resin film) and the hard coat layer disclosed in the above section (hard coat layer). In addition, in a preferable aspect of Embodiment 2 of the present invention, the second laminate is constituted by the acrylic-based resin film disclosed in the above section (acrylic-based resin film), the hard coat layer disclosed in the above section (hard coat layer), and the low refractive index layer disclosed in the above section (low refractive index layer. The second laminate is preferably obtained by the production method disclosed in the above section [2-2. Second laminate production method].

Fort the matters of the second laminate which are not disclosed in the present section, such as "pencil hardness", "tensile breaking elongation at 120°C", "crack elongation at 120°C", and "haze", the description in the section [2-2. Second laminate production method] is applied.

In a case where the second laminate is constituted by the acrylic-based resin film and the hard coat layer, the Δhaze of the second laminate after 80% stretching at 120°C is, for example, not more than 8.0%, preferably not more than 7.5%, and more preferably not more than 7.0%. In a case where the Δhaze of the second laminate after 80% stretching at 120°C is not more than 8.0%, there is an advantage of suppressing whitening during molding. The Δhaze of the second laminate after 80% stretching at 120°C is measured by the method disclosed in Examples.

In a case where the second laminate is constituted by the acrylic-based resin film, the hard coat layer, and the low refractive index layer, the Δhaze of the second laminate after 80% stretching at 120°C is, for example, not more than 10%, preferably not more than 9.5%, more preferably not more than 9.0%, and more preferably not more than 8.5%. In a case where the Δhaze of the second laminate after 80% stretching at 120°C is not more than 10%, there is an advantage of suppressing whitening during molding. The Δhaze of the second laminate after 80% stretching at 120°C is measured by the method disclosed in Examples.

The luminous reflectance of the second laminate is, for example, not more than 3.0%, preferably not more than 2.8%, and more preferably not more than 2.6%. In a case where the luminous reflectance of the second laminate is not more than 3.0%, there is an advantage of excellent antireflection performance and excellent visibility at the time of lamination on a display surface. A lower luminous reflectance of the second laminate is preferable, and the luminous reflectance may be 0.0%. The luminous reflectance of the second laminate is measured by the method disclosed in Examples.

In the second laminate, (a) the Δhaze after 20% stretching at 120°C in the laminated film in which the low refractive index layer is laminated on the acrylic-based resin film, (b) the in-plane phase difference (Re), and (c) the absolute value of the thickness-direction phase difference (Rth) are respectively identical to (a) the Δhaze after 20% stretching at 120°C in the laminated film in which the low refractive index layer is laminated on the acrylic-based resin film, (b) the in-plane phase difference (Re), and (c) the absolute value of the thickness-direction phase difference (Rth) in the first laminate described in the section (Laminate) in Embodiment 1. Therefore, such descriptions apply and are not repeated here.

The second laminate may have a primer layer on the side, from among the (two) surfaces of the acrylic-based resin film, opposite from the side on which the hard coat layer is provided. The aspects of the primer layer in the second laminate are identical to those of the primer layer in the first laminate described in the section (Laminate) in Embodiment 1. Therefore, such descriptions apply and are not repeated here.

### [2-3. Molded product]

Embodiment 2 of the present invention provides a molded product including the second laminate (hereinafter referred to as "second molded product"). In Embodiment 2 of the present invention, the second molded product is also obtained by laminating the second laminate on at least part of the surface of a molded product which at least partially has a non-planar shape.

Specific examples of the application of the second molded product are identical to those of the application of the first molded product described in the section [1-4. Molded product] in Embodiment 1. Therefore, such descriptions apply and are not repeated here.

Using the second laminate makes it possible to easily produce a molded product which (a) has a complex stereoscopic shape and (b) excellent appearance with controlled surface hardness, abrasion resistance, chemical resistance, an antifouling property, a reflection characteristic, and anti-dazzling property. For this reason, the second molded product is preferably used for, among the applications described in the section [1-4. Molded product] in Embodiment 1, for example, an on-vehicle display front panel having a planar shape, a curved shape and/or a stereoscopic shape. Therefore, Embodiment 2 of the present invention provides an on-vehicle display front panel including the second molded product.

The present invention is not limited to the embodiments, but can be altered within the scope of the claims. The present invention also encompasses, in its technical scope, any embodiment derived by combining technical means disclosed in differing embodiments.

An embodiment of the present invention may be configured as follows.
<X1> A method for producing a laminate, including: a hard coat layer forming step (A1) of irradiating a resin layer that has been applied to at least one side of an acrylic-based resin film and that contains a urethane acrylate resin with an active energy ray to cure the resin layer that contains said urethane acrylate resin and
   a low refractive index layer forming step (B1) of applying an acrylate-based resin that contains hollow fine silica particles having a particle size of less than 100 nm in an amount of not less than 40% onto the hard coat layer obtained in the step (A1) and irradiating a resultant resin layer that contains the acrylate-based resin with an active energy ray to cure the resin layer that contains said acrylate-based resin, in which
   the acrylic-based resin film has a tensile breaking elongation of not less than 170% at 120°C,
   the hard coat layer contains a urethane acrylate resin, and
      the laminate has a crack elongation of not less than 80% at 120°C.
<X2> The method according to <X1>, in which a cumulative light amount in the irradiation with the active energy ray in the step (A1) is 150 mJ/cm² to 500 mJ/cm².
<X3> The method according to <X1> or <X2>, further including: an additional step (B1') to prepare the acrylate-based resin that contains the hollow fine silica particles having a particle size of less than 100 nm in an amount of not less than 40% by adding solvent to the aforementioned acrylate-based resin which is a material for the low refractive index layer before the step (B1), in which
   the solvent contains one or more types of solvents, and a solvent having a highest boiling point among said one or more types of solvents has a boiling point of 115°C to 180°C.
<X4> The method according to any one of <X1> to <X3>, in which in a laminated film obtained by laminating the low refractive index layer on the acrylic-based resin film, a Δhaze after 20% stretching at 120°C is not more than 30%.
<X5> A method for producing a laminate, including: a hard coat layer forming step (A1) of irradiating a resin layer that has been applied to at least one side of an acrylic-based resin film and that contains a urethane acrylate resin with an active energy ray to cure the resin layer that contains said urethane acrylate resin, in which
   the acrylic-based resin film has a tensile breaking elongation of not less than 170% at 120°C, and the hard coat layer contains the urethane acrylate resin, and
   the laminate has a crack elongation of not less than 80% at 120°C.
<X6> A laminate including: an acrylic-based resin film; and a hard coat layer that is laminated on at least one side of the acrylic-based resin film, in which
   the acrylic-based resin film has a tensile breaking elongation of not less than 170% at 120°C,
   the hard coat layer contains a urethane acrylate resin, and
   the laminate has a pencil hardness of not less than H, and a crack elongation of not less than 80% at 120°C.
<X7> The laminate according to <X6>, further including a low refractive index layer on the hard coat layer, in which the low refractive index layer contains an acrylate-based resin that contains hollow fine silica particles having a particle size of less than 100 nm in an amount of not less than 40%.
<X8> The laminate according to <X7>, in which the laminate has a luminous reflectance of not more than 2.0%.
<X9> The laminate according to <X7> or <X8>, in which an in-plane phase difference (Re) is not more than 10 nm, and an absolute value of a thickness-direction phase difference (Rth) is not more than 30 nm.
<X10> The laminate according to any one of <X6> to <X9>, in which a Δhaze is not more than 3.0% when a stretching ratio at 120°C is 80%.
<X11> The laminate according to any one of <X7> to <X10>, in which when a stretching ratio is 80% under stretched at 120°C, a microcrack width in a direction parallel to tensile stress of the low refractive index layer is not more than 2.0 µm.
<X12> The laminate according to any one of <X7> to <X11>, in which when a stretching ratio is 80% under stretched at 120° C, a depth of a groove of a microcrack from a low refractive index layer-side surface of the laminate at a microcrack part in a direction parallel to tensile stress of the low refractive index layer is not more than 1.0 µm.
<X13> A molded product including the laminate according to any one of <X6> to <X12>.
<X14> The molded product according to <X13>, in which the molded product is obtained by laminating the laminate according to any one of <X6> to <X12> on at least part of a surface of a molded product which at least partially has a non-planar shape.

An embodiment of the present invention can also be configured as follows.
<Y1> A method for producing a laminate, including: a hard coat layer forming step (A2) of irradiating a resin layer that has been applied to at least one side of an acrylic-based resin film and that contains a urethane acrylate resin and particles with an active energy ray to cure the resin layer that contains said urethane acrylate resin and the particles, in which
   the acrylic-based resin film has a tensile breaking elongation of not less than 170% at 120°C,
   the particles are contained in an amount of 2.0% by weight to 5.0% by weight with respect to the hard coat layer that has been cured, d ≤ r is satisfied, where r (µm) is an average dispersed particle size of the particles, and d (µm) is a thickness of the hard coat layer,
   the laminate has a pencil hardness of not less than H, a haze of not less than 3%, and a crack elongation of not less than 170% at 120°C, and
   a laminated film obtained by laminating, on the acrylic-based resin film, a resin layer not containing the particles has a crack elongation of not less than 80% at 120°C.
<Y2> The method according to <Y1>, further including the following step (B):
   a low refractive index layer forming step (B) of applying a coating solution containing an acrylate-based resin that contains hollow fine silica particles having a particle size of less than 100 nm in an amount of not less than 40% onto the hard coat layer obtained in the step (A) and irradiating a resultant resin layer that contains the acrylate-based resin with an active energy ray to cure the resin layer that contains said acrylate-based resin.
<Y3> The method according to <Y1> or <Y2>, in which a cumulative light amount in the irradiation with the active energy ray in the step (A) is 150 mJ/cm² to 500 mJ/cm².
<Y4> The method according to <Y2> or <Y3>, further including: an additional step (B1') to prepare the acrylate-based resin that contains the hollow fine silica particles having a particle size of less than 100 nm in an amount of not less than 40% by adding solvent to the aforementioned acrylate-based resin which is a material for the low refractive index layer before the step (B), in which
   the solvent contains one or more types of solvents, and a solvent having a highest boiling point among said one or more types of solvents has a boiling point of 115°C to 180°C.
<Y5> The method according to any one of <Y1> to <Y4>, in which in a laminated film obtained by laminating the low refractive index layer on the acrylic-based resin film, a Δhaze after 20% stretching at 120°C is not more than 30%.
<Y6> A laminate including: an acrylic-based resin film; and a hard coat layer that is laminated on at least one side of the acrylic-based resin film, in which
   the acrylic-based resin film has a tensile breaking elongation of not less than 170% at 120°C,
   the hard coat layer contains a urethane acrylate resin and particles,
   d ≤ r is satisfied, where r (µm) is an average dispersed particle size of the particles, and d (µm) is a thickness of the hard coat layer,
   the laminate has a pencil hardness of not less than H and a haze of not less than 3%, and
   a laminated film obtained by laminating, on the acrylic-based resin film, a resin layer not containing the particles has a crack elongation of not less than 80% at 120°C.
<Y7> The laminate according to <Y6>, in which the particles are silica particles.
<Y8> The laminate according to <Y7>, in which: the hard coat layer contains the silica particles in an amount of 2.0% by weight to 5.0% by weight; and
   an average dispersed particle size of the silica particles is 1.0 µm to 4.0 µm.
<Y9> The laminate according to any one of <Y6> to <Y8>, in which the hard coat layer has a thickness of 0.2 µm to 3.0 µm.
<Y10> The laminate according to any one of <Y6> to <Y9>, in which a Δhaze is not more than 8.0% when a stretching ratio at 120°C is 80%.
<Y11> The laminate according to any one of <Y6> to <Y10>, further including a low refractive index layer on the hard coat layer, in which
   the low refractive index layer contains an acrylate-based resin that contains hollow fine silica particles having a particle size of less than 100 nm in an amount of not less than 40%.
<Y12> The laminate according to <Y11>, in which the laminate has a luminous reflectance of not more than 3.0%.
<Y13> The laminate according to <Y11> or <Y12>, in which a crack elongation at 120°C is not less than 170%.
<Y14> The laminate according to any one of <Y11> to <Y13>, in which a Δhaze is not more than 10% when a stretching ratio at 120°C is 80%.
<Y15> A molded product including the laminate according to any one of <Y6> to <Y14>.

An embodiment of the present invention can also be configured as follows.
<Z1> A method for producing a laminate, including:
   a hard coat layer forming step (A1) of irradiating a resin layer that has been applied to at least one side of an acrylic-based resin film and that contains a urethane acrylate resin with an active energy ray to cure the resin layer that contains said urethane acrylate resin and
   a low refractive index layer forming step (B1) of applying an acrylate-based resin that contains hollow fine silica particles having a particle size of less than 100 nm in an amount of not less than 40% onto the hard coat layer obtained in the step (A1) and irradiating a resultant resin layer that contains the acrylate-based resin with an active energy ray to cure the resin layer that contains said acrylate-based resin, in which

   the acrylic-based resin film has a tensile breaking elongation of not less than 170% at 120°C, and
   the laminate has a crack elongation of not less than 80% at 120°C.
<Z2> The method according to <Z1>, in which: the acrylic-based resin film is obtained by molding an acrylic resin composition that contains a thermoplastic acrylic polymer and polymer particles containing a crosslinked elastomer; and the thermoplastic acrylic polymer is constituted by 50% by mass to 100% by mass of a methyl methacrylate unit and 0% by mass to 50% by mass of another structural unit, and a total amount of the methyl methacrylate unit and said another structural unit in the thermoplastic acrylic polymer is 100% by mass.
<Z3> The method according to <Z2>, in which: the crosslinked elastomer contains not less than 50% by mass of an acrylic ester unit in 100% by mass of the crosslinked elastomer; and the polymer particles are graft copolymer particles that contain the crosslinked elastomer and a graft polymer layer which is located closer to a surface layer than is the crosslinked elastomer.
<Z4> The method according to any one of <Z1> to <Z3>, in which the resin layer that contains the urethane acrylate resin further contains particles.
<Z5> The method according to <Z4>, in which the particles are inorganic oxide particles and/or crosslinked organic resin particles..
<Z6> The method according to <Z4> or <Z5>, in which the particles are at least one selected from the group consisting of silica, alumina, zirconia, a crosslinked silicone resin, a crosslinked acrylic resin, and a crosslinked aromatic vinyl resin.
<Z7> The method according to any one of <Z4> to <Z6>, in which at least part of the particles contains, on a surface thereof, a reactive functional group that has reactivity with a urethane acrylate resin.
<Z8> The method according to any one of <Z4> to <Z7>, in which: the particles are contained in an amount of 2.0% by weight to 5.0% by weight with respect to the hard coat layer that has been cured; d ≤ r is satisfied, where r (µm) is an average dispersed particle size of the particles, and d (µm) is a thickness of the hard coat layer;
   the laminate has a pencil hardness of not less than H, a haze of not less than 3%, and a crack elongation of not less than 170% at 120°C; and
   a laminated film obtained by laminating a resin layer not containing the particles on the acrylic-based resin film has a crack elongation of not less than 80% at 120°C.
<Z9> The method according to any one of <Z1> to <Z8>, in which a cumulative light amount in the irradiation with the active energy ray in the step (A1) is 150 mJ/cm² to 500 mJ/cm².
<Z10> The method according to any one of <Z1> to <Z9>, further including: an additional step (B1') to prepare the acrylate-based resin that contains the hollow fine silica particles having a particle size of less than 100 nm in an amount of not less than 40% by adding solvent to the aforementioned acrylate-based resin which is a material for the low refractive index layer before the step (B1), in which
   the solvent contains one or more types of solvents, and a solvent having a highest boiling point among said one or more types of solvents has a boiling point of 115°C to 180°C.
<Z11> The method according to any one of <Z1> to <Z10>, in which in a laminated film obtained by laminating the low refractive index layer on the acrylic-based resin film, a Δhaze after 20% stretching at 120°C is not more than 30%.
<Z12> A method for producing a laminate, including:
   a hard coat layer forming step (A1) of irradiating a resin layer that has been applied to at least one side of an acrylic-based resin film and that contains a urethane acrylate resin with an active energy ray to cure the resin layer that contains said urethane acrylate resin, in which
   the acrylic-based resin film has a tensile breaking elongation of not less than 170% at 120°C, and the hard coat layer contains the urethane acrylate resin, and
   the laminate has a crack elongation of not less than 80% at 120°C.
<Z13> The method according to <Z12>, in which in the laminate, a Δhaze is less than 8.0% when a stretching ratio is 80% under stretched at 120°C.
<Z14> The method according to <Z12> or <Z13>, in which: the acrylic-based resin film is obtained by molding an acrylic resin composition that contains a thermoplastic acrylic polymer and polymer particles containing a crosslinked elastomer; and the thermoplastic acrylic polymer is constituted by 50% by mass to 100% by mass of a methyl methacrylate unit and 0% by mass to 50% by mass of another structural unit, and a total amount of the methyl methacrylate unit and said another structural unit in the thermoplastic acrylic polymer is 100% by mass.
<Z15> The method according to <Z14>, in which: the crosslinked elastomer contains not less than 50% by mass of an acrylic ester unit in 100% by mass of the crosslinked elastomer; and the polymer particles are graft copolymer particles that contain the crosslinked elastomer and a graft polymer layer which is located closer to a surface layer than is the crosslinked elastomer.
<Z16> A laminate containing: an acrylic-based resin film; and a hard coat layer that is laminated on at least one side of the acrylic-based resin film, in which
   the acrylic-based resin film has a tensile breaking elongation of not less than 170% at 120°C,
   the hard coat layer contains a urethane acrylate resin, and the laminate has a pencil hardness of not less than H, and a crack elongation of not less than 80% at 120°C.
<Z17> The laminate according to <Z16>, in which the hard coat layer further contains particles.
<Z18> The laminate according to <Z17>, in which the particles are inorganic oxide particles and/or crosslinked organic resin particles.
<Z19> The laminate according to <Z17> or <Z18>, in which the particles are at least one selected from the group consisting of silica, alumina, zirconia, a crosslinked silicone resin, a crosslinked acrylic resin, and a crosslinked aromatic vinyl resin.
<Z20> The laminate according to any one of <Z17> to <Z19>, in which at least part of the particles contains, on a surface thereof, a reactive functional group that has reactivity with a urethane acrylate resin.
<Z21> The laminate according to any one of <Z16> to <Z20>, further including a low refractive index layer on the hard coat layer, in which
   the low refractive index layer contains an acrylate-based resin that contains hollow fine silica particles having a particle size of less than 100 nm in an amount of not less than 40%.
<Z22> The laminate according to <Z21>, in which the laminate has a luminous reflectance of not more than 2.0%.
<Z23> The laminate according to <Z21> or <Z22>, in which an in-plane phase difference (Re) is not more than 10 nm, and an absolute value of a thickness-direction phase difference (Rth) is not more than 30 nm.
<Z24> The laminate according to any one of <Z16> to <Z23>, in which a Δhaze is less than 8.0% when a stretching ratio at 120°C is 80%.
<Z25> The laminate according to any one of <Z16> to <Z24>, in which a Δhaze is not more than 3.0% when a stretching ratio at 120°C is 80%.
<Z26> The laminate according to any one of <Z21> to <Z25>, in which when a stretching ratio is 80% under stretched at 120°C, a microcrack width in a direction parallel to tensile stress of the low refractive index layer is not more than 2.0 µm.
<Z27> The laminate according to any one of <Z21> to <Z26>, in which when a stretching ratio is 80% under stretched at 120° C, a depth of a groove of a microcrack from a low refractive index layer-side surface of the laminate at a microcrack part in a direction parallel to tensile stress of the low refractive index layer is not more than 1.0 µm.
<Z28> A molded product including the laminate according to any one of <Z16> to <Z27>.
<Z29> The molded product according to <Z28>, in which the molded product is obtained by laminating the laminate according to any one of <Z16> to <Z27> on at least part of a surface of a molded product which at least partially has a non-planar shape.
<Z30> A method for producing a laminate, including:
   a hard coat layer forming step (A2) of irradiating a resin layer that has been applied to at least one side of an acrylic-based resin film and that contains a urethane acrylate resin and particles with an active energy ray to cure the resin layer that contains said urethane acrylate resin and the particles, in which
   the acrylic-based resin film has a tensile breaking elongation of not less than 170% at 120°C,
   the particles are contained in an amount of 2.0% by weight to 5.0% by weight with respect to the hard coat layer that has been cured, d ≤ r is satisfied, where r (µm) is an average dispersed particle size of the particles, and d (µm) is a thickness of the hard coat layer,
   the laminate has a pencil hardness of not less than H, a haze of not less than 3%, and a crack elongation of not less than 170% at 120°C, and
   a laminated film obtained by laminating, on the acrylic-based resin film, a resin layer not containing the particles has a crack elongation of not less than 80% at 120°C.
<Z31> The method according to <Z30>, in which in the laminate, a Δhaze is less than 8.0% when a stretching ratio at 120°C is 80%.
<Z32> A laminate including: an acrylic-based resin film; and a hard coat layer that is laminated on at least one side of the acrylic-based resin film, in which
   the acrylic-based resin film has a tensile breaking elongation of not less than 170% at 120°C,
   the hard coat layer contains a urethane acrylate resin and particles,
   d ≤ r is satisfied, where r (µm) is an average dispersed particle size of the particles, and d (µm) is a thickness of the hard coat layer,
   the laminate has a pencil hardness of not less than H and a haze of not less than 3%, and
   a laminated film obtained by laminating, on the acrylic-based resin film, a resin layer not containing the particles has a crack elongation of not less than 80% at 120°C.
<Z33> The laminate according to <Z32>, in which in the laminate, a Δhaze is less than 8.0% when a stretching ratio is 80% under stretched at 120°C.

### Examples

### [Example A]

The following description will discuss Embodiment 1 of the present invention in more detail with reference to Example A. However, the present invention is not limited to Example A. It should be noted that, in the following Example A and Comparative Example A, "parts" means "parts by mass", and "%" means "% by mass".

### [Measurement and evaluation methods]

In Example A and Comparative Example A, measurement and evaluation were carried out by the following methods.

### (Measurement of average particle size)

The average particle size of the crosslinked elastomer or the graft copolymer particles dispersed in the aqueous latex was measured using a laser diffraction particle size distribution analyzer (Microtrac particle size distribution analyzer MT3000, manufactured by Nikkiso Co., Ltd.).

### (Glass transition temperature (Tg))

A differential scanning calorimeter (DSC) SSC-5200 manufactured by Seiko Instruments Inc. was used. The temperature of the sample (acrylic-based resin film) was raised to 200°C at a rate of 25°C/min and then held at 200°C for 10 minutes, and was then lowered to 50°C at a rate of 25°C/min (preliminary adjustment). Subsequently, the temperature of the sample was raised to 200°C at a rate of 10°C/min, during which DSC was measured. Derivative values were obtained from the DSC curve (SSDC), and a glass transition temperature of the acrylic-based resin film was obtained from the maximum point of the derivative values.

### (Tensile breaking elongation)

A piece having 10 mm (width) × 100 mm (length) dimensions was cut out from the acrylic-based resin film, and served as a test piece. With use of a Tensilon tensile testing machine (AG-2000D; Shimadzu Corporation) to which a high-temperature bath set at 120°C was attached, the test piece was subjected to measurement under the following conditions: a residual heat time of 2 minutes, a chuck-to-chuck distance of 40 mm, and a tensile speed of 200 mm/min. The elongation at which the acrylic-based resin film broke was determined as a tensile breaking elongation.

The value of the tensile breaking elongation is an arithmetic mean value of three measurement results obtained by excluding the highest value and the lowest value from the measurement results obtained using five test pieces.

### (Crack elongation at 120°C)

The measurement of crack elongation was carried out on a laminate in which a hard coat layer or a hard coat layer and a low refractive index layer was/were formed on one side of the acrylic-based resin film. Specifically, a piece having 10 mm (width) × 100 mm (length) dimensions was cut out from the laminate and was used as a sample. With use of a Tensilon tensile testing machine (AG-2000D; Shimadzu Corporation) to which a high-temperature bath set at 120°C was attached, the sample was subjected to measurement under the following conditions: a residual heat time of 2 minutes, a chuck-to-chuck distance of 40 mm, and a tensile speed of 200 mm/min. The elongation when a crack occurred to the hard coat layer was determined as a crack elongation at 120°C. The value of crack elongation is an arithmetic mean value in the (three) test results obtained by carrying out the measurements on three samples. The results are shown in Table 5.

### (Whitening after 80% stretching at 120°C)

The measurement of whitening after 80% stretching at 120°C was carried out on a laminate in which the hard coat layer and the low refractive index layer were formed on one side of the acrylic-based resin film. Specifically, a piece having 10 mm (width) × 100 mm (length) dimensions was cut out from the laminate and was used as a sample. With use of a Tensilon tensile testing machine (AG-2000D; Shimadzu Corporation) to which a high-temperature bath set at 120°C was attached, the sample was stretched by 80% under the following conditions: a residual heat time of 2 minutes, a chuck-to-chuck distance of 40 mm, and a tensile speed of 200 mm/min. Then, the degree of whitening was observed visually. The evaluation criteria were set as follows:
(Excellent): No whitening in reflection or in transmission, (Favorable): No whitening in reflection and slight whitening in transmission; and (Fair): Slight whitening in reflection and in transmission; and (Poor): Whitening in reflection and in transmission.

### (Film Thickness)

The thickness of the acrylic-based resin film was measured using the PEACOCK dial gauge No. 25 (manufactured by Ozaki Manufacturing Co., Ltd.).

The thickness of the hard coat layer was measured using an F20 film thickness measurement system (manufactured by Filmetrics Japan, Inc.). The side opposite from the hard coat layer was painted in black using a felt-tip pen, and the measurement was carried out with the refractive index of the acrylic-based resin film being set to 1.49 and the refractive index of the hard coat layer being set to 1.50.

### (Haze)

The haze of the laminate was measured using the haze meter NDH4000 (manufactured by Nippon Denshoku Industries Co., Ltd.) in accordance with ISO 14782.

### (Δhaze after 80% stretching at 120°C)

The measurement of the Δhaze of the laminate after 80% stretching at 120°C was carried out on a laminate in which the hard coat layer and the low refractive index layer were formed on one side of the acrylic-based resin film. Specifically, a piece having 10 mm (width) × 100 mm (length) dimensions was cut out from the laminate and was used as a sample. With use of a Tensilon tensile testing machine (AG-2000D; Shimadzu Corporation) to which a high-temperature bath set at 120°C was attached, the sample was stretched by 80% under the following conditions: a residual heat time of 2 minutes, a chuck-to-chuck distance of 40 mm, and a tensile speed of 200 mm/min. Then, the haze of the laminate after the stretching was measured with use of a haze meter NDH4000 (manufactured by Nippon Denshoku Industries Co., Ltd.) in accordance with ISO14782. The difference between the haze of the laminate before and after 80% stretching of the laminate was determined as "Δhaze after 80% stretching at 120°C".

### (Δhaze after 20% stretching at 120°C)

The measurement of Δhaze after 20% stretching of the laminate at 120°C was carried out on a laminated film in which a hard coat layer was not formed on one side of the acrylic-based resin film and a low refractive index layer was formed directly on one side of the acrylic-based resin film. Specifically, a piece having 10 mm (width) × 100 mm (length) dimensions was cut out from the laminated film and was used as a sample. With use of a Tensilon tensile testing machine (AG-2000D; Shimadzu Corporation) to which a high-temperature bath set at 120°C was attached, the sample was stretched by 20% under the following conditions: a residual heat time of 2 minutes, a chuck-to-chuck distance of 40 mm, and a tensile speed of 200 mm/min. Then, the haze of the laminate after the stretching was measured with use of a haze meter NDH4000 (manufactured by Nippon Denshoku Industries Co., Ltd.) in accordance with ISO14782. The difference between the haze of the laminate before and after 20% stretching of the laminate was determined as "Δhaze after 20% stretching at 120°C".

### (Luminous reflectance)

The measurement of the luminous reflectance of the laminate was carried out on a laminate in which the hard coat layer and the low refractive index layer were formed on one side of the acrylic-based resin film. The surface of the acrylic-based resin film on the side opposite from the side on which the hard coat layer and the low refractive index layer were formed was painted in black with a black oil-based marking pen (manufactured by Magic Ink (registered trademark), Teranishi Chemical Industry Co., Ltd.). Then, a black vinyl tape was bonded to the painted surface. Thus, a sample was prepared. The luminous reflectance of the sample was measured using a colorimeter SC-P (manufactured by Suga Test Instruments Co., Ltd.) in accordance with JIS Z 8722.

### (Pencil hardness)

The pencil hardness of the laminate was measured in accordance with JIS K5600-5-4.

### (Microcrack width and microcrack groove depth)

The measurement of the microcrack width and the depth of the microcrack groove were carried out on the laminate in which the hard coat layer and the low refractive index layer were formed on one side of the acrylic-based resin film. Specifically, a piece having 10 mm (width) × 100 mm (length) dimensions was cut out from the laminate and was used as a sample. With use of a Tensilon tensile testing machine (AG-2000D; Shimadzu Corporation) to which a high-temperature bath set at 120°C was attached, the sample was stretched by 80% under the following conditions: a residual heat time of 2 minutes, a chuck-to-chuck distance of 40 mm, and a tensile speed of 200 mm/min. The poststretching sample was observed using a transmission microscope, and the microcrack width and the depth of the groove of the microcrack were measured.

### (Particle size of hollow fine silica particles)

The particle size of the hollow fine silica particles was obtained by observing a photograph of a cross-sectional of a laminate having a magnification of 200,000 times and dimensions of 1200 nm × 800 nm, which was measured using an electron microscope (H7650; Hitachi High-Technologies Corporation). The arithmetic mean value of the particle size of 10 hollow fine silica particles was calculated, and the value obtained was determined as the particle size of hollow fine silica particles.

### (Average dispersed particle size of particles in hard coat)

The average dispersed particle size of the particles in the hard coat was obtained by observing a photograph of a cross-sectional of a laminate having a magnification of 200,000 times and dimensions of 1200 nm × 800 nm, which was measured using an electron microscope (H7650; Hitachi High-Technologies Corporation). The arithmetic mean value of the particle size of 10 dispersed domains of the particles in the hard coat was calculated, and the value obtained was determined as the average dispersed particle size of the particles in the hard coat.

### (In-plane phase difference (Re))

The measurement of the in-plane phase difference was carried out on a laminate in which the hard coat layer and the low refractive index layer were formed on one side of the acrylic-based resin film. Specifically, a piece having 40 mm × 40 mm dimensions was cut out from the laminate and was used as a sample. With use of an automatic double refractometer (KOBRA-WR; manufactured by Oji Scientific Instruments Co., Ltd.), the sample was measured at a temperature of 23±2°C and a humidity of 50±5% at a wavelength of 590nm and an incidence angle of 0°.

### (Thickness-direction phase difference (Rth))

The measurement of the thickness-direction phase difference was carried out on a laminate in which the hard coat layer and the low refractive index layer were formed on one side of the acrylic-based resin film. Specifically, a piece having 40 mm × 40 mm dimensions was cut out from the laminate and was used as a sample. With use of an automatic double refractometer (KOBRA-WR; manufactured by Oji Scientific Instruments Co., Ltd.), the sample was measured at a temperature of 23±2°C and a humidity of 50±5% at a wavelength of 590nm and an incidence angle of 0°.

### (Average dispersed particle size of particles)

The average dispersed particle size of the particles was calculated as the average value of the dispersed particles at five locations in the viewing field, obtained by the observation of a photograph of a cross-section with a magnification of 10,000 times and dimensions of 48 µm × 32 µm, measured using an electron microscope (H7650; Hitachi High-Technologies Corporation).

### (Anti-dazzling property)

The measurement of an anti-dazzling property was carried out on a laminate in which a hard coat layer or a hard coat layer and a low refractive index layer was/were formed on one surface. Specifically, a black adhesive PET film was bonded to the side of the laminate opposite from the side on which the hard coat layer was formed, and the reflection of a fluorescent lamp was visually observed in a bright room environment. The following evaluations were made: (i) "Favorable": The outline of the fluorescent lamp was blurred and cannot be confirmed and (ii) Poor: The outline of the fluorescent lamp can be clearly confirmed.

### (Glossiness)

The measurement of the glossiness of the laminate was carried out on a laminate in which the hard coat layer and the low refractive index layer were formed on one side of the acrylic-based resin film. With use of a gloss meter VG7000 (manufactured by Nippon Denshoku Industries Co., Ltd.), the mirror surface glossiness of the sample at 60° was measured in accordance with JIS Z 8741.

### [Production Example 1: Graft copolymer particles (A)]

The following substances were introduced into an 8-L polymerization device with a stirrer:
· 200 parts of deionized water
· 0.24 parts of sodium dioctyl sulfosuccinate
· 0.15 parts of sodium formaldehyde sulfoxylate
· 0.001 parts of ethylenediaminetetraacetic acid-2-sodium
· 0.00025 parts of ferrous sulfate

The gas inside the polymerization device was sufficiently replaced with nitrogen gas so that a substantially oxygen-free state was obtained. Then, the internal temperature of the polymerization device was controlled to 60°C. Then, the following monomer mixture was continuously added to the polymerization device at a rate (speed) of 10 parts by mass/time. After the addition of the monomer mixture ended, the polymerization was continued for an additional 0.5 hours so that crosslinked elastomer (A1) particles (average particle size: 90 nm) were obtained. The polymerization conversion rate was 99.5%.

### Monomer mixture:

· 30 parts of a vinyl monomer mixture (90% n-butyl acrylate (BA) and 10% methyl methacrylate (MMA))
· 1 part of allyl methacrylate (AIMA)
· 0.2 parts of cumene hydroperoxide (CHP).

Subsequently, 0.05 parts by mass of sodium dioctyl sulfosuccinate were introduced into the polymerization device including the particles of the crosslinked elastomer (A1). Then, the internal temperature of the polymerization device was controlled to 60°C, and the monomer mixture constituted by 70 parts (98% MMA, 1% BA, and 1% RUVA) of a vinyl monomer mixture for the formation of the graft polymer layer (A2), 0.5 parts of tertiary dodecyl mercaptan (t-DM), and 0.5 parts of CHP were continuously added to the polymerization device at a rate of 10 parts/hour.
The polymerization was continued for another 1 hour, so that graft copolymer particles (average particle size: 90 nm) were obtained. The polymerization conversion rate was 98.2%. The latex obtained was subjected to salting out and was agglutinated with calcium chloride. Then, the solid content after the agglutinate was rinsed with water and dried, so that the powder of graft copolymer particles (A) was obtained. The amount of each component is shown in Table 1.

RUVA is a reactive ultraviolet absorber (2-(2'-hydroxy-5'-methacryloyloxyethylphenyl)-2-H-benzotriazole (RUVA-93; manufactured by Otsuka Chemical Co., Ltd.)).

**[Table 1]**

| | | Production Example 1 |
|---|---|---|
| Rubber part | MMA | 3 |
| | BA | 27 |
| | Allyl methacrylate (ALMA) | 1 |
| | Cumene hydroperoxide | 0.2 |
| Shell part | MMA | 68.6 |
| | BA | 0.7 |
| | RUVA | 0.7 |
| | Tertiary dodecyl mercaptan | 0.5 |
| | Cumene hydroperoxide | 0.5 |
| Rubber part particle size | nm | 90 |

### [Production Example 2: Graft copolymer particles (B)]

The following substances were introduced into an 8-L polymerization device with a stirrer:
· 180 parts of deionized water
· 0.002 parts of polyoxyethylene lauryl ether phosphate
· 0.4725 parts of boric acid
· 0.04725 parts of sodium carbonate
· 0.0098 parts of sodium hydroxide

The gas inside the polymerization device was sufficiently replaced with nitrogen gas so that a substantially oxygen-free state was obtained. Then, the internal temperature of the polymerization device was controlled to 80°C. 0.027 parts of potassium persulfate was placed as a 2% aqueous solution in the polymerization device. Then, a mixed solution constituted by 27 parts of a vinyl monomer mixture (97% MMA and 3% BA) and 0.036 parts of allyl methacrylate was continuously added to the polymerization device over 81 minutes.

By continuing the polymerization for an additional 60 minutes, particles of the polymer that serve as the first layer of the core (crosslinked elastomer (B1)) were obtained. The polymerization conversion rate was 99.0%.

Subsequently, 0.0267 parts of sodium hydroxide as a 2% aqueous solution was added to the polymerization device. Then, 0.08 parts of potassium persulfate as a 2% aqueous solution was added to the polymerization device. Subsequently, a mixed solution constituted by 50 parts of a vinyl monomer mixture (83% BA and 17% styrene (St)) and 0.375 parts of allyl methacrylate was continuously added to the polymerization device over 150 minutes. After the addition ended, 0.015 parts of potassium persulfate as a 2% aqueous solution was added to the polymerization device. Then, the polymerization was continued for 120 minutes, and a core constituted by the first and second layers (crosslinked elastomer (B1)) was obtained. The polymerization conversion rate was 99.0%, and the average particle size was 230 nm.

Subsequently, 0.023 parts of potassium persulfate as a 2% aqueous solution was added to the polymerization device. Then, 23 parts of a vinyl monomer mixture (80% MMA and 20% BA) were continuously added to the polymerization device over 45 minutes. As a result of continuing the polymerization for an additional 30 minutes, a latex of the graft copolymer particles (B1) constituted by a two-layer structured core (crosslinked elastomer (B1)) and a shell (graft polymer layer (B2)) was obtained. The polymerization conversion rate was 100.0%. The latex obtained was subjected to salting out and was agglutinated with magnesium sulfate. Then, the solid content after the agglutination was rinsed with water and dried, so that graft copolymer particles (B) in a white powder form were obtained. The average particle size of the graft copolymer particles (B) was 250 nm. The amount of each component is shown in Table 2.

**[Table 2]**

| | | Production Example 2 |
|---|---|---|
| 1st layer | MMA | 26.2 |
| | BA | 0.8 |
| | Allyl methacrylate (ALMA) | 0.036 |
| | Potassium persulfate | 0.027 |
| | t-butyl hydroperoxide | - |
| 2nd layer | BA | 41.5 |
| | St | 9.5 |
| | Allyl methacryl ate (ALMA) | 0.375 |
| | Potass ium persulfate | 0.08 |
| 3rd layer | MMA | 18.4 |
| | BA | 4.6 |
| | Potassium persulfate | 0.023 |
| Rubber part particle size | nm | 250 |

### [Production Example 3]

The graft copolymer particles (A) and (B) obtained in a powder form, PARAPET HM (polymethyl methacrylate; manufactured by KURARAY CO., LTD.; 100% by weight of methyl methacrylate), and AO60 (manufactured by ADEKA CORPORATION) were each blended in the amounts (parts) shown in Table 3. The resultant mixture was mixed using a Henschel Mixer. Then, with use of a 58-mm ϕ-vent co-rotating twin-screw extruder (TEM58 (L/D = 41.7) manufactured by Toshiba Machine Co., Ltd.) in which the cylinder temperature was adjusted to 190°C to 250°C, melting and kneading of the mixture were carried out with a screw rotation speed of 150 rpm and a discharge quantity of 180 kg/hour. The resultant melted and kneaded product was taken in strands from the extruder, cooled in a water tank, and then cut using a pelletizer, so that pellets were obtained. The die used had Φ4.5×15 holes. Leaf disc filter equipment (manufactured by NAGASE & CO., LTD.; the filtration accuracy was 10 µ, the size was 7 inches, and the number of filters was 33 sheets) was provided as a polymer filter between the die and the head of the extruder. With use of a 90 mmΦ single-screw extruder equipped with a T-die, the obtained pellets were melted and kneaded at a cylinder set temperature of 180°C to 240°C and at a discharge quantity of 150 kg/hour, discharged from the T-die at a die temperature of 240°C. While both surfaces of the resultant product were brought into contact with rolls including a metal casting roll having a temperature adjusted to 90°C and a touch roll equipped with elastic metal sleeve having a temperature adjusted to 60°C to cool and solidify the product so as to form the product into a film, the film was rolled up. Thus, an acrylic film (acrylic-based resin film) having a thickness of 175 µm was obtained.

**[Table 3]**

| | | | Production Example 3 |
|---|---|---|---|
| Content in film | PMMA | Type | PAPAPET HM |
| | | Amount | 66 |
| | Rubber | Type | Production Example 1 |
| | | Amount | 30 |
| | Rubber | Type | Production Example 2 |
| | | Amount | 4 |
| | Additive | Type | AO60 |
| | | Amount | 0.5 |
| Glass transition temperature (Tg) | | °C | 119 |
| Film thickness | | µm | 175 |

### [Example A1]

The coating material 1 shown in Table 4 was applied onto the acrylic film (acrylic-based resin film) obtained in Production Example 3, with use of a bar coater, so that a resin layer was formed on the acrylic film. After the coating, the resin layer was dried at 80°C for 1 minute, so that the solvent was volatilized from the resin layer. Then, the resin layer was irradiated with ultraviolet light (active energy ray) in the cumulative amount of UV light shown in Table 5 to cure the resin layer, so that a hard coat layer was formed. The temperature of the cooling roller in forming the hard coat layer was 50°C. Various characteristics of the laminate obtained were evaluated. The results are shown in Table 5. In Example 1, a laminate constituted by an acrylic film and a hard coat layer was prepared. In Example 1, the obtained laminate was subjected to measurement and evaluation in term of the physical properties in the section "Laminate (hard coat layer, low refractive index layer formed)" column of Table 5. The results are described in the section "Laminate (hard coat layer, low refractive index layer formed)" column of Table 5. In addition, the coating material 1 shown in Table 4 is a curable composition for the formation of the hard coat layer, and can also be said to be a hard coat layer-forming composition.

### [Examples A2 to A12, Comparative Examples A1 to A2]

The coating materials 1 to 5 shown in Table 4, in the combinations shown in Table 5, were each applied onto the acrylic film (acrylic-based resin film) obtained in Production Example 3, with use of a bar coater, so that each resin layer was formed on the acrylic film. After the coating, the resin layer was dried at 80°C for 1 minute, so that the solvent was volatilized from the resin layer. Then, the resin layer was irradiated with ultraviolet light (active energy ray) in the cumulative amount of UV light shown in Table 5 to cure the resin layer, so that a hard coat layer was formed. The temperature of the cooling roller in forming the hard coat layer was 50°C. Then, the coating materials 6 to 9 shown in Table 4, in the combinations shown in Table 5, were each applied onto the obtained hard coat layer with use of a bar coater, so that a resin layer was formed on the hard coat layer. The particle sizes of the hollow fine silica particles in the coating materials 6 to 9 (particle sizes of the hollow fine silica particles in the low refractive index layers) were all approximately 50 nm. After the coating, the resin layer was dried at 80°C for 1 minute, so that the solvent was volatilized from the resin layer. Then, the resin layer was irradiated with ultraviolet light (active energy ray) in a nitrogen atmosphere and in the cumulative amount of UV light shown in Table 5 to cure the resin layer, so that a low refractive index layer was formed on the hard coat layer. Various characteristics of the laminate obtained were evaluated. The results are shown in Table 5. The coating materials 1 to 5 shown in Table 4 are each a curable composition for the formation a hard coat layer, and can also be said to be a hard coat layer-forming composition. In addition, the coating materials 6 to 9 shown in Table 4 are each a curable composition for the formation of a low refractive index layer, and can also be said to be a low refractive index layer-forming composition.

In order to evaluate the Δhaze after 20% stretching at 120°C, other coating materials 6 to 9 shown in Table 4 were each applied onto the acrylic film (acrylic-based resin film) obtained in Production Example 3, with use of a bar coater, so that a resin layer was formed on the acrylic film. After the coating, drying was performed at 80°C for 1 minute, so that the solvent was volatilized from the resin layer. Then, the resin layer was irradiated with ultraviolet light (active energy ray) in a nitrogen atmosphere and in the cumulative amount of UV light shown in Table 5, to cure the resin layer, so that a laminated film in which only a low refractive index layer was formed on the acrylic film was prepared. Table 5 shows the results of the evaluation of the Δhaze of the obtained laminated film after 20% stretching at 120°C.

**Table 4**

| | CM.1 | CM-2 | CM-3 | CM-4 | CM-5 | CM-6 | CM-7 | CM-8 | CM-9 |
|---|---|---|---|---|---|---|---|---|---|
| Type | Hard coat | Hard coat | Hard coat | Hard coat | Hard coat | Antireflection agent | Antireflection agent | Antireflection agent | Antireflection agent |
| Product name | P-5820TAH-1 | Z-607-29L | Z-507-27L | Z-607-26L | Z-807-10L | Z-325.15HAP | Z-824-2 | TU2361 | Z-607-10AR |
| Manufacturer | Daido Chemical Industry Co., Ltd. | Aica Kogyo Co., Ltd. | Aica Kogyo Co, Ltd. | Aica Kogyo Co., Ltd. | Aica Kogyo Co., Ltd. | Aica Kogyo Co, Ltd. | Aica Kogyo Co., Ltd. | Arakawa Chemical industries, Ltd. . | Aica Kogyo Co., Ltd. |
| Characteristic | High stretch-ability | High stretch-ability | High stretch-ability | Low stretch-ability | Low stretch-ability | High stretch-ability | Low stretch-ability | Low stretchability | High stretch-ability |

| | | | | | | | | | |
|---|---|---|---|---|---|---|---|---|---|
| * "CM-1" to "CM-9" indicate "Coating material 1" to "Coating material 9", respectively. | | | | | | | | | |

**Table 5**

| | | | | E-A1 | E-A2 | E-A3 | E.A4 | E-A5 | E-A6 | E-A7 |
|---|---|---|---|---|---|---|---|---|---|---|
| | Acrylic film | | | PE-3 | PE-3 | PE-3 | PE-3 | PE-3 | PE-3 | PE-3 |
| | Pencil hardness of film | | | HB | HB | HB | HB | HB | HB | HB |
| | Hard coat layer | Type | | CM-1 | CM-1 | CM-1 | CM-1 | CM-1 | CM-2 | CM-3 |
| | | Thickness | µm | 3.5 | 3.5 | 3.5 | 3.5 | 3.5 | 3.5 | 3.5 |
| | Low refractive index layer | Type | | - | CM-6 | CM-6 | CM-6 | CM-6 | CM-6 | CM-6 |
| | | Thickness | nm | 100 | 100 | 100 | 100 | 100 | 100 | 100 |
| | Solvent of coating material of low refractive index layer | Boiling point of solvent having highest boiling point | °C | - | 120 | 120 | 120 | 120 | 120 | 120 |
| | UV irradiation condition for hard coat laver | Cumulative light amount | mJ/cm² | 330 | 210 | 330 | 430 | 550 | 330 | 330 |
| Acrylic-based resin film | Moldability | Tensile breaking elongation at 120°C | % | 200% or more | 200% or more | 200% or more | 200% or more | 200% or more | 200% or more | 200% or more |
| Laminate (hard coat layer formed) | Moldability | Crack elongation at 120°C | % | 140 | 140 | 140 | 130 | 130 | 100 | 150 |
| | Hardness | Pencil hardness | 750 g load | H | H | H | H | H | H | H |
| Laminate (hard coat layer, low refractive index layer formed) | Moldability | Crack elongation at 120°C | % | 140 | 140 | 130 | 130 | 130 | 90 | 140 |
| | | Whitening evaluation after 30% stretching at 120°C | Excellent/ Favorable/ Fair/Poor | Excellent | Excellent | Favorable | Favorable | Fair | Favorable | Favorable |
| | Optical characteristic | haze | % | 0.5 | 0.4 | 0.3 | 0.3 | 0.3 | 0.2 | 0.3 |
| | | Δhaze after 80% stretching at 120°C | % | 0.1 | 0.5 | 0.9 | 1.8 | 5.4 | 0.9 | 0.5 |
| | | Luminous reflectance | % | 4.1 | 1.3 | 1.1 | 1.0 | 3.9 | 1.3 | 1.5 |
| | | In-plane chase difference Re | nm | 1.5 | 1.5 | 1.5 | 1.5 | 1.3 | 1.5 | 1.6 |
| | | Thickness-direction phase difference Rth | nm | -11.1 | -12 5 | -11.2 | -10.3 | -10.3 | -8.5 | -12.9 |
| | Hardness | Pencil hardness | 750 g load | H | 2H | 2H | 2H | 2H | 2H | 2H |
| | Crack | Width | µm | - | - | 0.6 | - | - | - | - |
| | | Depth | µm | - | - | 0.1 | - | - | - | - |
| Laminated film low refractive index layer formed) | Moldability | Δhaze after 20% stretching at 120°C | % | - | 13.2 | 13.2 | 1.3.2 | 13.2 | 13.2 | 13.2 |
| * "E-A1" to "E-A7" indicate "Examples A1" to "Examples A7", respectively. | | | | | | | | | | |
| * "PE-3" indicates "Production Example 3". | | | | | | | | | | |
| * "CM-1" to "CM-3" indicate "Coating material 1" to "Coating material 3' respectively | | | | | | | | | | |

| | | | | E-A3 | E-A9 | E-A10 | E-A11 | E-A12 | CE-A1 | CE-A2 |
|---|---|---|---|---|---|---|---|---|---|---|
| | Acrylic film | | | PE-3 | PE-3 | PE-3 | PE-3 | PE-3 | PE-3 | PE-3 |
| | Pencil hardness of film | | | HB | HB | HB | HB | HB | HB | HB |
| | Hard coat layer | Type | | CM-1 | CM-1 | CM-1 | CM-1 | CM-1 | CM-4 | CM-5 |
| | | Thickness | µm | 3.5 | 3.5 | 3.5 | 3.5 | 3.5 | 3.5 | 35 |
| | Low refractive index layer | Type | | CM-7 | CM-8 | CM-8 | CM-9 | CM-6 | CM-6 | CM-6 |
| | | Thickness | nm | 100 | 100 | nn 100 | 100 | 100 | 100 | 100 |
| | Solvent of coating material of low refractive index layer | Boiling point of solvent having highest boiling point | °C | 124 | 116 | 120 | 120 | 120 | 120 | 120 |
| | UV irradiation condition for hard coat layer | Cumulative light amount | mJ/cm² | 330 | 330 | 330 | 330 | 650 | 330 | 330 |
| Acrylic-based resin film | Moldability | Tensile breaking elongation at 120°C | % | 200% or more | 200% or more | 200% or more | 200% or more | 200% or more | 200% or more | 200% or more |
| Laminate (hard coat layer formed) | Moldability | Crack elongation at 120°C | % | 130 | 130 | 130 | 130 | 120 | 70 | 20 |
| | Hardness | Pencil hardness | 750 g load | H | H | HB | H | H | H | 2H |
| Laminate (hard coat layer, low refractive index layer formed) | Moldability | Crack elongation at 120°C | % | 130 | 130 | 130 | 130 | 120 | 60 | 10 |
| | | Whitening evaluation after 80% stretching at 120°C | Excellent/ Favorable/ Fair/Poor | Poor | Poor | Fair | Favorable | Poor | Poor | Poor |
| | Optical characteristic | haze | % | 0.2 | 0.4 | 0.5 | 0.2 | 0.3 | 0.2 | 0.3 |
| | | Δhaze after 80% stretching at 120°C | % | 12.7 | 16.3 | 4.1 | 0.6 | 11.9 | 14 1 | 32.5 |
| | | Luminous reflectance | % | 10 | 0.7 | 0.9 | 2.1 | 0.9 | 0.9 | 0.9 |
| | | In-plane phase difference Re | nm | 1.7 | 1.7 | 1.6 | 1.6 | 1.6 | 1.6 | 1.6 |
| | | Thickness-direction phase difference Rth | nm | -12.4 | -12.5 | -11.9 | -11 6 | -11.9 | -12.8 | -10.6 |
| | Hardness | Pencil hardness | 750 g load | 2H | 2H | 2H | 2H | 2H | 2H | 2H |
| | Crack | Width | µm | - | - | - | - | - | 0.7 | - |
| | | Depth | µm | - | - | - | - | - | 0.5 | - |
| Laminated film (low refractive index layer formed) | Moldability | Δhaze after 20% stretching at 120°C | % | 24.6 | 24.8 | 17.2 | 3 | 13.2 | - | - |

| | | | | | | | | | | |
|---|---|---|---|---|---|---|---|---|---|---|
| * "E-A8" to "E-A12" indicate "Examples A8' to "Examples A12", respectively. * "PE-3" indicates "Production Example 3' * "CE-A1" and "CE-A2' indicate "Comparative Example A1' and "Comparative Example A2", respectively. * "CM-1" to "CM-9" indicate "Coating material 1" to "Coating material 9', respectively | | | | | | | | | | |

### [Results]

Table 5 revealed that the laminate of Example A has excellent moldability. It was also found that the laminates of Examples A1 to A7, A10, and A11 have favorable whitening (lowered whitening) after 80% stretching at 120°C, in addition to favorable moldability. Furthermore, it was found that the laminates of Examples A2 through A12 have excellent antireflection effects. Meanwhile, it was found that the laminate of Comparative Example A is inferior in moldability.

### [Examples A13 to A21]

First, particles 1 through 12 shown in Table 6 were mixed with methyl ethyl ketone (MEK) and were sufficiently stirred, so that particle dispersion solutions of 20% by mass were prepared. Then, the particle dispersion solution of 20% by mass and the coating material 1 were mixed in predetermined amounts (such that the amount of particles contained in the hard coat layer in the final laminate would be the amount shown in Table 7). Then, the resultant product was sufficiently stirred, so that a hard coat layer-forming composition containing the particles was prepared. Next, with use of a bar coater, the hard coat layer-forming composition containing the particles prepared as described above was applied onto the acrylic film (acrylic-based resin film) obtained in Production Example 3 in the combinations shown in Table 7, so that a resin layer was formed on the acrylic film. After the coating, the resin layer was dried at 80°C for 1 minute, so that the solvent was volatilized from the resin layer. Then, the resin layer was irradiated with ultraviolet light (active energy ray) in the cumulative amount of UV light shown in Table 7 to cure the resin layer, so that a hard coat layer containing particles was formed. The temperature of the cooling roller in forming the hard coat layer was 50°C. Then, the coating material 6 shown in Table 4 was applied onto the obtained hard coat layer with use of a bar coater, so that a resin layer was formed on the hard coat layer. After the coating, the resin layer was dried at 80°C for 1 minute, so that the solvent was volatilized from the resin layer. Then, the resin layer was irradiated with ultraviolet light (active energy ray) in a nitrogen atmosphere and in the cumulative amount of UV light shown in Table 7 to cure the resin layer, so that a low refractive index layer was formed on the hard coat layer. Various characteristics of the laminate obtained were evaluated. The results are shown in Table 7. Table 7 has an item "Crack elongation of particle-free laminated film at 120°C". The numerical values in this item are those obtained by measuring a crack elongation at 120°C, using, as a sample, a laminate obtained by using the above-described method to form, on an acrylic film (acrylic-based resin film) obtained in Production Example 3, a hard coat layer containing no particles and constituted by the coating material 1.

**Table 6**

| | Particles 1 | Particles 4 | Particles 5 | Particles 6 | Particles 7 | Particles 8 | Particles 9 | Panicles 10 | Particles 11 | Particles 12 |
|---|---|---|---|---|---|---|---|---|---|---|
| Type | Silica | Acrylic | Melamine resin /silica complex | Melamine resir /silica complex | Acrylic | Acrylic | Acrylic | Acrylic | Acrylic | Acrylic |
| Product name | Z-AGD-10 | XX-5978 | 2000M | 3500M | MX-500 | MX-300 | MX-150 | MX-80H | SSX-103 | SSX-101 |
| Average particle size | | | | | 5.8 | 2.8 | 1.5 | 0.8 | 3 | 1 5 |
| Manufacturer | Aica Kogyo Co . Ltd. | Sekisui Kasei Co., Ltd. | Nissan Chemical Corporation | Nissan Chemical Corporation | Soken Chemical & Engineering Co., Ltd. | Soken Chemical & Engineering Co., Ltd. | Soken Chemical & Engineering Co., Ltd. | Soken Chemical & Engineering Co., Ltd. | Sekisui Kasei Co., Ltd. | Sekisui Kasei Co., Ltd. |

**Table 7**

| | | | | E-H13 | E-A14 | E-A15 | E-A16 | E-A17 |
|---|---|---|---|---|---|---|---|---|
| | Acrylic film | | | PE-3 | PE-3 | PE-3 | PE-3 | PE-3 |
| | Pencil hardness of film | | | HB | HB | HB | HB | HB |
| | Hard coat layer | Type | | CM-1 | CM-1 | CM-1 | CM-1 | CM-1 |
| | | Thickness | µm | 3.5 | 3.5 | 3.5 | 3.5 | 3.5 |
| | Particle | Type | | Particles 1 | Particles 1 | Particles 11 | Particles 7 | Particles 8 |
| | | Average dispersed particle size | µm | 3.5 | 3.5 | 3.0 | s. a | 2.8 |
| | | Addition amount | % | 8.26 | 8.26 | 6.54 | 5.56 | 5.66 |
| | Low refractive index layer | Type | | CM-6 | CM-6 | CM-6 | CM-6 | CM-6 |
| | | Thickness | nm | 100 | 100 | 100 | 100 | 100 |
| | Solvent of coating material of low refractive index layer | Boiling point of solvent having highest boiling point | °C | 120 | 120 | 120 | 120 | 120 |
| | UV irradiation condition for hard coat layer | Cumulative light amount | mJ/cm² | 330 | 210 | 330 | 330 | 330 |
| Acrylic-based resin film | Moldability | Tensile breaking elongation at 120°C | % | 200% or more | 200% or more | 200% or more | 200% or more | 200% or more |
| Laminate or laminated film (hard coat layer formed) | Moldability | Crack elongation at 120°C | % | 200% or more | 200% or more | 200% or more | 200% or more | 200% or more |
| | | Crack elongation of particle-free laminated film at 120°C | % | 140 | 140 | 140 | 140 | 140 |
| | Hardness | Pencil hardness | 750 g load | H | H | H | H | H |
| | Optical characteristic | Haze | % | 18.9 | 19.2 | 6.5 | 40.1 | 15.1 |
| | | Anti-dazzling property | Favorable/Poor | Favorable | Favorable | Favorable | Favorable | Favorable |
| Laminate (hard coat layer, low refractive index layer formed) | Moldability | Crack elongation at 120°C | % | 200% or more | 200% or more | 200% or more | 200% or more | 200% or more |
| | | Δhaze after 80% stretching at 125°C | % | 7.9 | 7.5 | 3.5 | 5.1 | 3.3 |
| | | whitening evaluation alter 80% stretching at 120°C | Excellent/Favorable/ Fair/Poor | Fair | Fair | Favorable | Favorable | Excellent |
| | Optical characteristic | Haze | % | 14.2 | 14.8 | 4.4 | 35.7 | 13.5 |
| | | Glossiness | % | 50 | 52 | 91 | 50 | 47 |
| | | Anti-dazzling property | - | Favorable | Favorable | Favorable | Favorable | Favorable |
| | | Luminous reflectance | % | 1.9 | 1.9 | 1.8 | 2.4 | 1.8 |
| | | Phase difference Re | nm | 2 | 2 | 2 | 2 | 2 |
| | | Phase difference Rth | nm | -12 | -12 | - 4 | -12 | -12 |
| | Hardness | Pencil hardness | 750 g load | 2H | 2H | 2H | 2H | 2H |
| Laminated film (low refractive index layer formed) | Moldability | Δhaze after 20% stretching at 120°C | % | 12.2 | 12.2 | 12.2 | 12.2 | 12.2 |
| ' "E.A13" to "E-A17" indicate "Examples A13' to "Examples A17", respectively. | | | | | | | | |
| * 'PE-3' indicates "Production Example 3". | | | | | | | | |
| ' "CM-1" and "CAE-6" indicate "Coating material 1" and "Coating material 6", respectively | | | | | | | | |

| | | | | E-A18 | E-A19 | E-A20 | E-A21 | |
|---|---|---|---|---|---|---|---|---|
| | Acrylic film | | | PE-3 | PE-3 | PE-3 | PE-3 | |
| | Pencil hardness of film | | | H8 | HB | HB | HB | |
| | Hard coat layer | Type | | CM-1 | CM-1 | CM-1 | CM-1 | |
| | | Thickness | µm | 3.5 | 3.5 | 3.5 | 3.5 | |
| | Particle | Type | | Particles 9 | Particles 10 | Particles 11 | Particles 12 | |
| | | Average dispersed particle size | µm | 1.5 | 3.5 | 3.0 | 1.5 | |
| | | Addition amount | % | 5.66 | 5.66 | 5.66 | 5.66 | |
| | Low refractive index layer | Type | | CM-6 | CM-6 | CM-6 | CM-6 | |
| | | Thickness | nm | 100 | 100 | 100 | 100 | |
| | Solvent of coating material of low refractive index laver | Boding point of solvent having highest boiling point | °C | 120 | 120 | 120 | 120 | |
| | UV irradiation condition for hard coat layer | Cumulative light amount | mJ/cm² | 330 | 330 | 330 | 330 | |
| Acrylic-based resin film | Moldability | Tensile breaking elongation at 120°C | % | 200% or more | 200% or more | 200% or more | 200% or more | |
| Laminate or laminated film (hard coat layer formed) | Moldability | Crack elongation at 120°C | % | 200% or more | 200% or more | 200% or more | 200% or more | |
| | | Crack elongation of particle-free laminated film at 120°C | % | *140* | 140 | 140 | 140 | |
| | Hardness | Pencil hardness | 750 g load | H | H | H | H | |
| | Optical characteristic | Haze | % | 5.5 | 18 | 8.5 | 3.9 | |
| | | Anti-dazzling property | Favorable/Poor | Favorable | Favorable | Favorable | Poor | |
| Laminate (hard coat layer, low refractive index layer formed) | Moldability | Crack elongation at 120°C | % | 200% or more | 200% or more | 200% or more | 200% or more | |
| | | Δhaze after 80% stretching at 120°C | % | 3.1 | 4.9 | 3.2 | 2.1 | |
| | | whitening evaluation after 80% stretching at 120°C | Excellent/Favorable/ Fair/Poor | Excellent | Favorable | Excellent | Excellent | |
| | Optical characteristic | Haze | % | 4.9 | 16.2 | 6 | 1.3 | |
| | | Glossiness | % | 86 | 56 | 67 | 121 | |
| | | Anti-dazzling property | - | Favorable | Favorable | Favorable | Poor | |
| | | Luminous reflectance | % | 1.7 | 2 | 1.8 | 1.7 | |
| | | Phase difference Re | nm | 2 | 2 | 2 | 2 | |
| | | Phase difference Rth | nm | -12 | -12 | -12 | -12 | |
| | Hardness | Pencil hardness | 750 g load | 2H | 2H | 2H | 2H | |
| laminated film (low refractive index layer formed) | Moldability | Δhaze after 20% stretching at 120°C | % | 12.2 | 12.2 | 12.2 | 12.2 | |

| | | | | | | | | |
|---|---|---|---|---|---|---|---|---|
| * "E-A18" to "E-N21' indicate 'Examples A18' to "Examples A21", respectively. * "PE-3" indicates 'Production Example 3' * "CM-1" and "CM-6" indicate "Coating material 1" and "Coating material 6" respectively | | | | | | | | |

### [Eample B]

The following description will discuss Embodiment 2 of the present invention in more detail with reference to Example B. However, the present invention is not limited to Example B. It should be noted that, in the following Example B and Comparative Example B, "parts" means "parts by mass", and "%" means "% by mass".

### [Measurement and evaluation methods]

In Examples B and Comparative Examples B, measurement and evaluation were carried out by the following methods.

### (Crack elongation in particle-free laminated film at 120°C)

The measurement of the crack elongation in the particle-free laminated film at 120°C was carried out on a laminated film in which a hard coat layer containing no particles was formed on one side of the acrylic resin film. Specifically, a laminated film of 10 mm (width) x 100 mm (length) was cut out. With use of a Tensilon tensile testing machine (AG-2000D; Shimadzu Corporation) to which a high-temperature bath set at 120°C was attached, measurement was carried out under the following conditions: a residual heat time of 2 minutes, a chuck-to-chuck distance of 40 mm, and a tensile speed of 200 mm/min. The elongation when a crack occurred to the hard coat layer was determined as a crack elongation in the particle-free laminated film at 120°C.

### (Others)

The methods for measuring and evaluating the glass transition temperature (Tg), the tensile breaking elongation, the crack elongation, the thickness, the haze, the Δhaze after 20% stretching at 120°C, the luminous reflectance, the pencil hardness, the anti-dazzling property, the average dispersed particle size of the particles, and the particle size of the hollow fine silica particles are identical to those described in the above section [Example A]. Therefore, such descriptions apply and are not repeated here. The moldability (whitening), the Δhaze after 80% stretching at 120°C, the in-plane phase difference (Re), and the thickness-direction phase difference (Rth) are identical to those described in the above section [Example A], except that the measurement of these was carried out on a laminate in which a hard coat layer or a hard coat layer and a low refractive index layer was/were formed on one side. Therefore, such descriptions apply and are not repeated here.

### [Production Example B]

In Example B, graft copolymer particles (A) and graft copolymer particles (B) which were produced and obtained by the same methods as in [Production Example 1] and [Production Example 2] of [Example A] were used. In Example B, a film produced and obtained by the same method as in [Production Example 3] of Example A was used as the acrylic film.

In Comparative Example B7, a laminated film (AW-10U manufactured by Shine Techno Co., Ltd.; thickness: 200 µm) including a PMMA resin layer and a PC resin layer was used as, instead of the acrylic film, a base material.

### [Examples B1 to B10, Comparative Examples B1 to B7]

First, particles 1 through 12 shown in Table 6 were mixed with MEK and were sufficiently stirred, so that particle dispersion solutions of 20% by mass were prepared. Then, the particle dispersion solution of 20% by mass and the coating materials 1 to 5 shown in Table 4 were mixed in predetermined amounts (such that the amounts of particles contained in the hard coat layer in the final laminate would be the amounts shown in Tables 8 and 9). Then, the resultant product was sufficiently stirred, so that a hard coat layer-forming composition was prepared. Next, with use of a bar coater, the hard coat layer-forming composition containing the particles prepared as described above was applied onto the acrylic film (acrylic-based resin film) obtained in Production Example 3 or the laminated film of the PMMA resin layer and the PC resin layer in the combinations shown in Tables 8 and 9, so that a resin layer was formed on the acrylic film. After the coating, the resin layer was dried at 80°C for 1 minute, so that the solvent was volatilized from the resin layer. Then, the resin layer was irradiated with ultraviolet light (active energy ray) in the cumulative amount of UV light shown in Tables 8 and 9 to cure the resin layer, so that a hard coat layer was formed. The temperature of the cooling roller in forming the hard coat layer was 50°C. Various characteristics of the laminate obtained were evaluated. The results are shown in Tables 8 and 9.

### [Examples B11 to B15, Comparative Examples B8 to B9]

By the same method as in the section [Examples B1 to B10, Comparative Examples B1 to B7], the hard coat layer-forming composition containing particles was used to form a hard coat layer on the acrylic film (acrylic-based resin film) obtained in Production Example 3. Then, the coating material 6, 8, or 9 shown in Table 4, in the combinations shown in Tables 8 and 9, was applied onto the obtained hard coat layer with use of a bar coater, so that a resin layer was formed on the hard coat layer. After the coating, the resin layer was dried at 80°C for 1 minute, so that the solvent was volatilized from the resin layer. Then, the resin layer was irradiated with ultraviolet light (active energy ray) in a nitrogen atmosphere and in the cumulative amount of UV light shown in Tables 8 and 9 to cure the resin layer, so that a low refractive index layer was formed on the hard coat layer. Various characteristics of the laminate obtained were evaluated. The results are shown in Tables 8 and 9.

In order to evaluate the Δhaze after 20% stretching at 120°C, another coating material 6, 8, or 9 shown in Table 4 was applied onto the laminated film of the PMMA resin layer and the PC resin layer or the acrylic film (acrylic-based resin film) obtained in Production Example 3, with use of a bar coater, so that a resin layer was formed on the acrylic film. After the coating, drying was performed at 80°C for 1 minute, so that the solvent was volatilized from the resin layer. Then, the resin layer was irradiated with ultraviolet light (active energy ray) in a nitrogen atmosphere and in the cumulative amount of UV light shown in Tables 8 and 9, to cure the resin layer, so that a laminated film in which only a low refractive index layer was formed on the acrylic film was prepared. Tables 8 and 9 show the results of the evaluation of the Δhaze of the obtained laminated film after 20% stretching at 120°C.

**Table 8**

| | | | | E-B1 | E-B2 | E-B3 | E-B4 | E-B5 | E-B6 | E-87 | E-B8 |
|---|---|---|---|---|---|---|---|---|---|---|---|
| | Acrylic film | | | PE-3 | PE-3 | PE-3 | PE-3 | PE-3 | PE-3 | PE-3 | PE-3 |
| | Pencil hardness of film | | | HB | HB | HB | HB | HB | HB | HB | HB |
| | Hard coat layer | Type | | CM-1 | CM- 1 | CM-1 | CM-1 | CM-1 | CM-1 | CM-1 | CM-1 |
| | | Thickness | µm | 1.5 | 1.5 | 1.5 | 2.5 | 0.5 | 1.5 | 1.5 | 1.5 |
| | Particle | Type | | Particles 1 | Particles 1 | Particles 1 | Particles 1 | Particles 1 | Particles 4 | Particles 5 | Particles 6 |
| | | Averange dispersed particle size | µm | 2.5 | 2.5 | 25 | 2.5 | 2.5 | 3 | 1.7 | 3.4 |
| | | Addition amount | % | 3 5 | 2.5 | 4 5 | 3 5 | 3.5 | 3 5 | 3 5 | 3 5 |
| | Low refractive index layer | Type | | - | - | - | - | - | - | - | - |
| | | Thickness | nm | | | | | | | | |
| | Solvent of coating material of low refractive index layer | Boiling point of solvent having highest boiling point | °C | - | - | - | - | - | - | - | - |
| | UV irradiation condition for hard coat layer | Cumulative I:gh1 amount | mJ/cm² | 330 | 330 | 330 | 330 | 330 | 330 | 330 | 330 |
| Acrylic-based resin film | Moldability | Tensile breaking elongation at 120°C | % | 200% or more | 200% or more | 200% or more | 200% or more | 200% or more | 200% or more | 200% or more | 200% or more |
| Laminate or laminated film (hard coat layer formed) | Moldability | Crack elongation at 120°C | % | 200% or more | 200% or more | 200% or more | 200% or more | 200% or more | 200% or more | 200% or more | 200% or more |
| | | Crack elongation of particle-free laminated film at 120°C | % | 150 | 150 | 150 | 130 | 200 or more | 150 | 150 | 150 |
| | | Δhaze after 80% stretching at 120°C | % | 3.2 | 1.5 | 43 | 6.3 | 1.1 | 0.8 | 2.5 | 2.0 |
| | | Whitening evaluation after 80% stretching at 120°C | Excellent/Faorable/ Fair/Poor | Excellent | Excellent | Favorable | Favorable | Excellent | Excellent | Favorable | Excellent |
| | Hardness | Pencil hardness | 750 g load | H | H | H | H | H | H | H | H |
| | Optical characteristic | haze | % | 18.2 | 12.8 | 22.0 | 16.1 | 14.3 | 11.5 | 12.7 | 53 |
| | | Anti-dazzling property | Favorable/ Poor | Favorable | Favorable | Favorable | Favorable | Favorable | Favorable | Favorable | Favorable |
| | | Phase difference Re | nm | 1.6 | 1.5 | 1.7 | 1.8 | 1.4 | 1.6 | 1.7 | 1.6 |
| | | Phase difference Rth | nm | -12.1 | -12.1 | -12.4 | -12.3 | -12.1 | -11.9 | -12.1 | - 11.9 |
| Laminate (hard coat layer, low refractive index layer formed) | Moldability | Crack elongation at 120°C | % | - | - | - | - | - | - | - | - |
| | | Δhaze after 80% stretching at 120°C | % | - | - | - | - | - | - | - | - |
| | | Whitening evaluation after 80% stretching at 120°C | Excellent/Favorable/ Fair/Poor | - | - | - | - | - | - | - | - |
| | Optical characteristic | Haze | % | - | - | - | - | - | - | - | - |
| | | Glossiness | % | | | | · | · · | · · | · · | · |
| | | Anti-dazzling property | - | - | - | - | - | - | | - | - |
| | | Luminous reflectance | % | - | - | - | - | - | - | - | - |
| | | Phase difference Re | nm | - | - | - | - | - | - | - - | - - |
| | | Phase difference Rth | nm | - | - | - | - | - | - | - | - |
| | Hardness | Pencil hardness | 750 g load | - | - | - | - | - | - | - | - |
| Laminated film (low refractive index layer formed) | Moldability | Δhaze after 20% stretching at 120°C | % | - | - | - | - | - | - | - | - |
| * "E-B1" to "E-88" indicate "Examples 81' to "Examples B8", respectively . | | | | | | | | | | | |
| * "PE-3" indicates 'Production Example 3'. | | | | | | | | | | | |
| * "CM-1" indicate "Coating material 1". | | | | | | | | | | | |

| | | | | E-B9 | E-810 | E-B11 | E-B12 | E-B13 | E-B14 | E-B15 | |
|---|---|---|---|---|---|---|---|---|---|---|---|
| | Acrylic film | | | PE-3 | PE-3 | PE-3 | PE-3 | PE-3 | PE-3 | PE-3 | |
| | Pencil hardness of film | | | HB | HB | HB | HB | HB | HB | HB | |
| | Hard coat layer | Type | | CM-1 | CM-1 | CM-1 | CM-1 | CM-1 | CM-1 | CM-1 | |
| | | Thickness | µm | 1.5 | 1.5 | 1.5 | 1.5 | 1.5 | 1.5 | 1.5 | |
| | Particle | Type | | Particles 1 | Particles 1 | Particles 1 | Particles 1 | Particles 1 | Particles 1 | Particles 1 | |
| | | Average dispersed particle size | µm | 25 | 25 | 25 | 2 5 | 25 | 25 | 25 | |
| | | Addtion amount | S | 3.5 | 3.5 | 3.5 | 3.5 | 3.5 | 3.5 | 3.5 | |
| | Low refractive index layer | Type | | - | - | CM-6 | CM-6 | CM-6 | CM.8 | CM-9 | |
| | | Thickness | nm | | | 100 | 100 | 100 | 100 | 100 | |
| | Solvent of coating material of low refractive index layer | Boiling point of solvent having highest boiling point | °C | - | - | 120 | 120 | 120 | 120 | 120 | |
| | UV irradiation condition for hard coat layer | Cumulative I ght amount | mJ/cm² | 330 | 330 | 210 | 330 | 550 | 330 | 330 | |
| Acrylic-based resin film | Moldability | Tensile breaking elongation at 120°C | % | 200% or more | 200% or more | 200% or more | 200% or more | 200% or more | 200% or more | 200% or more | |
| Laminate or laminated film (hard coat layer formed) | Moldability | Crack elongation at 120°C | % | 200% or more | 200% or more | 200% or more | 200% or more | 200% or more | 200% or more | 200% or more | |
| | | Crack elongation of particle-free laminated film at 120°C | % | 140 | 160 | 150 | 150 | 140 | 150 | 150 | |
| | | Δhaze after 80% stretching at 120°C | % | 0.7 | 2.8 | 3.2 | 3.2 | 3.2 | 3.2 | 3.2 | |
| | | Whitening evaluation after 80% stretching at 120°C | Excellent/Favorable/ Fair/Poor | Excellent | Excellent | - | - | - | - | - | |
| | Hardness | Pencil hardness | 750 g load | H | H | H | H | H | H | H | |
| | Optical characteristic | haze | % | 15.4 | 16.6 | 18.2 | 18.2 | 18.2 | 18.2 | 18.2 | |
| | | Anti-dazzling property | Favorable/ Poor | Favorable | Favorable | Favorable | Favorable | Favorable | Favorable | Favorable | |
| | | Phase difference Re | rm | 1.7 | 1.6 | - | - | - | - | - | |
| | | Phase difference Rth | rm | -12.3 | -12.9 | - | - | - | - | - | |
| Laminate (hard coat layer, low refractive index layer formed) | Moldability | Crack elongation at 120°C | % | - | - | 200% or more | 200% or more | 200% or more | 200% or more | 200% or more | |
| | | Δhaze after 80% stretching at 120°C | % | - | - | 4 5 | 4 6 | 5.1 | 7.8 | 1.7 | |
| | | Whitening evaluation after 80% stretch ng a: 120°C | Excellent/Favorable/ Fair/Poor | - | - | Excellent | Favorable | Fair | Fair | Excellent | |
| | Optical characteristic | Haze | % | - | - | 14.0 | 13.2 | 13.9 | 12.7 | 12.6 | |
| | | Glossiness | % | - | - | 17 | 78 | 75 | 80 | 79 | |
| | | Anti-dazzling property | - | - | - | Favorable | Favorable | Favorable | Favorable | Favorable | |
| | | Luminous reflectance | % | - | - | 20 | 1.9 | 1 7 | 1.7 | 2 5 | |
| | | Phase difference Re | nm | - | - | 16 | 1.5 | 1 6 | 1.6 | 1.5 | |
| | | Phase difference Rth | rm | - | - | -12.2 | -11.8 | -11.3 | -11.5 | -11.4 | |
| | Hardness | Pencil hardness | 750 g load | - | - | 2H | 2H | 2H | 2H | 2H | |
| Laminated film (low refractive index layer formed) | Moldability | Δhaze after 20% stretching at 120°C | t | - | - | 12.2 | 12.2 | 12.2 | 14.3 | 2.8 | |

| | | | | | | | | | | | |
|---|---|---|---|---|---|---|---|---|---|---|---|
| * "E-B9" to "E-B15" indicate "Examples B9" to "Examples B15", respectively. * "PE-3" indicates "Production Example 3*. * "CM-1", "CM-6", "CM-8", and "CM-9" indicate "Coating materials 1, 6, 8. and 9", respectively | | | | | | | | | | | |

**Table 9**

| | | | | CE-B1 | CE-B2 | CE-S3 | CE.B4 | CE-B5 |
|---|---|---|---|---|---|---|---|---|
| | Acrylic film | | | PE-3 | PE-3 | PE-3 | PE-3 | PE-3 |
| | Pencil hardness of fi:m | | | HB | HB | HB | HB | HB |
| | Hard coat layer | Type | | CM-1 | CM-1 | CM-1 | CM-1 | CM-4 |
| | | Thickness | µm | 1.5 | 1.5 | 3.5 | 4.5 | 1.5 |
| | Particle | Type | | - | Particles 1 | Particles 1 | Particles 1 | Particles 1 |
| | | Average dispersed particle size | 4m | - | 25 | 25 | 25 | 25 |
| | | Addition amount | % | - | 0.5 | 3 5 | 35 | 3.5 |
| | Low refractive index layer | Type | | - | - | - | - | - |
| | | Thickness | nm | | | | | |
| | Solvent of coating material of low refractive index layer | Boiling point of solvent having highest boiling point | °C | - | - | - | - | - |
| | UV irradiation condition for hard coat layer | Cumulative light amount | mJ/cm² | 330 | 330 | 330 | 330 | 330 |
| Acrylic-based resin film | Moldability | Tensile breaking elongation at 12C*C | % | 200% or more | 200% or more | 200% or more | 200% or more | 200% or more |
| Laminate or laminated film (hard coat layer formed) | Moldability | Crack elongation at 120°C | % | 200% or more | 200% or more | 100 | 90 | 200% or more |
| | | Crack elongation of particle-free laminated film at 120°C | % | 150 | 150 | 140 | 120 | 70 |
| | | Δhaze after 80% stretching at 120°C | | 0.1 | as | 8.0 | 12.5 | 26.6 |
| | | Whitening evaluation after 80% stretching at 120°C | Excellent/Favorable/ Fair/Poor | Excellent | Excellent | Poor | Poor | Poor |
| | Hardness | Pencil hardness | 750 g load | H | H | H | H | H |
| | Optical characteristic | Haze | % | 0.5 | 2.8 | 3.8 | 1.9 | 21.3 |
| | | Anti-dazzling property | Favorable/Poor | Poor | Poor | Poor | Poor | Favorable |
| | | Phase difference Re | nm | 1.5 | 1.6 | 1.6 | 1.7 | 1.7 |
| | | Phase difference Rth | nm | -11.2 | -11.7 | -11.5 | -12.1 | -12.7 |
| Laminate (hard coat layer low refractive index layer formed) | Moldability | Crack elongation at 120°C | % | - | - | - | - | - |
| | | Δhaze after 80% stretching at 120°C | % | - | - | - | - | - |
| | | Whitening evaluation after 80% stretching at 120°C | Excellent/ Favorable/ Fair/Poor | - | - | - | - | - |
| | Optical characteristic | Haze | % | - | - | - | - | - |
| | | Anti-dazzling property | Favorable/Poor | - | - | - | - | - |
| | | Luminous reflectance | % | - | - | - | - | - |
| | | Phase difference Re | nm | - | - | - | - | - |
| | | Phase difference Rth | nm | - | - | - | - | - |
| | Hardness | Pencil hardness | 750 g load | - | - | - | - | - |
| Laminated film (low refractive index layer formed) | Moldability | Δhaze after 20% stretching at 120°C | % | - | - | - | - | - |
| * "PE-3" indicates "Production Example 3". | | | | | | | | |
| * "CE-B1" to "CE-B5" indicate "Comparative Example B1" to "Comparative Example B5" respectively. | | | | | | | | |
| * 'CM-1' and "CM-4" indicate "Coating materials 1" and "Coating materials 4", respectively. | | | | | | | | |

| | | | | CE-B6 | CE-B7 | CE-B8 | CE-B9 | |
|---|---|---|---|---|---|---|---|---|
| | Acrylic film | | | PE-3 | PE-4 | PE-3 | PE-3 | |
| | Pencil hardness of him | | | HB | s | HB | HB | |
| | Hard coat layer | Type | | CM-5 | CM-1 | CM-4 | CM-5 | |
| | | Thickness | µm | 15 | 1.5 | 1.5 | 1.5 | |
| | Particle | Type | | Particles 1 | Particles 1 | Particles 1 | Particles 1 | |
| | | Average dispersed particle size | µm | 25 | 25 | 25 | 25 | |
| | | Addition amount | % | 3.5 | 3 5 | 3.5 | 3.5 | |
| | Low refractive index layer | Type | | - | - | CM-6 | CM-6 | |
| | | Thickness | nm | | | 100 | 100 | |
| | Solvent of coating material of low refractive index layer | Boiling point of solvent having highest boiling point | °C | - | - | 120 | 120 | |
| | UV irradiation condition for hard coat layer | Cumulative light amount | mJ/cm² | 330 | 330 | 330 | 330 | |
| Acrylic-based resin film | Moldability | Tensile breaking elongation at 120°C | % | 200% or more | 160 | 200% or more | 200% or more | |
| Laminate or laminated film (hard coat layer formed) | Moldability | Crack elongation, at 120°C | % | 200% or more | 200% or more | 200% or more | 200% or more | |
| | | Crack elongation of particle-free laminated film at 120°C | % | 30 | 150 | 70 | 30 | |
| | | Δhaze after 80% stretching at 120°C | % | 68.2 | 4 7 | 26.6 | 68.2 | |
| | | Whitening evaluation after 80% stretching at 12C°C | Excellent/Favorable/ Fair/Poor | Poor | Fair | - | - | |
| | Hardness | Pencil hardness | 750 g load | H | F | H | H | |
| | Optical characteristic | Haze | % | 8.4 | 18.4 | 21.3 | 8.4 | |
| | | Anti-dazzling property | Favorable/Poor | Favorable | Favorable | Favorable | Favorable | |
| | | Phase difference Re | nm | 1.6 | 36.2 | - | - | |
| | | Phase difference Rth | nm | -12.3 | 166 2 | - | - | |
| Laminate (hard coat layer, low refractive index layer formed) | Moldability | Crack elongation at 120.C | % | - | - | 200% or more | 200% or more | |
| | | Δhaze after 80% stretching at 120°C | % | - | - | 17.8 | 16.3 | |
| | | Whitening evaluation after 80% stretching at 120°C | Excellent/Favorable/ Fair/Poor | - | - | Poor | Poor | |
| | Optical characteristic | Haze | % | - | - | 75 | 16.3 | |
| | | Anti-dazzling property | Favorable/Poor | - | - | Favorable | Favorable | |
| | | Luminous reflectance | % | - | - | 1.8 | 1.7 | |
| | | Phase difference Re | nm | - | - | 1 6 | - 6 | |
| | | Phase difference Rth | nm | - | - | -12.8 | -12.3 | |
| | Hardness | Pencil hardness | 750 g load | - | - | 2H | 2H | |
| Laminated film (low refractive index layer formed) | Moldability | Δhaze after 20% stretching at 120°C | % | - | - | 12.2 | 12.2 | |

| | | | | | | | | |
|---|---|---|---|---|---|---|---|---|
| * "PE-3* and 'PE-4' indicates "Production Example 3' and *Production Example 4*, respectively. * "CE-B6" to "CE-B9" indicate "Comparative Example B6" to "Comparative Example 89" respectively. * "CM-1", "CM-4", "CM-5", and "CM-6" indicate "Coating materials 1, 4, 5, and 6", respectively. | | | | | | | | |

### [Results]

Tables 9 and 10 revealed that the laminate of Example B has excellent moldability, excellent surface hardness, and an excellent anti-dazzling property. Meanwhile, it was found that the laminate of Comparative Example B was inferior in terms of, for example, moldability, an anti-dazzling property, and/or surface hardness.

### Industrial Applicability

With the first laminate production method, it is possible to obtain a laminate having excellent moldability and low whitening. In addition, with the second laminate production method, it is possible to obtain a laminate having excellent moldability, excellent surface hardness, and an excellent anti-dazzling property. Therefore, an embodiment of the present invention can be suitably applied to various fields including those of an automobile interior such as an on-vehicle display.

### Reference Signs List

- 1: Acrylic-based resin film
- 2: Hard coat layer
- 3: Low refractive index layer
- 4: Laminate
- 5: Microcrack
- 6: Microcrack width
- 7: Depth of groove of microcrack

## Claims

1. A method for producing a laminate, comprising:
a hard coat layer forming step (A1) of irradiating a resin layer, containing a urethane acrylate resin, that has been applied to at least one side of an acrylic-based resin film, with an active energy ray to cure the resin layer containing the urethane acrylate resin thereby obtaining a hard coat layer; and
a low refractive index layer forming step (B1) of applying, an acrylate-based resin containing hollow fine silica particles having a particle size of less than 100 nm in an amount of not less than 40%, onto the hard coat layer obtained in the step (A1) and irradiating a resultant resin layer that contains the acrylate-based resin with an active energy ray to cure the resin layer that contains the acrylate-based resin,
wherein
the acrylic-based resin film has a tensile breaking elongation of not less than 170% at 120°C, and
the laminate has a crack elongation of not less than 80% at 120°C.

2. The method according to claim 1, wherein:
the acrylic-based resin film is obtained by molding an acrylic resin composition that contains a thermoplastic acrylic polymer and polymer particles containing a crosslinked elastomer; and
the thermoplastic acrylic polymer is constituted by 50% by mass to 100% by mass of a methyl methacrylate unit and 0% by mass to 50% by mass of another structural unit, and a total amount of the methyl methacrylate unit and said another structural unit in the thermoplastic acrylic polymer is 100% by mass.

3. The method according to claim 2, wherein:
the crosslinked elastomer contains not less than 50% by mass of an acrylic ester unit in 100% by mass of the crosslinked elastomer; and
the polymer particles are graft copolymer particles containing the crosslinked elastomer and a graft polymer layer located closer to a surface layer than the crosslinked elastomer.

4. The method according to any one of claims 1 through 3, wherein
the resin layer containing the urethane acrylate resin further contains particles.

5. The method according to claim 4, wherein
the particles are inorganic oxide particles and/or crosslinked organic resin particles.

6. The method according to claim 4 or 5, wherein
the particles are at least one selected from the group consisting of silica, alumina, zirconia, a crosslinked silicone resin, a crosslinked acrylic resin, and a crosslinked aromatic vinyl resin.

7. The method according to any one of claims 4 through 6, wherein
at least a part of the particles contains, on a surface thereof, a reactive functional group that has reactivity with the urethane acrylate resin.

8. The method according to any one of claims 4 through 7, wherein:
the particles are contained in an amount of 2.0% by weight to 5.0% by weight with respect to the hard coat layer that has been cured;
d ≤ r is satisfied, where r (µm) is an average dispersed particle size of the particles, and d (µm) is a thickness of the hard coat layer;
the laminate has a pencil hardness of not less than H, a haze of not less than 3%, and a crack elongation of not less than 170% at 120°C; and
a laminated film obtained by laminating a resin layer not containing the particles on the acrylic-based resin film has a crack elongation of not less than 80% at 120°C.

9. The method according to any one of claims 1 through 8, wherein
wherein a cumulative light amount in an irradiation with the active energy ray in the step (A1) is 150 mJ/cm² to 500 mJ/cm².

10. The method according to any one of claims 1 through 9, further comprising:
an additional step (B1') of preparing the acrylate-based resin that contains the hollow fine silica particles having a particle size of less than 100 nm in an amount of not less than 40% by adding solvent to the acrylate-based resin which is a material for a low refractive index layer before the step (B1), wherein
the solvent contains one or more types of solvents, and a solvent having a highest boiling point among the one or more types of solvents has a boiling point of 115°C to 180°C.

11. The method according to any one of claims 1 through 10, wherein
in a laminated film obtained by laminating the low refractive index layer on the acrylic-based resin film, a Δhaze after 20% stretching at 120°C is not more than 30%.

12. A method for producing a laminate, comprising:
a hard coat layer forming step (A1) of irradiating a resin layer, containing urethane acrylate resin, that has been applied to at least one side of an acrylic-based resin film, with an active energy ray to cure the resin layer containing the urethane acrylate resin thereby obtaining a hard coat layer;
wherein
the acrylic-based resin film has a tensile breaking elongation of not less than 170% at 120°C, and the hard coat layer contains the urethane acrylate resin, and
the laminate has a crack elongation of not less than 80% at 120°C.

13. The method according to claim 12, wherein
in the laminate, a Δhaze is less than 8.0% when a stretching ratio is 80% at 120°C.

14. The method according to claim 12 or 13, wherein:
the acrylic-based resin film is obtained by molding an acrylic resin composition that contains a thermoplastic acrylic polymer and polymer particles containing a crosslinked elastomer; and
the thermoplastic acrylic polymer is constituted by 50% by mass to 100% by mass of a methyl methacrylate unit and 0% by mass to 50% by mass of another structural unit, and a total amount of the methyl methacrylate unit and said another structural unit in the thermoplastic acrylic polymer is 100% by mass.

15. The method according to claim 14, wherein:
the crosslinked elastomer contains not less than 50% by mass of an acrylic ester unit in 100% by mass of the crosslinked elastomer; and
the polymer particles are graft copolymer particles containing the crosslinked elastomer and a graft polymer layer which is located closer to a surface layer than the crosslinked elastomer.

16. A laminate comprising:
an acrylic-based resin film; and
a hard coat layer that is laminated on at least one side of the acrylic-based resin film,
wherein
the acrylic-based resin film has a tensile breaking elongation of not less than 170% at 120°C,
the hard coat layer contains a urethane acrylate resin, and
the laminate has a pencil hardness of not less than H, and a crack elongation of not less than 80% at 120°C.

17. The laminate according to claim 16, wherein
the hard coat layer further contains particles.

18. The laminate according to claim 17, wherein
the particles are inorganic oxide particles and/or crosslinked organic resin particles.

19. The laminate according to claim 17 or 18, wherein
the particles are at least one selected from the group consisting of silica, alumina, zirconia, a crosslinked silicone resin, a crosslinked acrylic resin, and a crosslinked aromatic vinyl resin.

20. The laminate according to any one of claims 17 through 19, wherein
at least a part of the particles contains, on a surface thereof, a reactive functional group that has reactivity with the urethane acrylate resin.

21. The laminate according to any one of claims 16 through 20, further comprising a low refractive index layer on the hard coat layer, wherein
the low refractive index layer contains an acrylate-based resin that contains hollow fine silica particles having a particle size of less than 100 nm in an amount of not less than 40%.

22. The laminate according to claim 21, wherein
the laminate has a luminous reflectance of not more than 2.0%.

23. The laminate according to claim 21 or 22, wherein
an in-plane phase difference (Re) is not more than 10 nm, and an absolute value of a thickness-direction phase difference (Rth) is not more than 30 nm.

24. The laminate according to any one of claims 16 through 23, wherein
a Δhaze is less than 8.0% when a stretching ratio at 120°C is 80%.

25. The laminate according to any one of claims 16 through 24, wherein
a Δhaze is not more than 3.0% when a stretching ratio at 120°C is 80%.

26. The laminate according to any one of claims 21 through 25, wherein
when a stretching ratio is 80% at 120°C, a microcrack width in a direction parallel to tensile stress of the low refractive index layer is not more than 2.0 µm.

27. The laminate according to any one of claims 21 through 26, wherein
when a stretching ratio is 80% at 120°C, a depth of a groove of a microcrack from a low refractive index layer-side surface of the laminate at a microcrack part in a direction parallel to tensile stress of the low refractive index layer is not more than 1.0 µm.

28. A molded product comprising the laminate according to any one of claims 16 through 27.

29. The molded product according to claim 28, wherein
the molded product is obtained by laminating the laminate according to any one of claims 16 through 27 on at least part of a surface of a molded product which at least partially has a nonplanar shape.

30. A method for producing a laminate, comprising:
a hard coat layer forming step (A2) of irradiating a resin layer, containing a urethane acrylate resin and particles, that has been applied to at least one side of an acrylic-based resin film with an active energy ray to cure the resin layer containing the urethane acrylate resin and the particles, thereby obtaining a hard coat layer;
wherein
the acrylic-based resin film has a tensile breaking elongation of not less than 170% at 120°C,
the particles are contained in an amount of 2.0% by weight to 5.0% by weight with respect to the hard coat layer that has been cured,
d ≤ r is satisfied, where r (µm) is an average dispersed particle size of the particles, and d (µm) is a thickness of the hard coat layer,
the laminate has a pencil hardness of not less than H, a haze of not less than 3%, and a crack elongation of not less than 170% at 120°C, and
a laminated film obtained by laminating, on the acrylic-based resin film, a resin layer not containing the particles has a crack elongation of not less than 80% at 120°C.

31. The method according to claim 30, wherein
in the laminate, a Δhaze is less than 8.0% when a stretching ratio at 120°C is 80%.

32. A laminate comprising:
an acrylic-based resin film; and
a hard coat layer that is laminated on at least one side of the acrylic-based resin film, wherein
the acrylic-based resin film has a tensile breaking elongation of not less than 170% at 120°C,
the hard coat layer contains a urethane acrylate resin and particles,
d ≤ r is satisfied, where r (µm) is an average dispersed particle size of the particles, and d (µm) is a thickness of the hard coat layer,
the laminate has a pencil hardness of not less than H and a haze of not less than 3%, and
a laminated film obtained by laminating, on the acrylic-based resin film, a resin layer not containing the particles has a crack elongation of not less than 80% at 120°C.

33. The laminate according to claim 32, wherein
in the laminate, a Δhaze is less than 8.0% when a stretching ratio is 80% at 120°C.
